(19) Europäisches Patentamt European Patent Office Office européen des brevets

(11) **EP 4 488 828 A1**

(12) **EUROPEAN PATENT APPLICATION**

(43) Date of publication:
**08.01.2025 Bulletin 2025/02**

(21) Application number: **24171281.9**

(22) Date of filing: **19.04.2024**

(51) International Patent Classification (IPC):
**G06F 9/30** $^{(2018.01)}$

(52) Cooperative Patent Classification (CPC):
**G06F 9/3001; G06F 9/30036**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **01.07.2023 US 202318217545**

(71) Applicant: **INTEL Corporation
Santa Clara, CA 95054 (US)**

(72) Inventor: **Ghosh, Santosh
Hillsboro (US)**

(74) Representative: **Samson & Partner Patentanwälte
mbB
Widenmayerstraße 6
80538 München (DE)**

(54) **KECCAK ROUND INSTRUCTION AND SUPPORT**

(57) Techniques for Keccak permutation are described. In some examples, Keccak permutation is in response to a single instruction that includes one or more fields for source addressing information wherein the addressed source is to store an input 1600-bit state, one or more fields for destination addressing information that is to store an output 1600-bit state, a field for an identifier of a destination operand, and a field for an opcode, the opcode to indicate execution circuitry is to do perform an atomic Keccak permutation.

ROUND = 0 101

Θ (THETA) STEP 103

ρ (RHO) STEP 105

π (PI) STEP 107

χ (CHI) STEP 109

ι (IOTA) STEP 111

ROUND == 12 + 2L 113 → ROUND = ROUND + 1

OUTPUT AN OUTPUT STATE 115

FIG. 1

**Description**

BACKGROUND

Cryptographic hashes are one of the most essential operations for providing data integrity and authentication and are used in a variety of platforms. The Secure Hash Algorithm 3 (SHA3) is a relatively new National Institute of Standards and Technology (NIST) standard cryptographic hash operation and is becoming an increasingly popular hash algorithm for computing a digest of a large image/data for classical signature schemes (e.g., Elliptic Curve Digital Signature Algorithm (ECDSA) and Rivest-Shamir-Adleman (RSA) schemes), post-quantum signature schemes (e.g., Hash Based Signatures), and certain SHA3-derived functions (e.g., KECCAK Message Authentication Code (KMAC), customizable Secure Hash Algorithm and KECCAK (cSHAKE), TupleHash, and ParallelHash). SHA3 supports large input block size and provides same security guaranty in a fewer number of rounds, specifically supporting a 1088-bit block size and 24 rounds compared to the 512-bit block size and 64 rounds provided by SHA2. However, software implementations of SHA3 may be slower than software implementations of SHA2. Further, the SHA3 permutation is based on bit-shifts, bit-rotations and Boolean operations performed on a 1600-bit state variable, and existing architectures may be inefficient in performing independent bit operations on a large variable (e.g., 1600-bit).

BRIEF DESCRIPTION OF DRAWINGS

Various examples in accordance with the present disclosure will be described with reference to the drawings, in which:

FIG. 1 illustrates examples of steps for a round of Keccak processing.

FIG. 2 illustrates examples of a Keccak state array.

FIG. 3 illustrates examples of an architecture for the θ-step (theta step).

FIG. 4 illustrates examples of the p-step (rho step) and π-step (pi step) being done together.

FIG. 5 illustrates examples of a linear-feedback shift register round counter.

FIG. 6 illustrates examples of a combined χ-step (chi step) and a ɩ-step (iota step).

FIG. 7 illustrates examples of computing hardware to process a Keccak instruction.

FIG. 8 illustrates examples of execution circuitry for Keccak instruction processing.

FIG. 9 illustrates examples of sequential Keccak1600 rounds.

FIG. 10 illustrates examples of a Keccak1600 round datapath.

FIG. 11 illustrates an example method performed by a processor to process a Keccak instruction.

FIG. 12 illustrates an example computing system.

FIG. 13 illustrates a block diagram of an example processor and/or System on a Chip (SoC) that may have one or more cores and an integrated memory controller.

FIG. 14 is a block diagram illustrating a computing system 1400 configured to implement one or more aspects of the examples described herein.

FIG. 15A illustrates examples of a parallel processor.

FIG. 15B illustrates examples of a block diagram of a partition unit.

FIG. 15C illustrates examples of a block diagram of a processing cluster within a parallel processing unit.

FIG. 15D illustrates examples of a graphics multiprocessor in which the graphics multiprocessor couples with the pipeline manager of the processing cluster.

FIGS. 16A-16C illustrate additional graphics multiprocessors, according to examples.

FIG. 17 shows a parallel compute system 1700, according to some examples.

FIGS. 18A-18B illustrate a hybrid logical/physical view of a disaggregated parallel processor, according to examples described herein.

FIG. 19(A) is a block diagram illustrating both an example in-order pipeline and an example register renaming, out-of-order issue/execution pipeline according to examples.

FIG. 19(B) is a block diagram illustrating both an example in-order architecture core and an example register renaming, out-of-order issue/execution architecture core to be included in a processor according to examples.

FIG. 20 illustrates examples of execution unit(s) circuitry, such as execution unit(s) circuitry.

FIG. 21 is a block diagram of a register architecture according to some examples.

FIG. 22 illustrates examples of an instruction format.

FIG. 23 illustrates examples of an addressing information field.

FIG. 24 illustrates examples of a first prefix.

FIGS. 25(A)-(D) illustrate examples of how the R, X, and B fields of the first prefix are used.

FIGS. 26(A)-(B) illustrate examples of a second prefix.

FIG. 27 illustrates examples of a third prefix.

FIGS. 28A-28B illustrate thread execution logic including an array of processing elements employed in a graphics processor core according to examples described herein.

FIG. 29 illustrates an additional execution unit, according to an example.

FIG. 30 is a block diagram illustrating a graphics processor instruction formats 3000 according to some examples.

FIG. 31 is a block diagram of another example of a graphics processor.

FIG. 32A is a block diagram illustrating a graphics processor command format according to some examples.

FIG. 32B is a block diagram illustrating a graphics processor command sequence according to an example.

FIG. 33 is a block diagram illustrating the use of a software instruction converter to convert binary instructions in a source ISA to binary instructions in a target ISA according to examples.

FIG. 34 is a block diagram illustrating an IP core development system 3400 that may be used to manufacture an integrated circuit to perform operations according to some examples.

DETAILED DESCRIPTION

The present disclosure relates to methods, apparatus, systems, and non-transitory computer-readable storage media for improved Keccak processing.

All current secure communications protocols (such as Transport Layer Security (TLS), Internet Key Exchange (IKE), Quick UDP Internet Connections (QUICK), Internet Protocol Security (IPsec), etc. will need to be upgraded to with post-quantum cryptography (PQC) to protect against quantum attacks. Unfortunately, this upgrade comes with a significant overhead. For example, 18%-91% lesser connections per second.

Candidates for PQC are skewed toward compute intensive SHA3/Keccak functions. For example, Kyber and Dilithium spend upward of 50% of their computation on Keccak. Moreover, for embedded cores, SHA3 execution is latency intensive due to its large state size which makes the deployment of the PQC schemes even harder. Some existing approaches to accelerating SH3 are to use several instructions (e.g., in some ARM cores using BCAX, EOR3, RAX1, and XAR) which result more than 1,000 cycles of latency for a 24-round Keccak1600 execution.

Using traditional instructions are also limiting because of the limitations on the number of input/output operands and their sizes for execution units/datapaths (e.g., 3 inputs and 1 output up to 256-bit in some architectures, 4 inputs and 1 output up to 128-bit other architectures, etc.). As such, the processing of a 1600-bit Keccak state can result in hundreds if not thousands of instructions execution to do the full 24 rounds in traditional cores.

Detailed herein are examples for improved Keccak hardware execution. In some examples, the execution datapath for a Keccak instruction has a 1600-bit input and a 1600-bit output. This is a significant improvement to operating on 128-bit, 256-bit, 512-bit, etc. chunks. In some examples, a single instruction is used to execute 24-rounds atomically instead of the thousands of instructions required in traditional cores. Having to execute only one instruction compared to scores of instructions allows for feasible post-quantum encryption in technical areas such as secure TLS, etc. Without such an improvement internet traffic may ground to a halt in the post-quantum era. Further latency reduction can be achieved by integrating multiple rounds datapath per cycle.

In some examples, a processor or core's registers (e.g., general purpose registers (GPRs), vector registers, etc.) are used to store the entire 1600-bit state prior to and/or after the Keccak instruction execution. This reduces overhead by not requiring a dedicated memory for the state.

In some examples, the single instruction includes source addressing information for the input state and destination addressing information for the output state. In some examples, The processing of the instruction causes a load from a source memory address to the registers and a storage of the results from the register to a destination memory address. In some examples, the source addressing information is for a plurality of registers. For example, a plurality of registers are identified or a first register is identified and In some examples, the destination addressing information is for a plurality of registers.

In some examples, the loading to the registers and storing from the registers is done with existing load/store instructions. For example, four loads may be used to load a state into four 512-bit registers that are to store the state and four stores may be used to write state to memory.

In some examples, when there is one more message block, software can load the message into a different set of wide registers and execute wide XOR operations with message and the last output Keccak state to compute the next input state. Then software can execute the next Keccak instruction. At the end of all messages block the software can store the final state/digest into the desired destination address using wide store instructions.

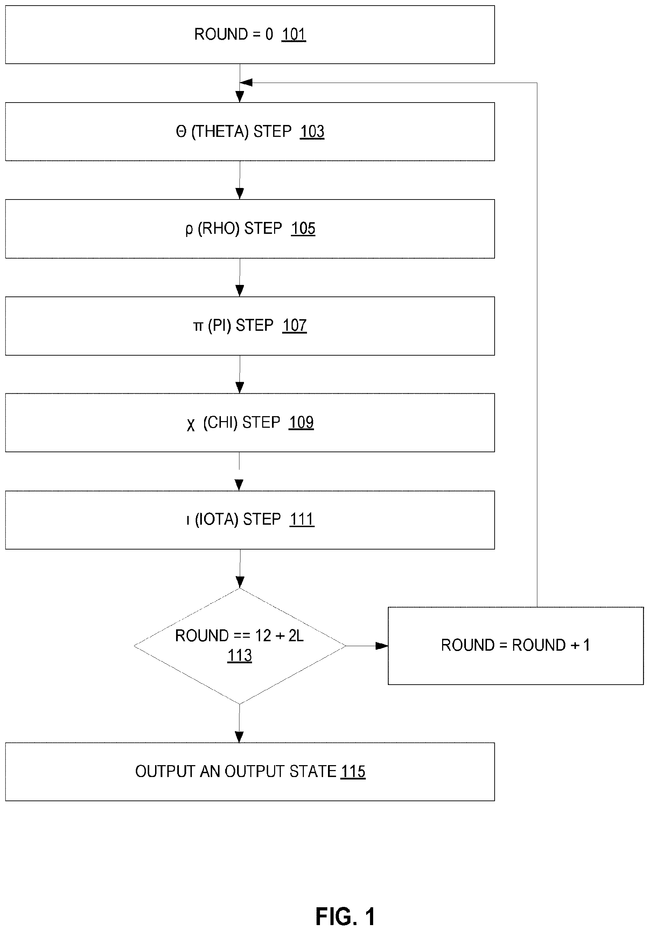

Prior to detailing improvements to Keccak processing aspects of examples for Keccak processing are provided. FIG. 1 illustrates examples of steps for a round of Keccak processing. A block transformation f (in SHA-3 it is Keccak-f [1600]) is a permutation that uses XOR, AND, and NOT logical operations. Note that the gates themselves may be made from NAND, NOR, and/or NAND/NOR gates. Keccak is defined for a power of 2 word (w) size where $w = 2^l$ bits. In some SHA-3 approaches 64-bit words are used ($l = 6$).

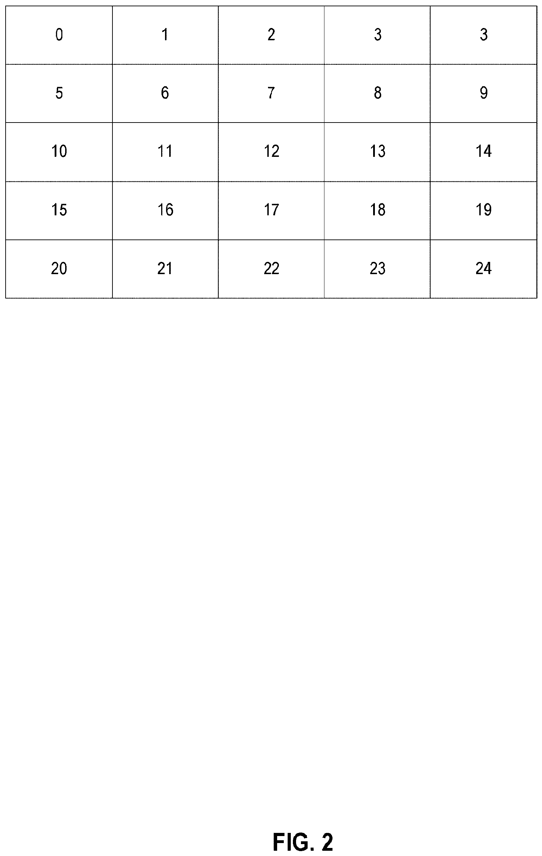

A state for Keccak can be viewed as a 5 x 5 x w array of bits. FIG. 2 illustrates examples of a Keccak state array. This 2D state for Keccak can be represented as x=0..4 and y=0..4 and for internal memory representation the 2D state is converted to 1D index i = 5y+x.

Index arithmetic in Keccak is performed modulo 5 for the first two dimensions of the state and modulo w for the third dimension. A permutation of Keccak processing consists of 12 + 2$l$ rounds of five steps.

Note that this illustration can be used for an initial round (e.g., when round = 1 101) and subsequent rounds (e.g., when round > 0).

The θ-step (theta step) 103 modifies an input state variable A as follows:

$$C[x] = A[x, 0] \oplus A[x, 1] \oplus A[x, 2] \oplus A[x, 3] \oplus A[x, 4], \forall x \text{ in } 0 \dots 4 \qquad (1)$$

$$D[x] = C[x - 1] \oplus \text{ROT}(C[x + 1], 1), \forall x \text{ in } 0 \dots 4 \qquad (2)$$

$$A[x, y] = A[x, y] \oplus D[x], \forall (x, y) \text{ in } (0 \dots 4, 0 \dots 4). \qquad (3)$$

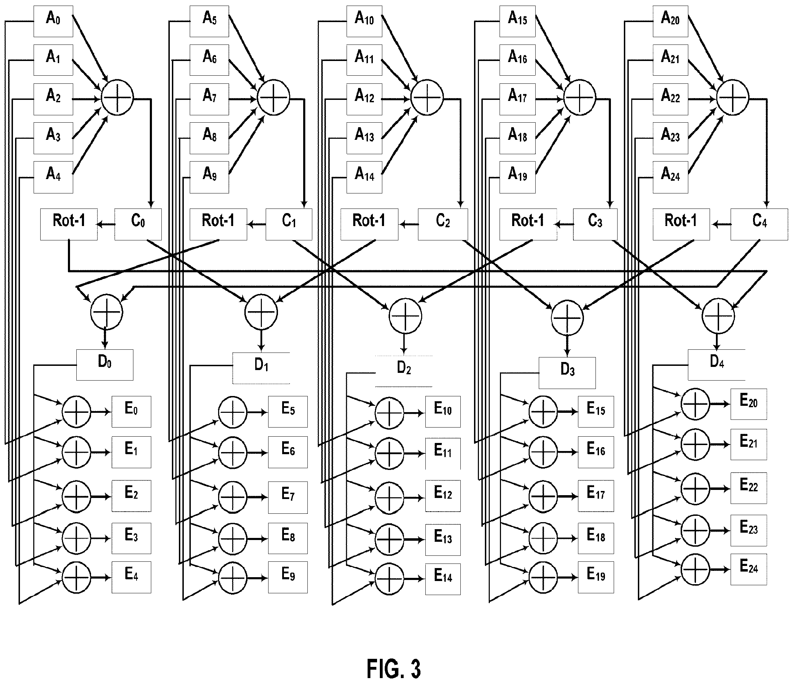

FIG. 3 illustrates examples of an architecture for the θ-step (theta step). In the example shown, each block shown is 64-bits long. The A blocks each are subsets of a 1600-bit input state variable. A[i, j] maps to A[5*i+j] and the variable E is used to a represent modified state A as defined in equation (3) above. In some examples, the architecture is implemented with five-input XOR gates and two-input XOR gates. Further in some embodiments, bit rotation (Rot-1, i.e., a rotation by 1-bit) is implemented by rewiring that does not require any logic gates.

The example architecture performs a first bitwise XOR operation on respective sets of input blocks (e.g., A0, A1, A2, A3, A4) to generate an intermediate output block (e.g., C0). A second bitwise XOR operation is performed on each first intermediate block (e.g., C0) and a rotated, other first intermediate block (e.g., C2 rotated by 1-bit) to yield a second intermediate block (e.g., D1). In the example shown, the first intermediate blocks operated on by the second bitwise XOR operations are two indices away from one another and are each one index away from the resulting second intermediate block (e.g., the XOR operation performed on C0 and rotated C2 produces D1). A third bitwise XOR operation is performed on a second intermediate block (e.g., D1) and an input block (e.g., A5) to generate a third intermediate block (e.g., E5). In the example shown, the index of the input block operated on by the third bitwise XOR operation matches the index of the third intermediate block produced by the third bitwise XOR operation (e.g., A5 is an input to the XOR operation that yields E5). Note that in some examples $E[x,y] = A[x,y] = A[x,y] \text{ XOR } D[x]$

A p-step (rho step) 105 performs a bitwise rotation of most of the "E" values generated in the θ-step (theta step) 103 by an offset. Note that $E_0$ is not rotated. In some examples, the ρ-step (rho step) 105 is defined by $A[x,y] = ROT(A[x,y], r[x,y])$ where $r[x,y]$ are the rotation offsets. In this definition, $A[x,y]$ is "E".

A π-step (pi step) 107 is another rotation step. In some examples, this step is defined by

$$B[y, 2x + 3y] = ROT(A[x,y]).$$

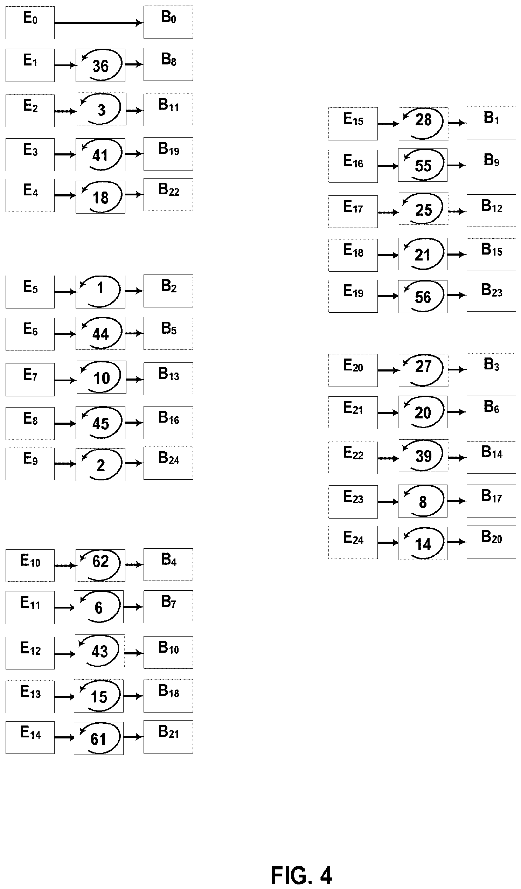

FIG. 4 illustrates examples of the p-step (rho step) 105 and π-step (pi step) 107 being done together. This is defined as

$$B[y, 2x + 3y] = ROT(A[x,y], r[x,y]), \forall (x,y) \text{ in } (0 \ldots 4, 0 \ldots 4). \quad (4)$$

In some examples, this is performed by rewiring only without the use of gates. The rotation numbers in the figure are directly applicable to a full-length Keccak1600 permutation. However, for the variable lane size $w$, these numbers are taken after modulo division by w. For example, rotation amount for $E_1 \rightarrow B_8$ will be $36\%16 = 4$, where $w = 16$ (Keccak400). In a flexible design that supports various values for w, these rotation offsets are stored in memory elements and fetched during the execution of rotations.

The χ-step (chi step) 109 consists of nonlinear operations. In some examples, these operations perform an affine mapping. In some examples, the -step (chi step) 109 is defined by:

$$A[x,y] = B[x,y] \oplus \left( (\neg B[x+1, y]) \& B[x+2, y] \right), \forall (x,y) \text{ in } (0 \ldots 4, 0 \ldots 4) \quad (5)$$

The t-step (iota step) 111 may be computed by following equation:

$$A[0,0] = A[0,0] \oplus RC \quad (5)$$

In the t-step 111, a w-bit variable called round constant (*RC*) is XORed to first w bits of the χ-step output. The SHA-3 authors have provided the values of this variable for each round. In some examples, the following set of new Boolean equations to derive *RC* values on the fly.

$$nr_0 = \sim r_0; \ nr_1 = \sim r_1; \ nr_2 = \sim r_2; \ nr_3 = \sim r_3; \ nr_4 = \sim r_4;$$

$$RC_0 = (nr_4 \& (nr_3 \mid (nr_1 \& nr_0) \mid (r_2 \& nr_1))) \mid (r_4 \& ((r_3 \& r_1) \mid (nr_3 \& r_0)));$$

$$RC_1 = nr_1 \& nr_0 \mid (nr_4 \& (((r_1 \& r_0) \& (nr_3 \mid nr_2)) \mid (nr_3 \& nr_2 \& nr_1))) \mid (r_4 \& ((r_3 \& r_2 \& nr_1) \mid (nr_3 \& r_1 \& nr_0)));$$

$$RC_3 = (nr_1 \& nr_0) \mid (nr_4 \& ((r_2 \& r_0) \mid (nr_2 \& r_1))) \mid (r_4 \& nr_3 \& r_2 \& nr_0);$$

$$RC_7 = (NR_4 \& ((nr_1 \& nr_0) \mid (nr_3 \& r_1) \mid (r_3 \& nr_2 \& (nr_1 \mid nr_0)))) \mid (r_4 \& ((r_2 \& nr_1) \mid (r_3 \& nr_2) \mid (nr_3 \& r_1 \& r_0)));$$

$$RC_{15} = (nr_4 \ \& \ ((r_3 \ \& \ ((nr_1 \ \& \ nr_0) \mid r_2)) \mid (nr_3 \ \& \ (r_1 \mid r_0)))) \mid (r_4 \ \& \ ((r_3 \ \& \ nr_2) \mid (r_3 \ ^\wedge \ r_1)));$$

$RC_{31} = (nr_4 \ \& \ ((nr_2 \ \& \ nr_1 \ \& \ nr_0) \mid (nr_3 \ \& \ r_2 \ \& \ nr_1 \ \& \ r_0) \mid r_3 \ \& \ ((r_2 \ \& \ r_1) \mid (r_1 \ \& \ r_0))))) \mid (r_4 \ \& \ ((nr_3 \ \& \ nr_2 \ \& \ nr_1) \mid (r_1 \ \& \ (r_3 \ ^\wedge \ r_0))));$

$RC_{63} = (nr_4 \ \& \ ((r_3 \ \& \ (r_0 \mid r_2)) \mid (nr_3 \ \& \ nr_2) \mid (r_2 \ \& \ nr_1 \ \& \ nr_0))) \mid (r_4 \ \& \ ((r_3 \ \& \ (nr_2 \mid (nr_1 \ \& \ nr_0))) \mid (nr_3 \ \& \ r_1 \ \& \ r_0) \mid (nr_2 \ \& \ r_1 \ \& \ nr_0)));$

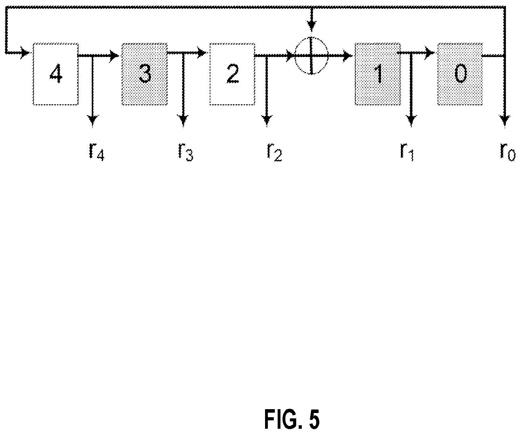

In some examples, $r_i$, $0 \le i \le 4$ are 5-bit output of a linear-feedback shift register (LFSR) round counter. FIG. 5 illustrates examples of a linear-feedback shift register round counter. As shown, the LFSR counter is implemented with primitive polynomial $X^5 + X^2 + 1$ and initial state 11111 to represent a first round. The state at every clock represents the corresponding incremental rounds. The execution stops at round 24. Using a LFSR offers significant savings compared to a lookup table approach.

In some examples, the $\chi$-step (chi step) 109 and the $\iota$-step (iota step) 111 are combined.

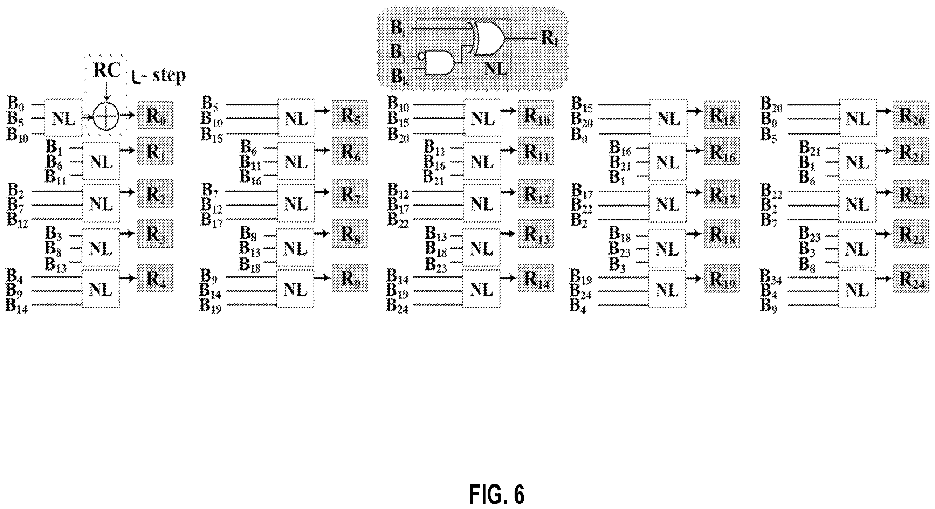

FIG. 6 illustrates examples of a combined $\chi$-step (chi step) and a $\iota$-step (iota step). The nonlinear (NL) function is implemented as shown in the nonlinear block. The $w$-bit XOR array is there to execute the $\iota$-step. In total, this combination uses $25w$ NOT, 25w two-input AND, and $25w$ two-input XOR gates.

The output of the $\iota$-step (iota step) 111 is either provided as the input to the next round (if it is determined at 113 that 24 rounds have not yet completed) or output as an output state variable of the operation at 115 (if it is determined at 113 that 24 rounds have completed).

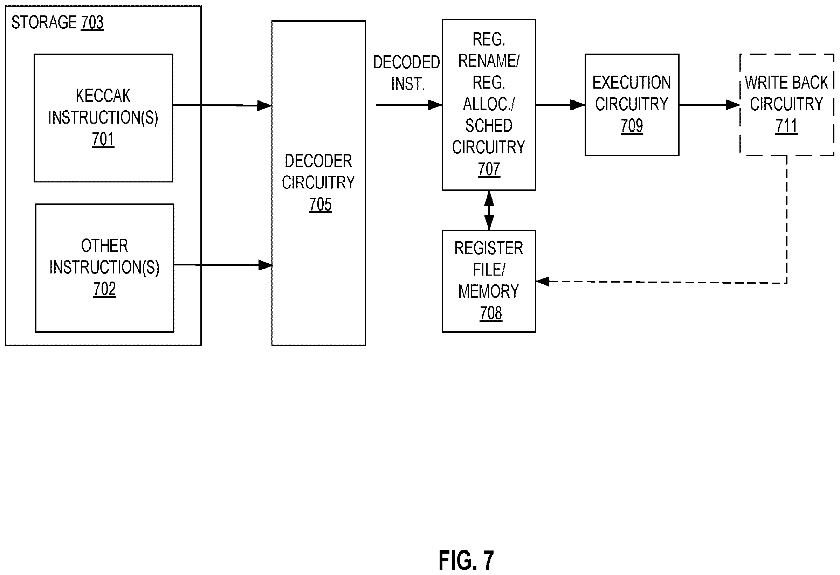

FIG. 7 illustrates examples of computing hardware to process a Keccak instruction. As illustrated, storage 703 stores one or more Keccak instructions 701 to be executed and/or one or more other instructions 702 to be executed. Note that Keccak is generally one step in a SHA3 (e.g., part of absorbing an input into a state for each block). Note that the internal state size of Keccak is 1600 and block sizes can be 1152-bit (SHA3-224), 1088-bit (SHA3-256 or SHAKE256), 832-bit (SHA3-384), 576-bit (SHA3-512), 1344-bit (SHAKE128), etc.

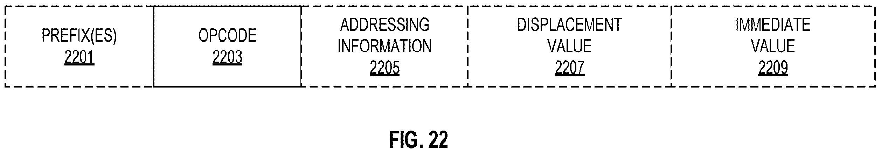

An instruction from the storage is received by decoder circuitry 705. For example, the decoder circuitry 705 receives this instruction from fetch circuitry (not shown). The instruction may be in any suitable format, such as that described with reference to FIG. 22 below. In an example, the instruction includes fields for an opcode, one or more source identifiers, and a one or more destinations identifier. In some examples, for the Keccak instruction the sources and destinations are registers, and in other examples one or more are memory locations. Note that the opcode indicates that a Keccak permutation is to be performed. In some examples, the opcode indicates the size of registers to use. In some examples, an immediate or other operand indicates the size of registers to use.

More detailed examples of at least one instruction format for the instruction will be detailed later. The decoder circuitry 705 decodes the instruction into one or more operations. In some examples, this decoding includes generating a plurality of micro-operations to be performed by execution circuitry (such as execution circuitry 709). The decoder circuitry 705 also decodes instruction prefixes.

In some examples, register renaming, register allocation, and/or scheduling circuitry 707 provides functionality for one or more of: 1) renaming logical operand values to physical operand values (e.g., a register alias table in some examples), 2) allocating status bits and flags to the decoded instruction, and 3) scheduling the decoded instruction for execution by execution circuitry out of an instruction pool (e.g., using a reservation station in some examples).

Registers (register file) and/or memory 708 store data as operands of the instruction to be operated by execution circuitry 709. Example register types include packed data registers, general purpose registers (GPRs), and floating-point registers.

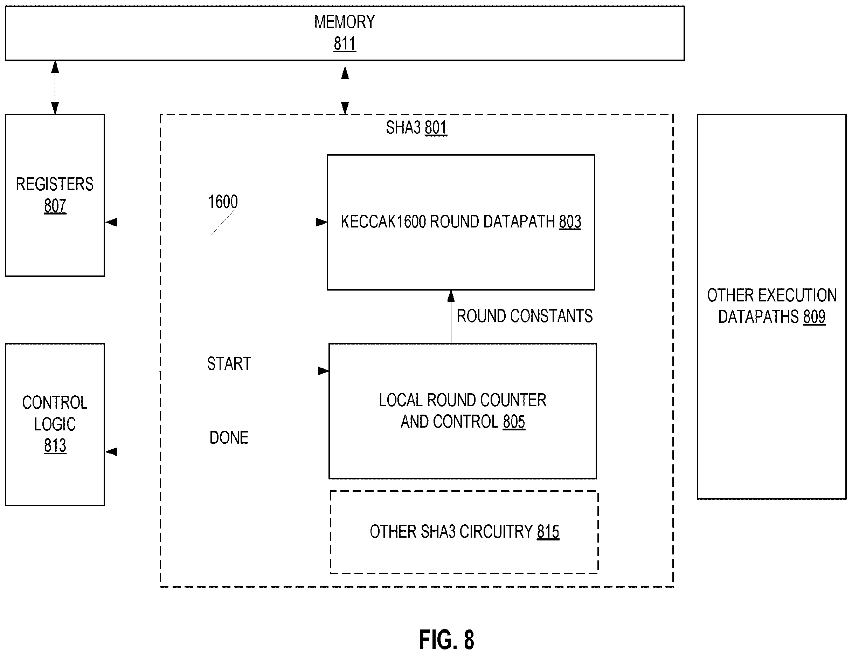

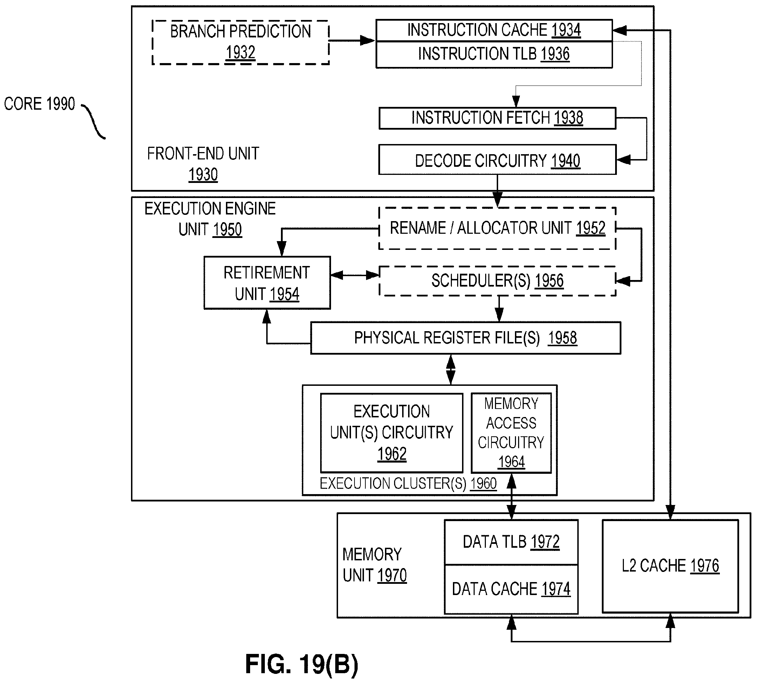

Execution circuitry 709 executes the decoded instruction. Example detailed execution circuitry includes SHA3 execution circuitry 801 shown in FIG. 8, and execution cluster(s) 1960 shown in FIG. 19(B), etc. The execution of the decoded instruction causes the execution circuitry to perform a Keccak permutation. Note that the execution unit is shown as being inside of a core. In some examples, the SHA3 execution circuitry is a part of an accelerator.

In some examples, retirement/write back circuitry 711 architecturally commits the result into the registers or memory 708 and retires the instruction.

FIG. 8 illustrates examples of execution circuitry for Keccak instruction processing. In some examples, this execution circuitry is SHA3 execution circuitry 801. The SHA3 execution circuitry 801 may include non-Keccak circuitry (other SHA3 circuitry 815) to perform the other SHA3 acts. Other execution datapaths 809 outside of the SHA3 execution circuitry 801 may also be used to perform the other SHA3 acts and/or other instructions. Note that the other SHA3 acts are typically invoked by the execution of other instructions.

A Keccak1660 round datapath 803 computes an entire Keccak round on a 1600-bit Keccak state, provided by a plurality of registers 807 in parallel or serially, using a combinatorial logic unit circuit. In some examples, the output of the Keccak1660 round datapath 803 is stored in the registers 807 prior to another round. In some examples, to store the entire 1600-bit state inside of a processor core 25 64-bit GPRs are used (e.g., loaded using 25 regular load operations). In some examples, wider registers are used such as 128-bit, 256-bit, 512-bit, and/or 1024-bit wide registers that reduce read/write latency.

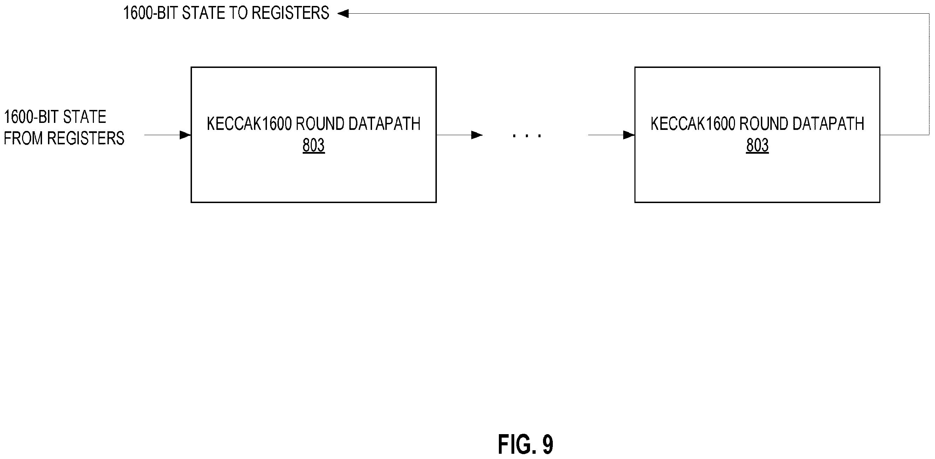

In some examples, an entire Keccak1600 permutation is computed with 24 iterations on the Keccak1660 round datapath 803 atomically. In some examples, more than 1 round (e.g., 2, 3, or 4 rounds) of sequential rounds using a Keccak1600 round datapath are performed without going to the registers 807 (FIG. 9 illustrates examples of sequential Keccak1600 rounds without storing). These sequential rounds are iterated for 12 (for 2 sequential rounds), 8, 6, etc. times atomically to computing the entire 24 rounds of a Keccak1600 permutation.

Each Keccak1600 round uses a different round constant. In some examples, round counter and control logic (e.g., circuitry) 805 inside the SHA3 circuitry 801 generates the round constants.

The round counter and control logic 805 also tracks the number of Keccak rounds. The round counter and control logic 805 generates a corresponding register update signal for the exact number of cycles the datapath 803 needs to iterate for the execution of the entire 24 rounds.

In some examples, the round counter and control logic 805 is initialized by a start pulse generated as part of the execution of a Keccak instruction.

After completion of all 24 rounds, the round counter and control logic 805 asserts a done signal which alerts control logic 813 of the processor that the new Keccak state is ready inside the respective registers.

In some examples, a single instruction is executed to perform the entire 24 rounds of a Keccak1600 permutation. In some embodiments, the instruction includes one or more address fields for a 1600-bit input and a 1600-bit output. The address fields may be to a plurality of registers, memory 811, or a combination thereof (e.g., read from registers and write to memory). When memory 811 is indicated as the source, the control logic 813 causes the input state from a specified memory location to be loaded in designated registers before the start indication is generated. When memory 811 is indicated as the destination, the control logic 813 causes the output state to be written from the registers 807 to memory 811.

In some examples, loads and stores of the input and output states happen outside the single Keccak instruction. As such, software will execute a set of load instructions to bring the input state from memory 811 to a set of registers then invoke the Keccak instruction.

After the Keccak instruction retires the resultant state is further used. For example, it may be XORed with the next message block and message hashing continued by invoking another Keccak instruction. Or other aspects of SHA3 may be performed.

An example of a format for a Keccak instruction is Keccak DST, SRC. In some examples, Keccak is the opcode mnemonic of the instruction that indicates a Keccak permutation is to occur. The opcode may be opcode 2203. DST is one or more fields for a location of destination such as a general-purpose register, a packed data register, or memory. SRC is one or more fields for a location of destination such as a general-purpose register, a packed data register, or memory. They may be provided by aspects of a prefix 2201 and/or addressing information 2205.

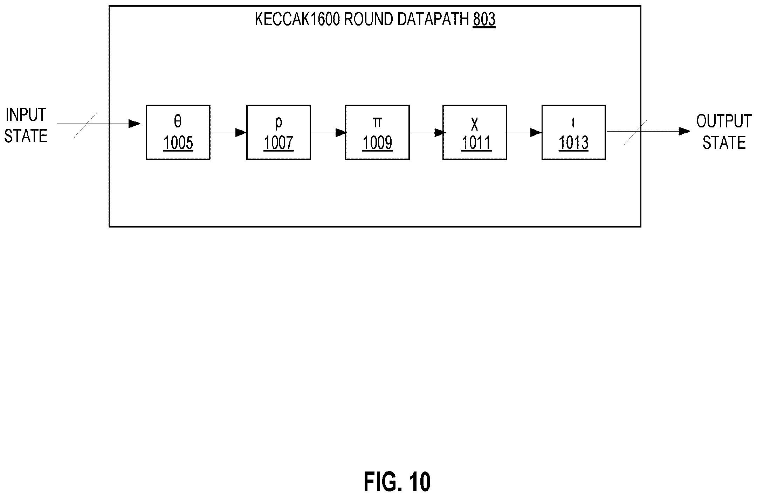

FIG. 10 illustrates examples of a Keccak1600 round datapath. While this is shown as combination logic blocks (circuitry), in some examples one or more aspects of the datapath are implemented in software or firmware. In some examples, this is Keccak1600 round datapath 803. The 1600-bit input state is provided to θ-step circuitry 1005. The output of the θ-step circuitry 1005 is provided to p-step circuitry 1007 and its output is provided to the pi- step circuitry 1009. The output from that is provided to the χ-step circuitry 1011. Finally, the iota-step circuitry 1013 is applied. The functionality of these circuits has been detailed above.

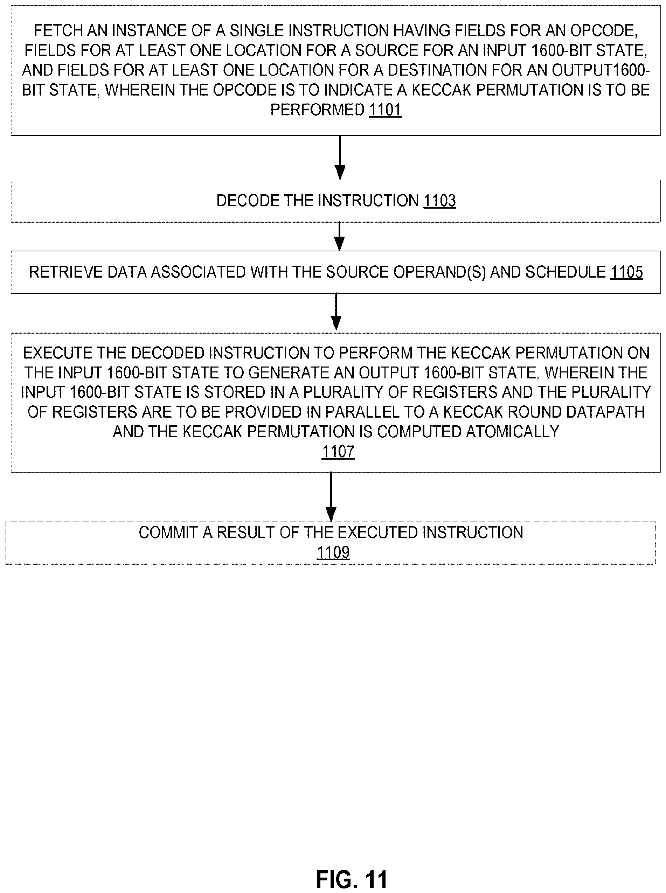

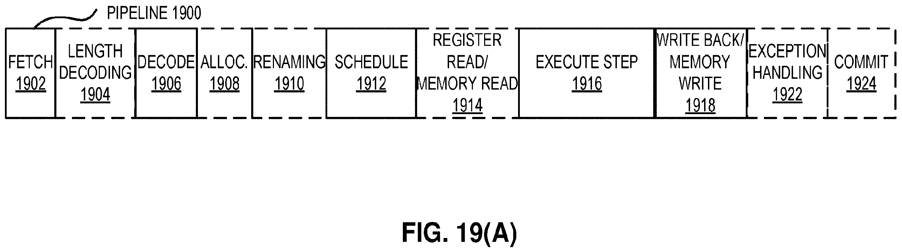

FIG. 11 illustrates an example method performed by a processor to process a Keccak instruction. For example, SHA3 execution circuitry 801, a processor core as shown in FIG. 19(B), a pipeline as detailed below, etc., performs this method.

At 1101, an instance of single instruction is fetched. The instance of a single instruction has fields for an opcode, fields for at least one location for a source for an input 1600-bit state, and fields for at least one location for a destination for an output1600-bit state, wherein the opcode is to indicate a Keccak permutation is to be performed.

The fetched instruction is decoded at 1103. For example, the fetched Keccak instruction is decoded by decoder circuitry such as decoder circuitry 705 or decode circuitry 1940 detailed herein.

Data values associated with the source operand(s) of the decoded instruction are retrieved when the decoded instruction is scheduled at 1105. For example, when the source is a memory location the data from the indicated memory location is retrieved and stored in a plurality of registers for execution.

At 1107, the decoded instruction is executed by execution circuitry (hardware) such as execution circuitry 801, execution circuitry 709 shown in FIG. 7, or execution cluster(s) 1960 shown in FIG. 19(B). For the Keccak instruction, the execution will cause execution circuitry to perform the Keccak permutation on the input 1600-bit state to generate an output 1600-bit state, wherein the input 1600-bit state is stored in a plurality of registers prior to execution and the Keccak permutation is computed atomically. In some examples, each Keccak round intermediate result is stored in registers before the next round starts. In some examples, a plurality of rounds are performed before the intermediate storage into the registers.

In some examples, the instruction is committed or retired at 1109.

Some examples utilize instruction formats described herein. Some examples are implemented in one or more computer architectures, cores, accelerators, etc. Some examples are generated or are IP cores. Some examples utilize emulation and/or translation.

Example Architectures

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

Example Systems

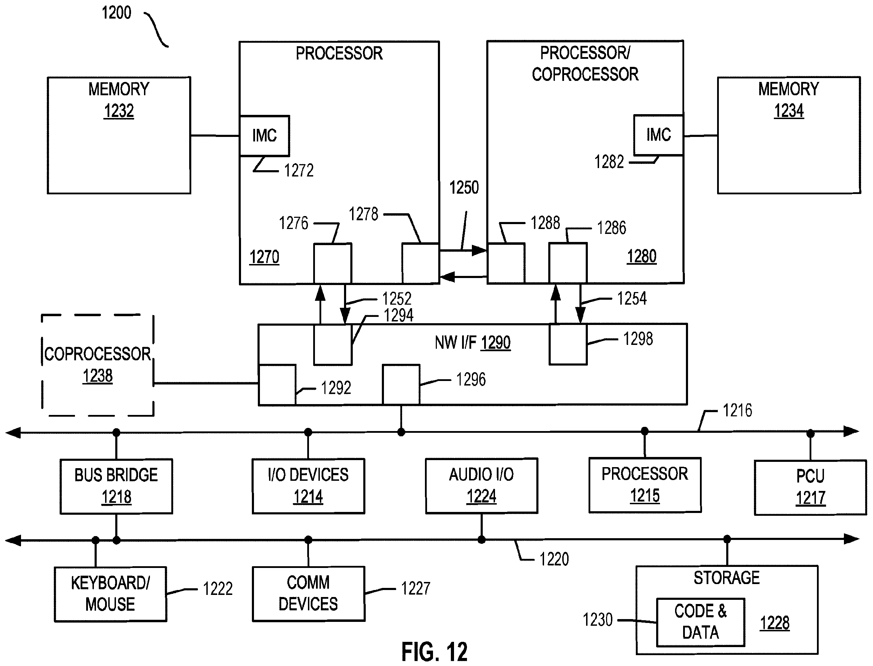

FIG. 12 illustrates an example computing system. Multiprocessor system 1200 is an interfaced system and includes a plurality of processors or cores including a first processor 1270 and a second processor 1280 coupled via an interface 1250 such as a point-to-point (P-P) interconnect, a fabric, and/or bus. In some examples, the first processor 1270 and the second processor 1280 are homogeneous. In some examples, first processor 1270 and the second processor 1280 are heterogenous. Though the example system 1200 is shown to have two processors, the system may have three or more processors, or may be a single processor system. In some examples, the computing system is a system on a chip (SoC).

Processors 1270 and 1280 are shown including integrated memory controller (IMC) circuitry 1272 and 1282, respectively. Processor 1270 also includes interface circuits 1276 and 1278; similarly, second processor 1280 includes interface circuits 1286 and 1288. Processors 1270, 1280 may exchange information via the interface 1250 using interface circuits 1278, 1288. IMCs 1272 and 1282 couple the processors 1270, 1280 to respective memories, namely a memory 1232 and a memory 1234, which may be portions of main memory locally attached to the respective processors.

Processors 1270, 1280 may each exchange information with a network interface (NW I/F) 1290 via individual interfaces 1252, 1254 using interface circuits 1276, 1294, 1286, 1298. The network interface 1290 (e.g., one or more of an interconnect, bus, and/or fabric, and in some examples is a chipset) may optionally exchange information with a coprocessor 1238 via an interface circuit 1292. In some examples, the coprocessor 1238 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 1270, 1280 or outside of both processors, yet connected with the processors via an interface such as P-P interconnect, such that either or both processors' local cache information may be stored in the shared cache if a processor is placed into a low power mode.

Network interface 1290 may be coupled to a first interface 1216 via interface circuit 1296. In some examples, first interface 1216 may be an interface such as a Peripheral Component Interconnect (PCI) interconnect, a PCI Express interconnect or another I/O interconnect. In some examples, first interface 1216 is coupled to a power control unit (PCU) 1217, which may include circuitry, software, and/or firmware to perform power management operations with regard to the processors 1270, 1280 and/or co-processor 1238. PCU 1217 provides control information to a voltage regulator (not shown) to cause the voltage regulator to generate the appropriate regulated voltage. PCU 1217 also provides control information to control the operating voltage generated. In various examples, PCU 1217 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 1217 is illustrated as being present as logic separate from the processor 1270 and/or processor 1280. In other cases, PCU 1217 may execute on a given one or more of cores (not shown) of processor 1270 or 1280. In some cases, PCU 1217 may be implemented as a microcontroller (dedicated or general-purpose) or other control logic configured to execute its own dedicated power management code, sometimes referred to as P-code. In yet other examples, power management operations to be performed by PCU 1217 may be implemented externally to a processor, such as by way of a separate power management integrated circuit (PMIC) or another component external to the processor. In yet other examples, power management operations to be performed by PCU 1217 may be implemented within BIOS or other system software.

Various I/O devices 1214 may be coupled to first interface 1216, along with a bus bridge 1218 which couples first interface 1216 to a second interface 1220. In some examples, one or more additional processor(s) 1215, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 1216. In some examples, second interface 1220 may be a low pin count (LPC) interface. Various devices may be coupled to second interface 1220 including, for example, a keyboard and/or mouse 1222, communication devices 1227 and storage circuitry 1228. Storage circuitry 1228 may be one or more non-transitory machine-readable storage media as described below, such as a disk drive or other mass storage device which may include instructions/code and data 1230 and may implement the storage 703 in some examples. Further, an audio I/O 1224 may be coupled to second interface 1220. Note that other architectures than the point-to-point architecture described above are possible. For example, instead of the point-to-point architecture, a system such as multiprocessor system 1200 may implement a multi-drop interface or other such architecture.

Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

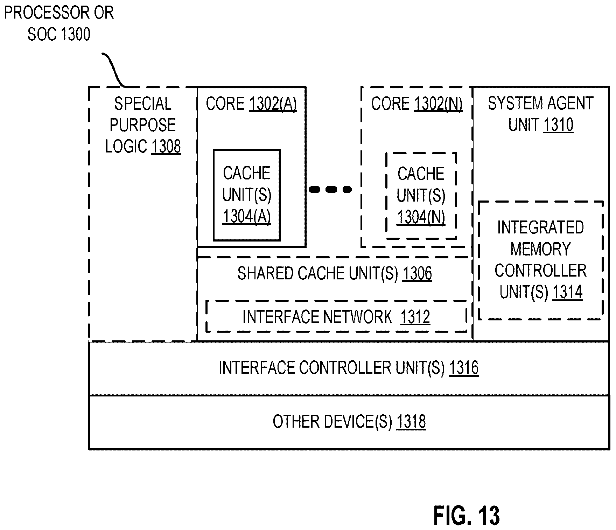

FIG. 13 illustrates a block diagram of an example processor and/or SoC 1300 that may have one or more cores and an integrated memory controller. The solid lined boxes illustrate a processor 1300 with a single core 1302(A), system agent unit circuitry 1310, and a set of one or more interface controller unit(s) circuitry 1316, while the optional addition of the dashed lined boxes illustrates an alternative processor 1300 with multiple cores 1302(A)-(N), a set of one or more integrated memory controller unit(s) circuitry 1314 in the system agent unit circuitry 1310, and special purpose logic 1308, as well as a set of one or more interface controller units circuitry 1316. Note that the processor 1300 may be one of the processors 1270 or 1280, or co-processor 1238 or 1215 of FIG. 12.

Thus, different implementations of the processor 1300 may include: 1) a CPU with the special purpose logic 1308 being integrated graphics and/or scientific (throughput) logic (which may include one or more cores, not shown), and the cores 1302(A)-(N) being one or more general purpose cores (e.g., general purpose in-order cores, general purpose out-of-order cores, or a combination of the two); 2) a coprocessor with the cores 1302(A)-(N) being a large number of special purpose cores intended primarily for graphics and/or scientific (throughput); and 3) a coprocessor with the cores 1302(A)-(N) being a large number of general purpose in-order cores. Thus, the processor 1300 may be a general-purpose processor, coprocessor or special-purpose processor, such as, for example, a network or communication processor, compression engine, graphics processor, GPGPU (general purpose graphics processing unit), a high throughput many integrated core (MIC) coprocessor (including 30 or more cores), embedded processor, or the like. The processor may be implemented on one or more chips. The processor 1300 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 1304(A)-(N) within the cores 1302(A)-(N), a set of one or more shared cache unit(s) circuitry 1306, and external memory (not shown) coupled to the set of integrated memory controller unit(s) circuitry 1314. The set of one or more shared cache unit(s) circuitry 1306 may include one or more mid-level caches, such as level 2 (L2), level 3 (L3), level 4 (L4), or other levels of cache, such as a last level cache (LLC), and/or combinations thereof. While in some examples interface network circuitry 1312 (e.g., a ring interconnect) interfaces the special purpose logic 1308 (e.g., integrated graphics logic), the set of shared cache unit(s) circuitry 1306, and the system agent unit circuitry 1310, alternative examples use any number of well-known techniques for interfacing such units. In some examples, coherency is maintained between one or more of the shared cache unit(s) circuitry 1306 and cores 1302(A)-(N). In some examples, interface controller units circuitry 1316 couple the cores 1302 to one or more other devices 1318 such as one or more I/O devices, storage, one or more communication devices (e.g., wireless networking, wired networking, etc.), etc.

In some examples, one or more of the cores 1302(A)-(N) are capable of multi-threading. The system agent unit circuitry 1310 includes those components coordinating and operating cores 1302(A)-(N). The system agent unit circuitry 1310 may include, for example, power control unit (PCU) circuitry and/or display unit circuitry (not shown). The PCU may be or may include logic and components needed for regulating the power state of the cores 1302(A)-(N) and/or the special purpose logic 1308 (e.g., integrated graphics logic). The display unit circuitry is for driving one or more externally connected displays.

The cores 1302(A)-(N) may be homogenous in terms of instruction set architecture (ISA). Alternatively, the cores 1302(A)-(N) may be heterogeneous in terms of ISA; that is, a subset of the cores 1302(A)-(N) may be capable of executing an ISA, while other cores may be capable of executing only a subset of that ISA or another ISA.

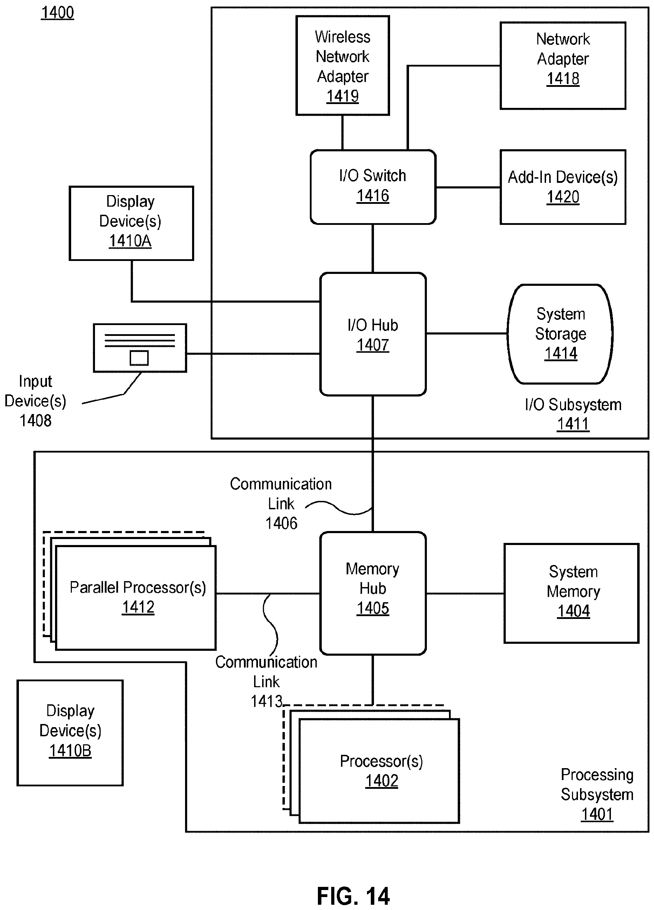

FIG. 14 is a block diagram illustrating a computing system 1400 configured to implement one or more aspects of the examples described herein. The computing system 1400 includes a processing subsystem 1401 having one or more processor(s) 1402 and a system memory 1404 communicating via an interconnection path that may include a memory hub 1405. The memory hub 1405 may be a separate component within a chipset component or may be integrated within the one or more processor(s) 1402. The memory hub 1405 couples with an I/O subsystem 1411 via a communication link 1406. The I/O subsystem 1411 includes an I/O hub 1407 that can enable the computing system 1400 to receive input from one or more input device(s) 1408. Additionally, the I/O hub 1407 can enable a display controller, which may be included in the one or more processor(s) 1402, to provide outputs to one or more display device(s) 1410A. In some examples the one or more display device(s) 1410A coupled with the I/O hub 1407 can include a local, internal, or embedded display device.

The processing subsystem 1401, for example, includes one or more parallel processor(s) 1412 coupled to memory hub 1405 via a bus or other communication link 1413. The communication link 1413 may be one of any number of standards-based communication link technologies or protocols, such as, but not limited to PCI Express, or may be a vendor specific communications interface or communications fabric. The one or more parallel processor(s) 1412 may form a computationally focused parallel or vector processing system that can include a large number of processing cores and/or processing clusters, such as a many integrated core (MIC) processor. For example, the one or more parallel processor(s) 1412 form a graphics processing subsystem that can output pixels to one of the one or more display device(s) 1410A coupled via the I/O hub 1407. The one or more parallel processor(s) 1412 can also include a display controller and display interface (not shown) to enable a direct connection to one or more display device(s) 1410B.

Within the I/O subsystem 1411, a system storage unit 1414 can connect to the I/O hub 1407 to provide a storage mechanism for the computing system 1400. An I/O switch 1416 can be used to provide an interface mechanism to enable connections between the I/O hub 1407 and other components, such as a network adapter 1418 and/or wireless network adapter 1419 that may be integrated into the platform, and various other devices that can be added via one or more add-in device(s) 1420. The add-in device(s) 1420 may also include, for example, one or more external graphics processor devices, graphics cards, and/or compute accelerators. The network adapter 1418 can be an Ethernet adapter or another wired network adapter. The wireless network adapter 1419 can include one or more of a Wi-Fi, Bluetooth, near field communication (NFC), or other network device that includes one or more wireless radios.

The computing system 1400 can include other components not explicitly shown, including USB or other port connections, optical storage drives, video capture devices, and the like, which may also be connected to the I/O hub 1407. Communication paths interconnecting the various components in FIG. 14 may be implemented using any suitable protocols, such as PCI (Peripheral Component Interconnect) based protocols (e.g., PCI-Express), or any other bus or point-to-point communication interfaces and/or protocol(s), such as the NVLink high-speed interconnect, Compute Express Link™ (CXL™) (e.g., CXL.mem), Infinity Fabric (IF), Ethernet (IEEE 802.3), remote direct memory access (RDMA), InfiniBand, Internet Wide Area RDMA Protocol (iWARP), Transmission Control Protocol (TCP), User Datagram Protocol (UDP), quick UDP Internet Connections (QUIC), RDMA over Converged Ethernet (RoCE), Intel QuickPath Interconnect (QPI), Intel Ultra Path Interconnect (UPI), Intel On-Chip System Fabric (IOSF), Omnipath, HyperTransport, Advanced Microcontroller Bus Architecture (AMBA) interconnect, OpenCAPI, Gen-Z, Cache Coherent Interconnect for Accelerators (CCIX), 3GPP Long Term Evolution (LTE) (4G), 3GPP 5G, and variations thereof, or wired or wireless interconnect protocols known in the art. In some examples, data can be copied or stored to virtualized storage nodes using a protocol such as non-volatile memory express (NVMe) over Fabrics (NVMe-oF) or NVMe.

The one or more parallel processor(s) 1412 may incorporate circuitry optimized for graphics and video processing, including, for example, video output circuitry, and constitutes a graphics processing unit (GPU). Alternatively or additionally, the one or more parallel processor(s) 1412 can incorporate circuitry optimized for general purpose processing, while preserving the underlying computational architecture, described in greater detail herein. Components of the computing system 1400 may be integrated with one or more other system elements on a single integrated circuit. For example, the one or more parallel processor(s) 1412, memory hub 1405, processor(s) 1402, and I/O hub 1407 can be integrated into a system on chip (SoC) integrated circuit. Alternatively, the components of the computing system 1400 can be integrated into a single package to form a system in package (SIP) configuration. In some examples at least a portion of the components of the computing system 1400 can be integrated into a multi-chip module (MCM), which can be interconnected with other multi-chip modules into a modular computing system.

It will be appreciated that the computing system 1400 shown herein is illustrative and that variations and modifications are possible. The connection topology, including the number and arrangement of bridges, the number of processor(s) 1402, and the number of parallel processor(s) 1412, may be modified as desired. For instance, system memory 1404 can be connected to the processor(s) 1402 directly rather than through a bridge, while other devices communicate with system memory 1404 via the memory hub 1405 and the processor(s) 1402. In other alternative topologies, the parallel processor(s) 1412 are connected to the I/O hub 1407 or directly to one of the one or more processor(s) 1402, rather than to the memory hub 1405. In other examples, the I/O hub 1407 and memory hub 1405 may be integrated into a single chip. It is also possible that two or more sets of processor(s) 1402 are attached via multiple sockets, which can couple with two or more instances of the parallel processor(s) 1412.

Some of the particular components shown herein are optional and may not be included in all implementations of the computing system 1400. For example, any number of add-in cards or peripherals may be supported, or some components may be eliminated. Furthermore, some architectures may use different terminology for components similar to those illustrated in FIG. 14. For example, the memory hub 1405 may be referred to as a Northbridge in some architectures, while the I/O hub 1407 may be referred to as a Southbridge.

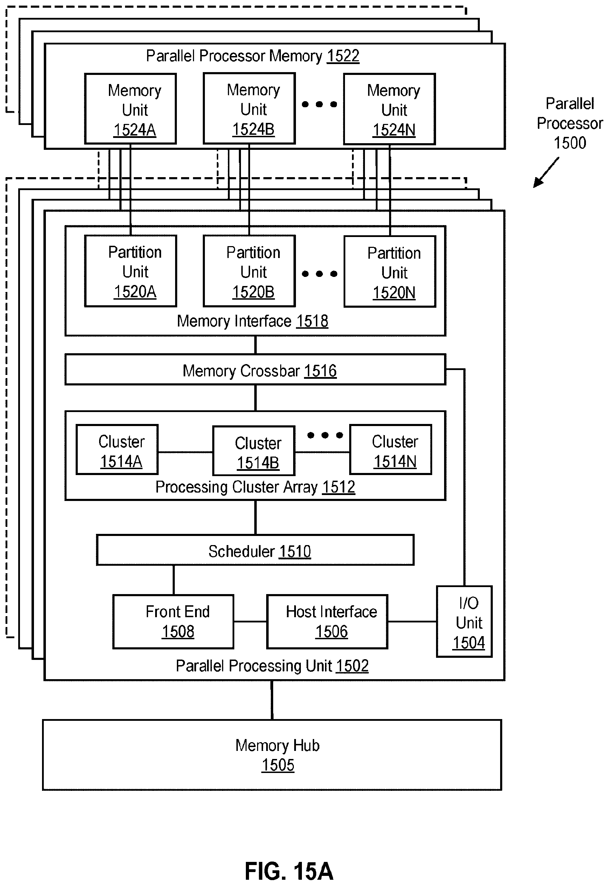

FIG. 15A illustrates examples of a parallel processor 1500. The parallel processor 1500 may be a GPU, GPGPU or the like as described herein. The various components of the parallel processor 1500 may be implemented using one or more integrated circuit devices, such as programmable processors, application specific integrated circuits (ASICs), or field programmable gate arrays (FPGA). The illustrated parallel processor 1500 may be one or more of the parallel processor(s) 1412 shown in FIG. 14.

The parallel processor 1500 includes a parallel processing unit 1502. The parallel processing unit includes an I/O unit 1504 that enables communication with other devices, including other instances of the parallel processing unit 1502. The I/O unit 1504 may be directly connected to other devices. For instance, the I/O unit 1504 connects with other devices via the use of a hub or switch interface, such as memory hub 1405. The connections between the memory hub 1405 and the I/O unit 1504 form a communication link 1413. Within the parallel processing unit 1502, the I/O unit 1504 connects with a host interface 1506 and a memory crossbar 1516, where the host interface 1506 receives commands directed to performing processing operations and the memory crossbar 1516 receives commands directed to performing memory operations.

When the host interface 1506 receives a command buffer via the I/O unit 1504, the host interface 1506 can direct work operations to perform those commands to a front end 1508. In some examples the front end 1508 couples with a scheduler 1510, which is configured to distribute commands or other work items to a processing cluster array 1512. The scheduler 1510 ensures that the processing cluster array 1512 is properly configured and in a valid state before tasks are distributed to the processing clusters of the processing cluster array 1512. The scheduler 1510 may be implemented via firmware logic executing on a microcontroller. The microcontroller implemented scheduler 1510 is configurable to perform complex scheduling and work distribution operations at coarse and fine granularity, enabling rapid preemption and context switching of threads executing on the processing cluster array 1512. Preferably, the host software can prove workloads for scheduling on the processing cluster array 1512 via one of multiple graphics processing doorbells. In other examples, polling for new workloads or interrupts can be used to identify or indicate availability of work to perform. The workloads can then be automatically distributed across the processing cluster array 1512 by the scheduler 1510 logic within the scheduler microcontroller.

The processing cluster array 1512 can include up to "N" processing clusters (e.g., cluster 1514A, cluster 1514B, through cluster 1514N). Each cluster 1514A-1514N of the processing cluster array 1512 can execute a large number of concurrent threads. The scheduler 1510 can allocate work to the clusters 1514A-1514N of the processing cluster array 1512 using various scheduling and/or work distribution algorithms, which may vary depending on the workload arising for each type of program or computation. The scheduling can be handled dynamically by the scheduler 1510 or can be assisted in part by compiler logic during compilation of program logic configured for execution by the processing cluster array 1512. Optionally, different clusters 1514A-1514N of the processing cluster array 1512 can be allocated for processing different types of programs or for performing different types of computations.

The processing cluster array 1512 can be configured to perform various types of parallel processing operations. For example, the processing cluster array 1512 is configured to perform general-purpose parallel compute operations. For example, the processing cluster array 1512 can include logic to execute processing tasks including filtering of video and/or audio data, performing modeling operations, including physics operations, and performing data transformations.

The processing cluster array 1512 is configured to perform parallel graphics processing operations. In such examples in which the parallel processor 1500 is configured to perform graphics processing operations, the processing cluster array 1512 can include additional logic to support the execution of such graphics processing operations, including, but not limited to texture sampling logic to perform texture operations, as well as tessellation logic and other vertex processing logic. Additionally, the processing cluster array 1512 can be configured to execute graphics processing related shader programs such as, but not limited to vertex shaders, tessellation shaders, geometry shaders, and pixel shaders. The parallel processing unit 1502 can transfer data from system memory via the I/O unit 1504 for processing. During processing the transferred data can be stored to on-chip memory (e.g., parallel processor memory 1522) during processing, then written back to system memory.

In examples in which the parallel processing unit 1502 is used to perform graphics processing, the scheduler 1510 may be configured to divide the processing workload into approximately equal sized tasks, to better enable distribution of the graphics processing operations to multiple clusters 1514A-1514N of the processing cluster array 1512. In some of these examples, portions of the processing cluster array 1512 can be configured to perform different types of processing. For example, a first portion may be configured to perform vertex shading and topology generation, a second portion may be configured to perform tessellation and geometry shading, and a third portion may be configured to perform pixel shading or other screen space operations, to produce a rendered image for display. Intermediate data produced by one or more of the clusters 1514A-1514N may be stored in buffers to allow the intermediate data to be transmitted between clusters 1514A-1514N for further processing.

During operation, the processing cluster array 1512 can receive processing tasks to be executed via the scheduler 1510, which receives commands defining processing tasks from front end 1508. For graphics processing operations, processing tasks can include indices of data to be processed, e.g., surface (patch) data, primitive data, vertex data, and/or pixel data, as well as state parameters and commands defining how the data is to be processed (e.g., what program is to be executed). The scheduler 1510 may be configured to fetch the indices corresponding to the tasks or may receive the indices from the front end 1508. The front end 1508 can be configured to ensure the processing cluster array 1512 is configured to a valid state before the workload specified by incoming command buffers (e.g., batch-buffers, push buffers, etc.) is initiated.

Each of the one or more instances of the parallel processing unit 1502 can couple with parallel processor memory 1522. The parallel processor memory 1522 can be accessed via the memory crossbar 1516, which can receive memory requests from the processing cluster array 1512 as well as the I/O unit 1504. The memory crossbar 1516 can access the parallel processor memory 1522 via a memory interface 1518. The memory interface 1518 can include multiple partition units (e.g., partition unit 1520A, partition unit 1520B, through partition unit 1520N) that can each couple to a portion (e.g., memory unit) of parallel processor memory 1522. The number of partition units 1520A-1520N may be configured to be equal to the number of memory units, such that a first partition unit 1520A has a corresponding first memory unit 1524A, a second partition unit 1520B has a corresponding second memory unit 1524B, and an Nth partition unit 1520N has a corresponding Nth memory unit 1524N. In other examples, the number of partition units 1520A-1520N may not be equal to the number of memory devices.

The memory units 1524A-1524N can include various types of memory devices, including dynamic random-access memory (DRAM) or graphics random access memory, such as synchronous graphics random access memory (SGRAM), including graphics double data rate (GDDR) memory. Optionally, the memory units 1524A-1524N may also include 3D stacked memory, including but not limited to high bandwidth memory (HBM). Persons skilled in the art will appreciate that the specific implementation of the memory units 1524A-1524N can vary and can be selected from one of various conventional designs. Render targets, such as frame buffers or texture maps may be stored across the memory units 1524A-1524N, allowing partition units 1520A-1520N to write portions of each render target in parallel to efficiently use the available bandwidth of parallel processor memory 1522. In some examples, a local instance of the parallel processor memory 1522 may be excluded in favor of a unified memory design that utilizes system memory in conjunction with local cache memory.

Optionally, any one of the clusters 1514A-1514N of the processing cluster array 1512 has the ability to process data that will be written to any of the memory units 1524A-1524N within parallel processor memory 1522. The memory crossbar 1516 can be configured to transfer the output of each cluster 1514A-1514N to any partition unit 1520A-1520N or to another cluster 1514A-1514N, which can perform additional processing operations on the output. Each cluster 1514A-1514N can communicate with the memory interface 1518 through the memory crossbar 1516 to read from or write to various external memory devices. In one of the examples with the memory crossbar 1516 the memory crossbar 1516 has a connection to the memory interface 1518 to communicate with the I/O unit 1504, as well as a connection to a local instance of the parallel processor memory 1522, enabling the processing units within the different processing clusters 1514A-1514N to communicate with system memory or other memory that is not local to the parallel processing unit 1502. Generally, the memory crossbar 1516 may, for example, be able to use virtual channels to separate traffic streams between the clusters 1514A-1514N and the partition units 1520A-1520N.

While a single instance of the parallel processing unit 1502 is illustrated within the parallel processor 1500, any number of instances of the parallel processing unit 1502 can be included. For example, multiple instances of the parallel processing unit 1502 can be provided on a single add-in card, or multiple add-in cards can be interconnected. For example, the parallel processor 1500 can be an add-in device, such as add-in device 1420 of FIG. 14, which may be a graphics card such as a discrete graphics card that includes one or more GPUs, one or more memory devices, and device-to-device or network or fabric interfaces. The different instances of the parallel processing unit 1502 can be configured to inter-operate even if the different instances have different numbers of processing cores, different amounts of local parallel processor memory, and/or other configuration differences. Optionally, some instances of the parallel processing unit 1502 can include higher precision floating point units relative to other instances. Systems incorporating one or more instances of the parallel processing unit 1502 or the parallel processor 1500 can be implemented in a variety of configurations and form factors, including but not limited to desktop, laptop, or handheld personal computers, servers, workstations, game consoles, and/or embedded systems. An orchestrator can form composite nodes for workload performance using one or more of: disaggregated processor resources, cache resources, memory resources, storage resources, and networking resources.

In some examples, the parallel processing unit 1502 can be partitioned into multiple instances. Those multiple instances can be configured to execute workloads associated with different clients in an isolated manner, enabling a pre-determined quality of service to be provided for each client. For example, each cluster 1514A-1514N can be compartmentalized and isolated from other clusters, allowing the processing cluster array 1512 to be divided into multiple compute partitions or instances. In such configuration, workloads that execute on an isolated partition are protected from faults or errors associated with a different workload that executes on a different partition. The partition units 1520A-1520N can be configured to enable a dedicated and/or isolated path to memory for the clusters 1514A-1514N associated with the respective compute partitions. This datapath isolation enables the compute resources within a partition can communicate with one or more assigned memory units 1524A-1524N without being subjected to inference by the activities of other partitions.

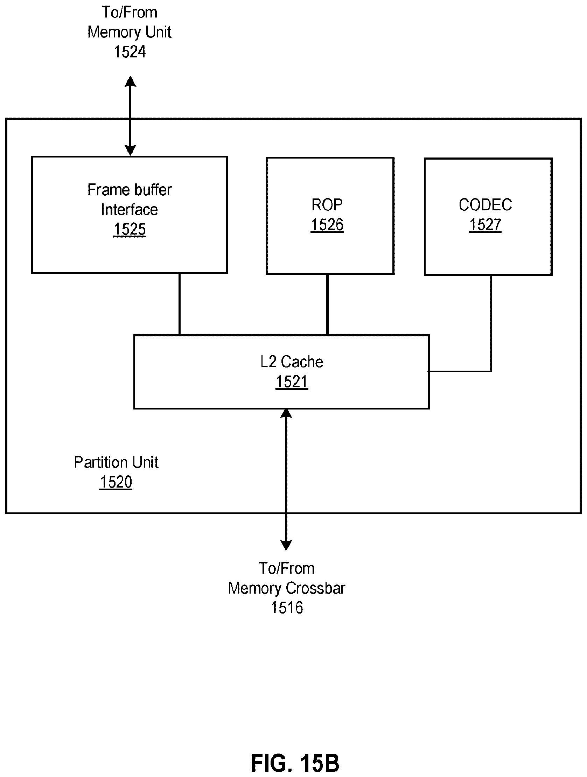

FIG. 15B is a block diagram of a partition unit 1520. The partition unit 1520 may be an instance of one of the partition units 1520A-1520N of FIG. 15A. As illustrated, the partition unit 1520 includes an L2 cache 1521, a frame buffer interface 1525, and a ROP 1526 (raster operations unit). The L2 cache 1521 is a read/write cache that is configured to perform load and store operations received from the memory crossbar 1516 and ROP 1526. Read misses and urgent write-back requests are output by L2 cache 1521 to frame buffer interface 1525 for processing. Updates can also be sent to the frame buffer via the frame buffer interface 1525 for processing. In some examples the frame buffer interface 1525 interfaces with one of the memory units in parallel processor memory, such as the memory units 1524A-1524N of FIG. 15A (e.g., within parallel processor memory 1522). The partition unit 1520 may additionally or alternatively also interface with one of the memory units in parallel processor memory via a memory controller (not shown).

In graphics applications, the ROP 1526 is a processing unit that performs raster operations such as stencil, z test, blending, and the like. The ROP 1526 then outputs processed graphics data that is stored in graphics memory. In some examples the ROP 1526 includes or couples with a CODEC 1527 that includes compression logic to compress depth or color data that is written to memory or the L2 cache 1521 and decompress depth or color data that is read from memory or the L2 cache 1521. The compression logic can be lossless compression logic that makes use of one or more of multiple compression algorithms. The type of compression that is performed by the CODEC 1527 can vary based on the statistical characteristics of the data to be compressed. For example, in some examples, delta color compression is performed on depth and color data on a per-tile basis. In some examples the CODEC 1527 includes compression and decompression logic that can compress and decompress compute data associated with machine learning operations. The CODEC 1527 can, for example, compress sparse matrix data for sparse machine learning operations. The CODEC 1527 can also compress sparse matrix data that is encoded in a sparse matrix format (e.g., coordinate list encoding (COO), compressed sparse row (CSR), compress sparse column (CSC), etc.) to generate compressed and encoded sparse matrix data. The compressed and encoded sparse matrix data can be decompressed and/or decoded before being processed by processing elements or the processing elements can be configured to consume compressed, encoded, or compressed and encoded data for processing.

The ROP 1526 may be included within each processing cluster (e.g., cluster 1514A-1514N of FIG. 15A) instead of within the partition unit 1520. In such example, read and write requests for pixel data are transmitted over the memory crossbar 1516 instead of pixel fragment data. The processed graphics data may be displayed on a display device, such as one of the one or more display device(s) 1410A-1410B of FIG. 14, routed for further processing by the processor(s) 1402, or routed for further processing by one of the processing entities within the parallel processor 1500 of FIG. 15A.

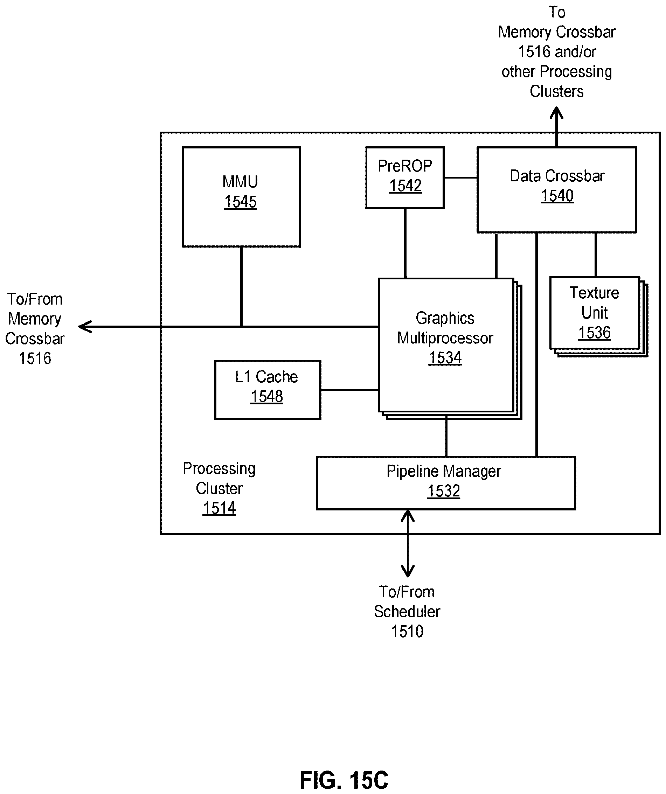

FIG. 15C is a block diagram of a processing cluster 1514 within a parallel processing unit. For example, the processing cluster is an instance of one of the processing clusters 1514A-1514N of FIG. 15A. The processing cluster 1514 can be configured to execute many threads in parallel, where the term "thread" refers to an instance of a particular program executing on a particular set of input data. Optionally, single-instruction, multiple-data (SIMD) instruction issue techniques may be used to support parallel execution of a large number of threads without providing multiple independent instruction units. Alternatively, single-instruction, multiple-thread (SIMT) techniques may be used to support parallel execution of a large number of generally synchronized threads, using a common instruction unit configured to issue instructions to a set of processing engines within each one of the processing clusters. Unlike a SIMD execution regime, where all processing engines typically execute identical instructions, SIMT execution allows different threads to more readily follow divergent execution paths through a given thread program. Persons skilled in the art will understand that a SIMD processing regime represents a functional subset of a SIMT processing regime.

Operation of the processing cluster 1514 can be controlled via a pipeline manager 1532 that distributes processing tasks to SIMT parallel processors. The pipeline manager 1532 receives instructions from the scheduler 1510 of FIG. 15A and manages execution of those instructions via a graphics multiprocessor 1534 and/or a texture unit 1536. The illustrated graphics multiprocessor 1534 is an exemplary instance of a SIMT parallel processor. However, various types of SIMT parallel processors of differing architectures may be included within the processing cluster 1514. One or more instances of the graphics multiprocessor 1534 can be included within a processing cluster 1514. The graphics multiprocessor 1534 can process data and a data crossbar 1540 can be used to distribute the processed data to one of multiple possible destinations, including other shader units. The pipeline manager 1532 can facilitate the distribution of processed data by specifying destinations for processed data to be distributed via the data crossbar 1540.

Each graphics multiprocessor 1534 within the processing cluster 1514 can include an identical set of functional execution logic (e.g., arithmetic logic units, load-store units, etc.). The functional execution logic can be configured in a pipelined manner in which new instructions can be issued before previous instructions are complete. The functional execution logic supports a variety of operations including integer and floating-point arithmetic, comparison operations, Boolean operations, bit-shifting, and computation of various algebraic functions. The same functional-unit hardware could be leveraged to perform different operations and any combination of functional units may be present.

The instructions transmitted to the processing cluster 1514 constitute a thread. A set of threads executing across the set of parallel processing engines is a thread group. A thread group executes the same program on different input data. Each thread within a thread group can be assigned to a different processing engine within a graphics multiprocessor 1534. A thread group may include fewer threads than the number of processing engines within the graphics multiprocessor 1534. When a thread group includes fewer threads than the number of processing engines, one or more of the processing engines may be idle during cycles in which that thread group is being processed. A thread group may also include more threads than the number of processing engines within the graphics multiprocessor 1534. When the thread group includes more threads than the number of processing engines within the graphics multiprocessor 1534, processing can be performed over consecutive clock cycles. Optionally, multiple thread groups can be executed concurrently on the graphics multiprocessor 1534.

The graphics multiprocessor 1534 may include an internal cache memory to perform load and store operations. Optionally, the graphics multiprocessor 1534 can forego an internal cache and use a cache memory (e.g., level 1 (L1) cache 1548) within the processing cluster 1514. Each graphics multiprocessor 1534 also has access to level 2 (L2) caches within the partition units (e.g., partition units 1520A-1520N of FIG. 15A) that are shared among all processing clusters 1514 and may be used to transfer data between threads. The graphics multiprocessor 1534 may also access off-chip global memory, which can include one or more of local parallel processor memory and/or system memory. Any memory external to the parallel processing unit 1502 may be used as global memory. Embodiments in which the processing cluster 1514 includes multiple instances of the graphics multiprocessor 1534 can share common instructions and data, which may be stored in the L1 cache 1548.

Each processing cluster 1514 may include an MMU 1545 (memory management unit) that is configured to map virtual addresses into physical addresses. In other examples, one or more instances of the MMU 1545 may reside within the memory interface 1518 of FIG. 15A. The MMU 1545 includes a set of page table entries (PTEs) used to map a virtual address to a physical address of a tile and optionally a cache line index. The MMU 1545 may include address translation lookaside buffers (TLB) or caches that may reside within the graphics multiprocessor 1534 or the L1 cache 1548 of processing cluster 1514. The physical address is processed to distribute surface data access locality to allow efficient request interleaving among partition units. The cache line index may be used to determine whether a request for a cache line is a hit or miss.

In graphics and computing applications, a processing cluster 1514 may be configured such that each graphics multiprocessor 1534 is coupled to a texture unit 1536 for performing texture mapping operations, e.g., determining texture sample positions, reading texture data, and filtering the texture data. Texture data is read from an internal texture L1 cache (not shown) or in some examples from the L1 cache within graphics multiprocessor 1534 and is fetched from an L2 cache, local parallel processor memory, or system memory, as needed. Each graphics multiprocessor 1534 outputs processed tasks to the data crossbar 1540 to provide the processed task to another processing cluster 1514 for further processing or to store the processed task in an L2 cache, local parallel processor memory, or system memory via the memory crossbar 1516. A preROP 1542 (pre-raster operations unit) is configured to receive data from graphics multiprocessor 1534, direct data to ROP units, which may be located with partition units as described herein (e.g., partition units 1520A-1520N of FIG. 15A). The preROP 1542 unit can perform optimizations for color blending, organize pixel color data, and perform address translations.

It will be appreciated that the core architecture described herein is illustrative and that variations and modifications are possible. Any number of processing units, e.g., graphics multiprocessor 1534, texture units 1536, preROPs 1542, etc., may be included within a processing cluster 1514. Further, while only one processing cluster 1514 is shown, a parallel processing unit as described herein may include any number of instances of the processing cluster 1514. Optionally, each processing cluster 1514 can be configured to operate independently of other processing clusters 1514 using separate and distinct processing units, L1 caches, L2 caches, etc.

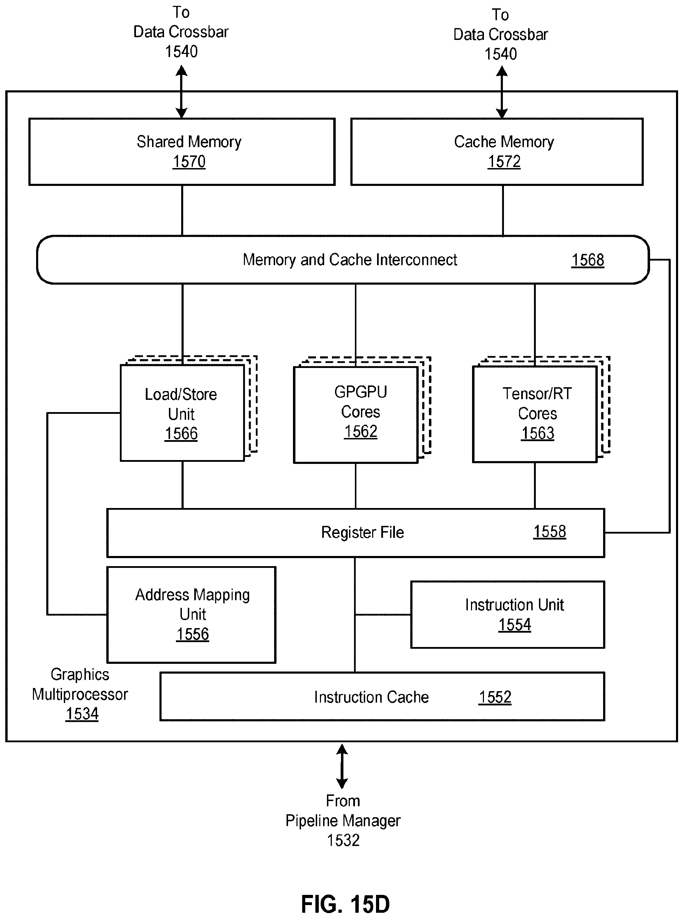

FIG. 15D shows an example of the graphics multiprocessor 1534 in which the graphics multiprocessor 1534 couples with the pipeline manager 1532 of the processing cluster 1514. The graphics multiprocessor 1534 has an execution pipeline including but not limited to an instruction cache 1552, an instruction unit 1554, an address mapping unit 1556, a register file 1558, one or more general purpose graphics processing unit (GPGPU) cores 1562, and one or more load/store units 1566. The GPGPU cores 1562 and load/store units 1566 are coupled with cache memory 1572 and shared memory 1570 via a memory and cache interconnect 1568. The graphics multiprocessor 1534 may additionally include tensor and/or ray-tracing cores 1563 that include hardware logic to accelerate matrix and/or ray-tracing operations.

The instruction cache 1552 may receive a stream of instructions to execute from the pipeline manager 1532. The instructions are cached in the instruction cache 1552 and dispatched for execution by the instruction unit 1554. The instruction unit 1554 can dispatch instructions as thread groups (e.g., warps), with each thread of the thread group assigned to a different execution unit within GPGPU core 1562. An instruction can access any of a local, shared, or global address space by specifying an address within a unified address space. The address mapping unit 1556 can be used to translate addresses in the unified address space into a distinct memory address that can be accessed by the load/store units 1566.

The register file 1558 provides a set of registers for the functional units of the graphics multiprocessor 1534. The register file 1558 provides temporary storage for operands connected to the data paths of the functional units (e.g., GPGPU cores 1562, load/store units 1566) of the graphics multiprocessor 1534. The register file 1558 may be divided between each of the functional units such that each functional unit is allocated a dedicated portion of the register file 1558. For example, the register file 1558 may be divided between the different warps being executed by the graphics multiprocessor 1534.

The GPGPU cores 1562 can each include floating point units (FPUs) and/or integer arithmetic logic units (ALUs) that are used to execute instructions of the graphics multiprocessor 1534. In some implementations, the GPGPU cores 1562 can include hardware logic that may otherwise reside within the tensor and/or ray-tracing cores 1563. The GPGPU cores 1562 can be similar in architecture or can differ in architecture. For example and in some examples, a first portion of the GPGPU cores 1562 include a single precision FPU and an integer ALU while a second portion of the GPGPU cores include a double precision FPU. Optionally, the FPUs can implement the IEEE 754-2008 standard for floating point arithmetic or enable variable precision floating point arithmetic. The graphics multiprocessor 1534 can additionally include one or more fixed function or special function units to perform specific functions such as copy rectangle or pixel blending operations. One or more of the GPGPU cores can also include fixed or special function logic.

The GPGPU cores 1562 may include SIMD logic capable of performing a single instruction on multiple sets of data. Optionally, GPGPU cores 1562 can physically execute SIMD4, SIMD8, and SIMD16 instructions and logically execute SIMD1, SIMD2, and SIMD32 instructions. The SIMD instructions for the GPGPU cores can be generated at compile time by a shader compiler or automatically generated when executing programs written and compiled for single program multiple data (SPMD) or SIMT architectures. Multiple threads of a program configured for the SIMT execution model can be executed via a single SIMD instruction. For example and in some examples, eight SIMT threads that perform the same or similar operations can be executed in parallel via a single SIMD8 logic unit.

The memory and cache interconnect 1568 is an interconnect network that connects each of the functional units of the graphics multiprocessor 1534 to the register file 1558 and to the shared memory 1570. For example, the memory and cache interconnect 1568 is a crossbar interconnect that allows the load/store unit 1566 to implement load and store operations between the shared memory 1570 and the register file 1558. The register file 1558 can operate at the same frequency as the GPGPU cores 1562, thus data transfer between the GPGPU cores 1562 and the register file 1558 is very low latency. The shared memory 1570 can be used to enable communication between threads that execute on the functional units within the graphics multiprocessor 1534. The cache memory 1572 can be used as a data cache for example, to cache texture data communicated between the functional units and the texture unit 1536. The shared memory 1570 can also be used as a program managed cached. The shared memory 1570 and the cache memory 1572 can couple with the data crossbar 1540 to enable communication with other components of the processing cluster. Threads executing on the GPGPU cores 1562 can programmatically store data within the shared memory in addition to the automatically cached data that is stored within the cache memory 1572.

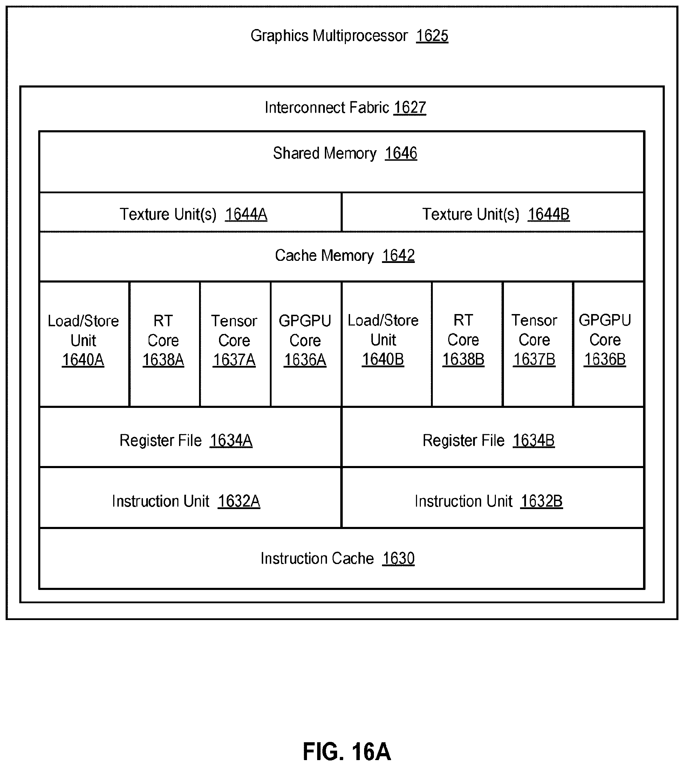

FIGS. 16A-16C illustrate additional graphics multiprocessors, according to examples.

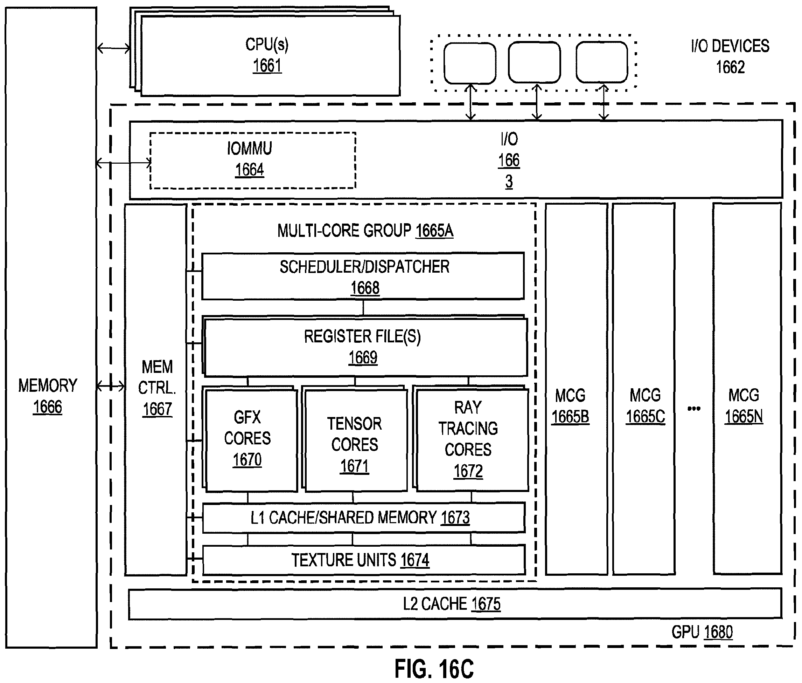

FIG. 16A-16B illustrate graphics multiprocessors 1625, 1650, which are related to the graphics multiprocessor 1534 of FIG. 15C and may be used in place of one of those. Therefore, the disclosure of any features in combination with the graphics multiprocessor 1534 herein also discloses a corresponding combination with the graphics multiprocessor(s) 1625, 1650, but is not limited to such. FIG. 16C illustrates a graphics processing unit (GPU) 1680 which includes dedicated sets of graphics processing resources arranged into multi-core groups 1665A-1665N, which correspond to the graphics multiprocessors 1625, 1650. The illustrated graphics multiprocessors 1625, 1650 and the multi-core groups 1665A-1665N can be streaming multiprocessors (SM) capable of simultaneous execution of a large number of execution threads.

The graphics multiprocessor 1625 of FIG. 16A includes multiple additional instances of execution resource units relative to the graphics multiprocessor 1534 of FIG. 15D. For example, the graphics multiprocessor 1625 can include multiple instances of the instruction unit 1632A-1632B, register file 1634A-1634B, and texture unit(s) 1644A-1644B. The graphics multiprocessor 1625 also includes multiple sets of graphics or compute execution units (e.g., GPGPU core 1636A-1636B, tensor core 1637A-1637B, ray-tracing core 1638A-1638B) and multiple sets of load/store units 1640A-1640B. The execution resource units have a common instruction cache 1630, texture and/or data cache memory 1642, and shared memory 1646.

The various components can communicate via an interconnect fabric 1627. The interconnect fabric 1627 may include one or more crossbar switches to enable communication between the various components of the graphics multiprocessor 1625. The interconnect fabric 1627 may be a separate, high-speed network fabric layer upon which each component of the graphics multiprocessor 1625 is stacked. The components of the graphics multiprocessor 1625 communicate with remote components via the interconnect fabric 1627. For example, the cores 1636A-1636B, 1637A-1637B, and 1638A-1638B can each communicate with shared memory 1646 via the interconnect fabric 1627. The interconnect fabric 1627 can arbitrate communication within the graphics multiprocessor 1625 to ensure a fair bandwidth allocation between components.

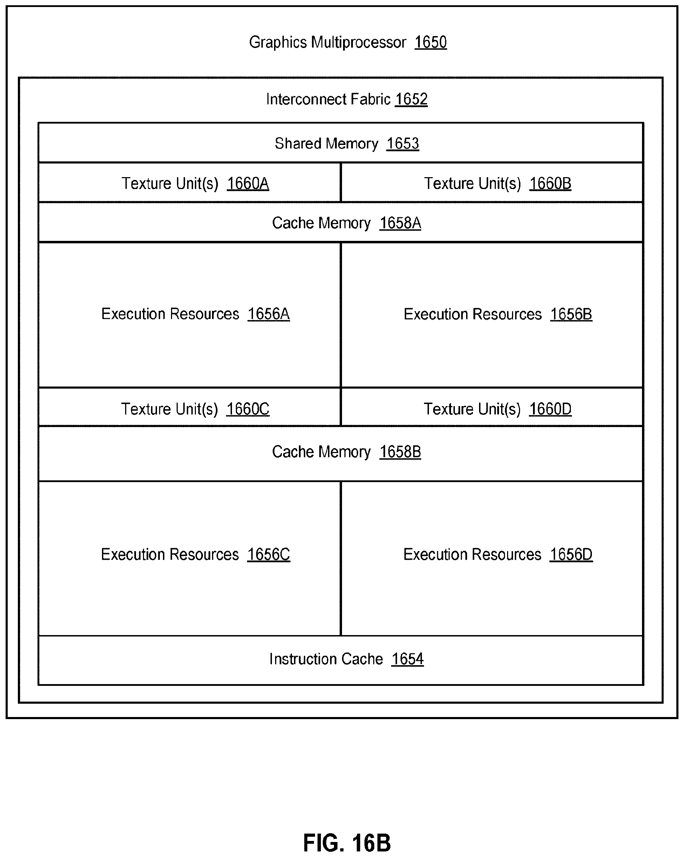

The graphics multiprocessor 1650 of FIG. 16B includes multiple sets of execution resources 1656A-1656D, where each set of execution resource includes multiple instruction units, register files, GPGPU cores, and load store units, as illustrated in FIG. 15D and FIG. 16A. The execution resources 1656A-1656D can work in concert with texture unit(s) 1660A-1660D for texture operations, while sharing an instruction cache 1654, and shared memory 1653. For example, the execution resources 1656A-1656D can share an instruction cache 1654 and shared memory 1653, as well as multiple instances of a texture and/or data cache memory 1658A-1658B. The various components can communicate via an interconnect fabric 1652 similar to the interconnect fabric 1627 of FIG. 16A.

Persons skilled in the art will understand that the architecture described in FIG. 1, 15A-15D, and 16A-16B are descriptive and not limiting as to the scope of the present examples. Thus, the techniques described herein may be implemented on any properly configured processing unit, including, without limitation, one or more mobile application processors, one or more desktop or server central processing units (CPUs) including multi-core CPUs, one or more parallel processing units, such as the parallel processing unit 1502 of FIG. 15A, as well as one or more graphics processors or special purpose processing units, without departure from the scope of the examples described herein.

The parallel processor or GPGPU as described herein may be communicatively coupled to host/processor cores to accelerate graphics operations, machine-learning operations, pattern analysis operations, and various general-purpose GPU (GPGPU) functions. The GPU may be communicatively coupled to the host processor/cores over a bus or other interconnect (e.g., a high-speed interconnect such as PCIe, NVLink, or other known protocols, standardized protocols, or proprietary protocols). In other examples, the GPU may be integrated on the same package or chip as the cores and communicatively coupled to the cores over an internal processor bus/interconnect (i.e., internal to the package or chip). Regardless of the manner in which the GPU is connected, the processor cores may allocate work to the GPU in the form of sequences of commands/instructions contained in a work descriptor. The GPU then uses dedicated circuitry/logic for efficiently processing these commands/instructions.

FIG. 16C illustrates a graphics processing unit (GPU) 1680 which includes dedicated sets of graphics processing resources arranged into multi-core groups 1665A-1665N. While the details of only a single multi-core group 1665A are provided, it will be appreciated that the other multi-core groups 1665B-1665N may be equipped with the same or similar sets of graphics processing resources. Details described with respect to the multi-core groups 1665A-1665N may also apply to any graphics multiprocessor 1534, 1625, 1650 described herein.

As illustrated, a multi-core group 1665A may include a set of graphics cores 1670, a set of tensor cores 1671, and a set of ray tracing cores 1672. A scheduler/dispatcher 1668 schedules and dispatches the graphics threads for execution on the various cores 1670, 1671, 1672. A set of register files 1669 store operand values used by the cores 1670, 1671, 1672 when executing the graphics threads. These may include, for example, integer registers for storing integer values, floating point registers for storing floating point values, vector registers for storing packed data elements (integer and/or floating-point data elements) and tile registers for storing tensor/matrix values. The tile registers may be implemented as combined sets of vector registers.

One or more combined level 1 (L1) caches and shared memory units 1673 store graphics data such as texture data, vertex data, pixel data, ray data, bounding volume data, etc., locally within each multi-core group 1665A. One or more texture units 1674 can also be used to perform texturing operations, such as texture mapping and sampling. A Level 2 (L2) cache 1675 shared by all or a subset of the multi-core groups 1665A-1665N stores graphics data and/or instructions for multiple concurrent graphics threads. As illustrated, the L2 cache 1675 may be shared across a plurality of multi-core groups 1665A-1665N. One or more memory controllers 1667 couple the GPU 1680 to a memory 1666 which may be a system memory (e.g., DRAM) and/or a dedicated graphics memory (e.g., GDDR6 memory).

Input/output (I/O) circuitry 1663 couples the GPU 1680 to one or more I/O devices 1662 such as digital signal processors (DSPs), network controllers, or user input devices. An on-chip interconnect may be used to couple the I/O devices 1662 to the GPU 1680 and memory 1666. One or more I/O memory management units (IOMMUs) 1664 of the I/O circuitry 1663 couple the I/O devices 1662 directly to the system memory 1666. Optionally, the IOMMU 1664 manages multiple sets of page tables to map virtual addresses to physical addresses in system memory 1666. The I/O devices 1662, CPU(s) 1661, and GPU(s) 1680 may then share the same virtual address space.

In one implementation of the IOMMU 1664, the IOMMU 1664 supports virtualization. In this case, it may manage a first set of page tables to map guest/graphics virtual addresses to guest/graphics physical addresses and a second set of page tables to map the guest/graphics physical addresses to system/host physical addresses (e.g., within system memory 1666). The base addresses of each of the first and second sets of page tables may be stored in control registers and swapped out on a context switch (e.g., so that the new context is provided with access to the relevant set of page tables). While not illustrated in FIG. 16C, each of the cores 1670, 1671, 1672 and/or multi-core groups 1665A-1665N may include translation lookaside buffers (TLBs) to cache guest virtual to guest physical translations, guest physical to host physical translations, and guest virtual to host physical translations.

The CPU(s) 1661, GPUs 1680, and I/O devices 1662 may be integrated on a single semiconductor chip and/or chip package. The illustrated memory 1666 may be integrated on the same chip or may be coupled to the memory controllers 1667 via an off-chip interface. In one implementation, the memory 1666 comprises GDDR6 memory which shares the same virtual address space as other physical system-level memories, although the underlying principles described herein are not limited to this specific implementation.

The tensor cores 1671 may include a plurality of execution units specifically designed to perform matrix operations, which are the fundamental compute operation used to perform deep learning operations. For example, simultaneous matrix multiplication operations may be used for neural network training and inferencing. The tensor cores 1671 may perform matrix processing using a variety of operand precisions including single precision floating-point (e.g., 32 bits), half-precision floating point (e.g., 16 bits), integer words (16 bits), bytes (8 bits), and half-bytes (4 bits). For example, a neural network implementation extracts features of each rendered scene, potentially combining details from multiple frames, to construct a high-quality final image.

In deep learning implementations, parallel matrix multiplication work may be scheduled for execution on the tensor cores 1671. The training of neural networks, in particular, requires a significant number of matrix dot product operations. In order to process an inner-product formulation of an $N \times N \times N$ matrix multiply, the tensor cores 1671 may include at least N dot-product processing elements. Before the matrix multiply begins, one entire matrix is loaded into tile registers and at least one column of a second matrix is loaded each cycle for N cycles. Each cycle, there are N dot products that are processed.

Matrix elements may be stored at different precisions depending on the particular implementation, including 16-bit words, 8-bit bytes (e.g., INT8) and 4-bit half-bytes (e.g., INT4). Different precision modes may be specified for the tensor cores 1671 to ensure that the most efficient precision is used for different workloads (e.g., such as inferencing workloads which can tolerate quantization to bytes and half-bytes). Supported formats additionally include 64-bit floating point (FP64) and non-IEEE floating point formats such as the bfloat16 format (e.g., Brain floating point), a 16-bit floating point format with one sign bit, eight exponent bits, and eight significand bits, of which seven are explicitly stored. One example includes support for a reduced precision tensor-float (TF32) mode, which performs computations using the range of FP32 (8-bits) and the precision of FP16 (10-bits). Reduced precision TF32 operations can be performed on FP32 inputs and produce FP32 outputs at higher performance relative to FP32 and increased precision relative to FP16. In some examples, one or more 8-bit floating point formats (FP8) are supported.

In some examples the tensor cores 1671 support a sparse mode of operation for matrices in which the vast majority of values are zero. The tensor cores 1671 include support for sparse input matrices that are encoded in a sparse matrix representation (e.g., coordinate list encoding (COO), compressed sparse row (CSR), compress sparse column (CSC), etc.). The tensor cores 1671 also include support for compressed sparse matrix representations in the event that the sparse matrix representation may be further compressed. Compressed, encoded, and/or compressed and encoded matrix data, along with associated compression and/or encoding metadata, can be read by the tensor cores 1671 and the non-zero values can be extracted. For example, for a given input matrix A, a non-zero value can be loaded from the compressed and/or encoded representation of at least a portion of matrix A. Based on the location in matrix A for the non-zero value, which may be determined from index or coordinate metadata associated with the non-zero value, a corresponding value in input matrix B may be loaded. Depending on the operation to be performed (e.g., multiply), the load of the value from input matrix B may be bypassed if the corresponding value is a zero value. In some examples, the pairings of values for certain operations, such as multiply operations, may be pre-scanned by scheduler logic and only operations between non-zero inputs are scheduled. Depending on the dimensions of matrix A and matrix B and the operation to be performed, output matrix C may be dense or sparse. Where output matrix C is sparse and depending on the configuration of the tensor cores 1671, output matrix C may be output in a compressed format, a sparse encoding, or a compressed sparse encoding.

The ray tracing cores 1672 may accelerate ray tracing operations for both real-time ray tracing and non-real-time ray tracing implementations. In particular, the ray tracing cores 1672 may include ray traversal/intersection circuitry for performing ray traversal using bounding volume hierarchies (BVHs) and identifying intersections between rays and primitives enclosed within the BVH volumes. The ray tracing cores 1672 may also include circuitry for performing depth testing and culling (e.g., using a Z buffer or similar arrangement). In one implementation, the ray tracing cores 1672 perform traversal and intersection operations in concert with the image denoising techniques described herein, at least a portion of which may be executed on the tensor cores 1671. For example, the tensor cores 1671 may implement a deep learning neural network to perform denoising of frames generated by the ray tracing cores 1672. However, the CPU(s) 1661, graphics cores 1670, and/or ray tracing cores 1672 may also implement all or a portion of the denoising and/or deep learning algorithms.

In addition, as described above, a distributed approach to denoising may be employed in which the GPU 1680 is in a computing device coupled to other computing devices over a network or high-speed interconnect. In this distributed approach, the interconnected computing devices may share neural network learning/training data to improve the speed with which the overall system learns to perform denoising for different types of image frames and/or different graphics applications.

The ray tracing cores 1672 may process all BVH traversal and/or ray-primitive intersections, saving the graphics cores 1670 from being overloaded with thousands of instructions per ray. For example, each ray tracing core 1672 includes a first set of specialized circuitry for performing bounding box tests (e.g., for traversal operations) and/or a second set of specialized circuitry for performing the ray-triangle intersection tests (e.g., intersecting rays which have been traversed). Thus, for example, the multi-core group 1665A can simply launch a ray probe, and the ray tracing cores 1672 independently perform ray traversal and intersection and return hit data (e.g., a hit, no hit, multiple hits, etc.) to the thread context. The other cores 1670, 1671 are freed to perform other graphics or compute work while the ray tracing cores 1672 perform the traversal and intersection operations.

Optionally, each ray tracing core 1672 may include a traversal unit to perform BVH testing operations and/or an intersection unit which performs ray-primitive intersection tests. The intersection unit generates a "hit", "no hit", or "multiple hit" response, which it provides to the appropriate thread. During the traversal and intersection operations, the execution resources of the other cores (e.g., graphics cores 1670 and tensor cores 1671) are freed to perform other forms of graphics work.

In some examples described below, a hybrid rasterization/ray tracing approach is used in which work is distributed between the graphics cores 1670 and ray tracing cores 1672.

The ray tracing cores 1672 (and/or other cores 1670, 1671) may include hardware support for a ray tracing instruction set such as Microsoft's DirectX Ray Tracing (DXR) which includes a DispatchRays command, as well as ray-generation, closest-hit, any-hit, and miss shaders, which enable the assignment of unique sets of shaders and textures for each object. Another ray tracing platform which may be supported by the ray tracing cores 1672, graphics cores 1670 and tensor cores 1671 is Vulkan API (e.g., Vulkan version 1.1.85 and later). Note, however, that the underlying principles described herein are not limited to any particular ray tracing ISA.

In general, the various cores 1672, 1671, 1670 may support a ray tracing instruction set that includes instructions/functions for one or more of ray generation, closest hit, any hit, ray-primitive intersection, per-primitive and hierarchical bounding box construction, miss, visit, and exceptions. More specifically, some examples includes ray tracing instructions to perform one or more of the following functions:

- Ray Generation - Ray generation instructions may be executed for each pixel, sample, or other user-defined work assignment.

- Closest Hit - A closest hit instruction may be executed to locate the closest intersection point of a ray with primitives within a scene.

- Any Hit - An any hit instruction identifies multiple intersections between a ray and primitives within a scene, potentially to identify a new closest intersection point.

- Intersection - An intersection instruction performs a ray-primitive intersection test and outputs a result.

- Per-primitive Bounding box Construction - This instruction builds a bounding box around a given primitive or group of primitives (e.g., when building a new BVH or other acceleration data structure).

- Miss - Indicates that a ray misses all geometry within a scene, or specified region of a scene.

- Visit - Indicates the child volumes a ray will traverse.

- Exceptions - Includes various types of exception handlers (e.g., invoked for various error conditions).

In some examples the ray tracing cores 1672 may be adapted to accelerate general-purpose compute operations that can be accelerated using computational techniques that are analogous to ray intersection tests. A compute framework can be provided that enables shader programs to be compiled into low level instructions and/or primitives that perform general-purpose compute operations via the ray tracing cores. Exemplary computational problems that can benefit from compute operations performed on the ray tracing cores 1672 include computations involving beam, wave, ray, or particle propagation within a coordinate space. Interactions associated with that propagation can be computed relative to a geometry or mesh within the coordinate space. For example, computations associated with electromagnetic signal propagation through an environment can be accelerated via the use of instructions or primitives that are executed via the ray tracing cores. Diffraction and reflection of the signals by objects in the environment can be computed as direct ray-tracing analogies.

Ray tracing cores 1672 can also be used to perform computations that are not directly analogous to ray tracing. For example, mesh projection, mesh refinement, and volume sampling computations can be accelerated using the ray tracing cores 1672. Generic coordinate space calculations, such as nearest neighbor calculations can also be performed. For example, the set of points near a given point can be discovered by defining a bounding box in the coordinate space around the point. BVH and ray probe logic within the ray tracing cores 1672 can then be used to determine the set of point intersections within the bounding box. The intersections constitute the origin point and the nearest neighbors to that origin point. Computations that are performed using the ray tracing cores 1672 can be performed in parallel with computations performed on the graphics cores 1672 and tensor cores 1671. A shader compiler can be configured to compile a compute shader or other general-purpose graphics processing program into low level primitives that can be parallelized across the graphics cores 1670, tensor cores 1671, and ray tracing cores 1672.

Building larger and larger silicon dies is challenging for a variety of reasons. As silicon dies become larger, manufacturing yields become smaller and process technology requirements for different components may diverge. On the other hand, in order to have a high-performance system, key components should be interconnected by high speed, high bandwidth, low latency interfaces. These contradicting needs pose a challenge to high performance chip development.

Embodiments described herein provide techniques to disaggregate an architecture of a system on a chip integrated circuit into multiple distinct chiplets that can be packaged onto a common chassis. In some examples, a graphics processing unit or parallel processor is composed from diverse silicon chiplets that are separately manufactured. A chiplet is an at least partially packaged integrated circuit that includes distinct units of logic that can be assembled with other chiplets into a larger package. A diverse set of chiplets with different IP core logic can be assembled into a single device. Additionally the chiplets can be integrated into a base die or base chiplet using active interposer technology. The concepts described herein enable the interconnection and communication between the different forms of IP within the GPU. The development of IPs on different process may be mixed. This avoids the complexity of converging multiple IPs, especially on a large SoC with several flavors IPs, to the same process.

Enabling the use of multiple process technologies improves the time to market and provides a cost-effective way to create multiple product SKUs. For customers, this means getting products that are more tailored to their requirements in a cost effective and timely manner. Additionally, the disaggregated IPs are more amenable to being power gated independently, components that are not in use on a given workload can be powered off, reducing overall power consumption.

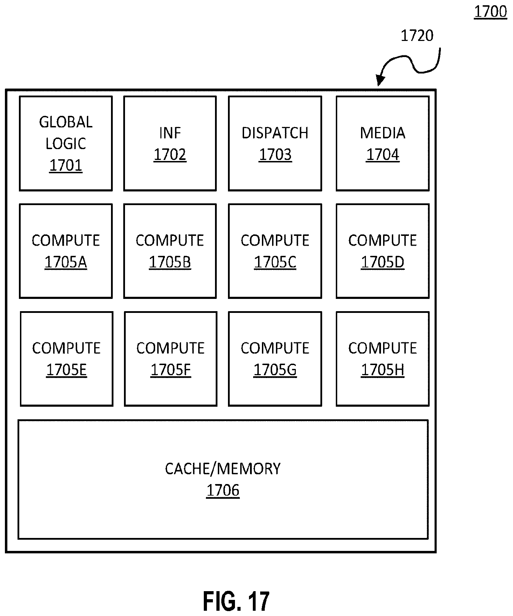

FIG. 17 shows a parallel compute system 1700, according to some examples. In some examples the parallel compute system 1700 includes a parallel processor 1720, which can be a graphics processor or compute accelerator as described herein. The parallel processor 1720 includes a global logic unit 1701, an interface 1702, a thread dispatcher 1703, a media unit 1704, a set of compute units 1705A-1705H, and a cache/memory units 1706. The global logic unit 1701, in some examples, includes global functionality for the parallel processor 1720, including device configuration registers, global schedulers, power management logic, and the like. The interface 1702 can include a front-end interface for the parallel processor 1720. The thread dispatcher 1703 can receive workloads from the interface 1702 and dispatch threads for the workload to the compute units 1705A-1705H. If the workload includes any media operations, at least a portion of those operations can be performed by the media unit 1704. The media unit can also offload some operations to the compute units 1705A-1705H. The cache/memory units 1706 can include cache memory (e.g., L3 cache) and local memory (e.g., HBM, GDDR) for the parallel processor 1720.

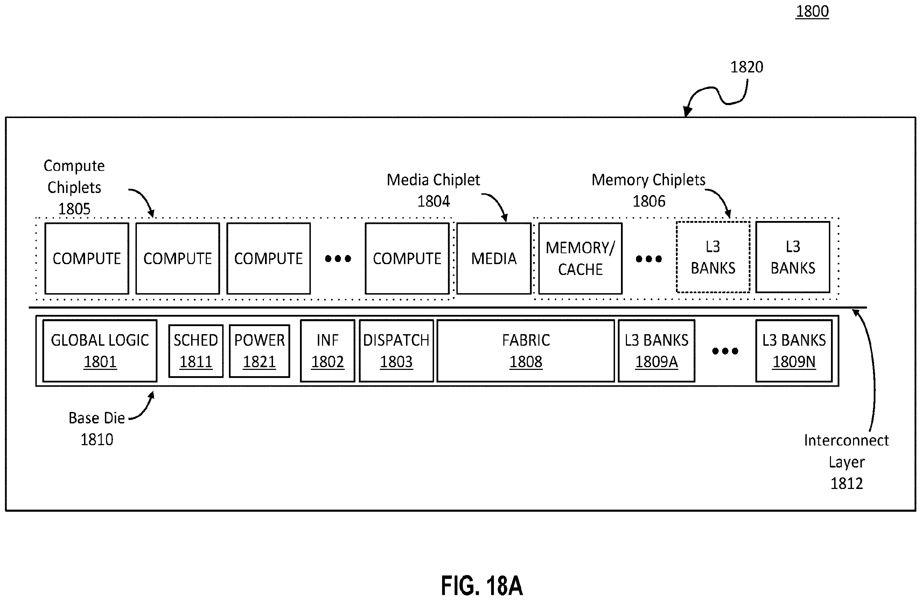

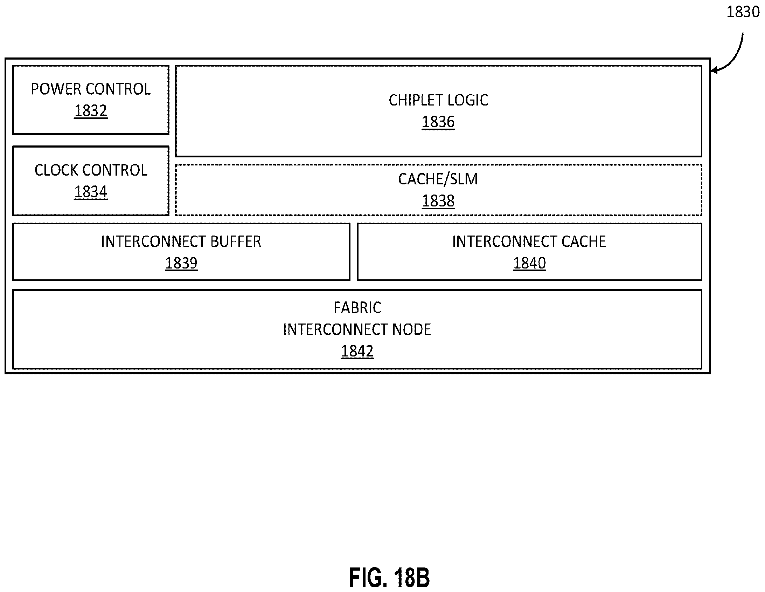

FIGS. 18A-18B illustrate a hybrid logical/physical view of a disaggregated parallel processor, according to examples described herein. FIG. 18A illustrates a disaggregated parallel compute system 1800. FIG. 18B illustrates a chiplet 1830 of the disaggregated parallel compute system 1800.

As shown in FIG. 18A, a disaggregated compute system 1800 can include a parallel processor 1820 in which the various components of the parallel processor SOC are distributed across multiple chiplets. Each chiplet can be a distinct IP core that is independently designed and configured to communicate with other chiplets via one or more common interfaces. The chiplets include but are not limited to compute chiplets 1805, a media chiplet 1804, and memory chiplets 1806. Each chiplet can be separately manufactured using different process technologies. For example, compute chiplets 1805 may be manufactured using the smallest or most advanced process technology available at the time of fabrication, while memory chiplets 1806 or other chiplets (e.g., I/O, networking, etc.) may be manufactured using a larger or less advanced process technologies.

The various chiplets can be bonded to a base die 1810 and configured to communicate with each other and logic within the base die 1810 via an interconnect layer 1812. In some examples, the base die 1810 can include global logic 1801, which can include scheduler 1811 and power management 1821 logic units, an interface 1802, a dispatch unit 1803, and an interconnect fabric module 1808 coupled with or integrated with one or more L3 cache banks 1809A-1809N. The interconnect fabric 1808 can be an inter-chiplet fabric that is integrated into the base die 1810. Logic chiplets can use the fabric 1808 to relay messages between the various chiplets. Additionally, L3 cache banks 1809A-1809N in the base die and/or L3 cache banks within the memory chiplets 1806 can cache data read from and transmitted to DRAM chiplets within the memory chiplets 1806 and to system memory of a host.

In some examples the global logic 1801 is a microcontroller that can execute firmware to perform scheduler 1811 and power management 1821 functionality for the parallel processor 1820. The microcontroller that executes the global logic can be tailored for the target use case of the parallel processor 1820. The scheduler 1811 can perform global scheduling operations for the parallel processor 1820. The power management 1821 functionality can be used to enable or disable individual chiplets within the parallel processor when those chiplets are not in use.

The various chiplets of the parallel processor 1820 can be designed to perform specific functionality that, in existing designs, would be integrated into a single die. A set of compute chiplets 1805 can include clusters of compute units (e.g., execution units, streaming multiprocessors, etc.) that include programmable logic to execute compute or graphics shader instructions. A media chiplet 1804 can include hardware logic to accelerate media encode and decode operations. Memory chiplets 1806 can include volatile memory (e.g., DRAM) and one or more SRAM cache memory banks (e.g., L3 banks).

As shown in FIG. 18B, each chiplet 1830 can include common components and application specific components. Chiplet logic 1836 within the chiplet 1830 can include the specific components of the chiplet, such as an array of streaming multiprocessors, compute units, or execution units described herein. The chiplet logic 1836 can couple with an optional cache or shared local memory 1838 or can include a cache or shared local memory within the chiplet logic 1836. The chiplet 1830 can include a fabric interconnect node 1842 that receives commands via the inter-chiplet fabric. Commands and data received via the fabric interconnect node 1842 can be stored temporarily within an interconnect buffer 1839. Data transmitted to and received from the fabric interconnect node 1842 can be stored in an interconnect cache 1840. Power control 1832 and clock control 1834 logic can also be included within the chiplet. The power control 1832 and clock control 1834 logic can receive configuration commands via the fabric can configure dynamic voltage and frequency scaling for the chiplet 1830. In some examples, each chiplet can have an independent clock domain and power domain and can be clock gated and power gated independently of other chiplets.

At least a portion of the components within the illustrated chiplet 1830 can also be included within logic embedded within the base die 1810 of FIG. 18A. For example, logic within the base die that communicates with the fabric can include a version of the fabric interconnect node 1842. Base die logic that can be independently clock or power gated can include a version of the power control 1832 and/or clock control 1834 logic.

Thus, while various examples described herein use the term SOC to describe a device or system having a processor and associated circuitry (e.g., Input/Output ("I/O") circuitry, power delivery circuitry, memory circuitry, etc.) integrated monolithically into a single Integrated Circuit ("IC") die, or chip, the present disclosure is not limited in that respect. For example, in various examples of the present disclosure, a device or system can have one or more processors (e.g., one or more processor cores) and associated circuitry (e.g., Input/Output ("I/O") circuitry, power delivery circuitry, etc.) arranged in a disaggregated collection of discrete dies, tiles and/or chiplets (e.g., one or more discrete processor core die arranged adjacent to one or more other die such as memory die, I/O die, etc.). In such disaggregated devices and systems the various dies, tiles and/or chiplets can be physically and electrically coupled together by a package structure including, for example, various packaging substrates, interposers, active interposers, photonic interposers, interconnect bridges and the like. The disaggregated collection of discrete dies, tiles, and/or chiplets can also be part of a System-on-Package ("SoP")."

Example Core Architectures - In-order and out-of-order core block diagram.

FIG. 19(A) is a block diagram illustrating both an example in-order pipeline and an example register renaming, out-of-order issue/execution pipeline according to examples. FIG. 19(B) is a block diagram illustrating both an example in-order architecture core and an example register renaming, out-of-order issue/execution architecture core to be included in a processor according to examples. The solid lined boxes in FIGS. 19(A)-(B) illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 19(A), a processor pipeline 1900 includes a fetch stage 1902, an optional length decoding stage 1904, a decode stage 1906, an optional allocation (Alloc) stage 1908, an optional renaming stage 1910, a schedule (also known as a dispatch or issue) stage 1912, an optional register read/memory read stage 1914, an execute stage 1916, a write back/memory write stage 1918, an optional exception handling stage 1922, and an optional commit stage 1924. One or more operations can be performed in each of these processor pipeline stages. For example, during the fetch stage 1902, one or more instructions are fetched from instruction memory, and during the decode stage 1906, the one or more fetched instructions may be decoded, addresses (e.g., load store unit (LSU) addresses) using forwarded register ports may be generated, and branch forwarding (e.g., immediate offset or a link register (LR)) may be performed. In some examples, the decode stage 1906 and the register read/memory read stage 1914 may be combined into one pipeline stage. In some examples, during the execute stage 1916, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of FIG. 19(B) may implement the pipeline 1900 as follows: 1) the instruction fetch circuitry 1938 performs the fetch and length decoding stages 1902 and 1904; 2) the decode circuitry 1940 performs the decode stage 1906; 3) the rename/allocator unit circuitry 1952 performs the allocation stage 1908 and renaming stage 1910; 4) the scheduler(s) circuitry 1956 performs the schedule stage 1912; 5) the physical register file(s) circuitry 1958 and the memory unit circuitry 1970 perform the register read/memory read stage 1914; the execution cluster(s) 1960 perform the execute stage 1916; 6) the memory unit circuitry 1970 and the physical register file(s) circuitry 1958 perform the write back/memory write stage 1918; 7) various circuitry may be involved in the exception handling stage 1922; and 8) the retirement unit circuitry 1954 and the physical register file(s) circuitry 1958 perform the commit stage 1924.

FIG. 19(B) shows a processor core 1990 including front-end unit circuitry 1930 coupled to execution engine unit circuitry 1950, and both are coupled to memory unit circuitry 1970. The core 1990 may be a reduced instruction set architecture computing (RISC) core, a complex instruction set architecture computing (CISC) core, a very long instruction word (VLIW) core, or a hybrid or alternative core type. As yet another option, the core 1990 may be a special-purpose core, such as, for example, a network or communication core, compression engine, coprocessor core, general purpose computing graphics processing unit (GPGPU) core, graphics core, or the like.

The front-end unit circuitry 1930 may include branch prediction circuitry 1932 coupled to instruction cache circuitry 1934, which is coupled to an instruction translation lookaside buffer (TLB) 1936, which is coupled to instruction fetch circuitry 1938, which is coupled to decode circuitry 1940. In some examples, the instruction cache circuitry 1934 is included in the memory unit circuitry 1970 rather than the front-end circuitry 1930. The decode circuitry 1940 (or decoder) may decode instructions, and generate as an output one or more micro-operations, microcode entry points, microinstructions, other instructions, or other control signals, which are decoded from, or which otherwise reflect, or are derived from, the original instructions. The decode circuitry 1940 may further include address generation unit (AGU, not shown) circuitry. In some examples, the AGU generates an LSU address using forwarded register ports, and may further perform branch forwarding (e.g., immediate offset branch forwarding, LR register branch forwarding, etc.). The decode circuitry 1940 may be implemented using various different mechanisms. Examples of suitable mechanisms include, but are not limited to, look-up tables, hardware implementations, programmable logic arrays (PLAs), microcode read only memories (ROMs), etc. In some examples, the core 1990 includes a microcode ROM (not shown) or other medium that stores microcode for certain macroinstructions (e.g., in decode circuitry 1940 or otherwise within the front-end circuitry 1930). In some examples, the decode circuitry 1940 includes a micro-operation (micro-op) or operation cache (not shown) to hold/cache decoded operations, micro-tags, or micro-operations generated during the decode or other stages of the processor pipeline 1900. The decode circuitry 1940 may be coupled to rename/allocator unit circuitry 1952 in the execution engine circuitry 1950.

The execution engine circuitry 1950 includes the rename/allocator unit circuitry 1952 coupled to retirement unit circuitry 1954 and a set of one or more scheduler(s) circuitry 1956. The scheduler(s) circuitry 1956 represents any number of different schedulers, including reservations stations, central instruction window, etc. In some examples, the scheduler(s) circuitry 1956 can include arithmetic logic unit (ALU) scheduler/scheduling circuitry, ALU queues, address generation unit (AGU) scheduler/scheduling circuitry, AGU queues, etc. The scheduler(s) circuitry 1956 is coupled to the physical register file(s) circuitry 1958. Each of the physical register file(s) circuitry 1958 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In some examples, the physical register file(s) circuitry 1958 includes vector registers unit circuitry, writemask registers unit circuitry, and scalar register unit circuitry. These register units may provide architectural vector registers, vector mask registers, general-purpose registers, etc. The physical register file(s) circuitry 1958 is coupled to the retirement unit circuitry 1954 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 1954 and the physical register file(s) circuitry 1958 are coupled to the execution cluster(s) 1960. The execution cluster(s) 1960 includes a set of one or more execution unit(s) circuitry 1962 and a set of one or more memory access circuitry 1964. The execution unit(s) circuitry 1962 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 1956, physical register file(s) circuitry 1958, and execution cluster(s) 1960 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 1964). It should also be understood that where separate pipelines are used, one or more of these pipelines may be out-of-order issue/execution and the rest in-order.

In some examples, the execution engine unit circuitry 1950 may perform load store unit (LSU) address/data pipelining to an Advanced Microcontroller Bus (AMB) interface (not shown), and address phase and writeback, data phase load, store, and branches.

The set of memory access circuitry 1964 is coupled to the memory unit circuitry 1970, which includes data TLB circuitry 1972 coupled to data cache circuitry 1974 coupled to level 2 (L2) cache circuitry 1976. In some examples, the memory access circuitry 1964 may include load unit circuitry, store address unit circuitry, and store data unit circuitry, each of which is coupled to the data TLB circuitry 1972 in the memory unit circuitry 1970. The instruction cache circuitry 1934 is further coupled to the level 2 (L2) cache circuitry 1976 in the memory unit circuitry 1970. In some examples, the instruction cache 1934 and the data cache 1974 are combined into a single instruction and data cache (not shown) in L2 cache circuitry 1976, level 3 (L3) cache circuitry (not shown), and/or main memory. The L2 cache circuitry 1976 is coupled to one or more other levels of cache and eventually to a main memory.

The core 1990 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In some examples, the core 1990 includes logic to support a packed data instruction set architecture extension (e.g., AVX1, AVX2), thereby allowing the operations used by many multimedia applications to be performed using packed data.

Example Execution Unit(s) Circuitry.

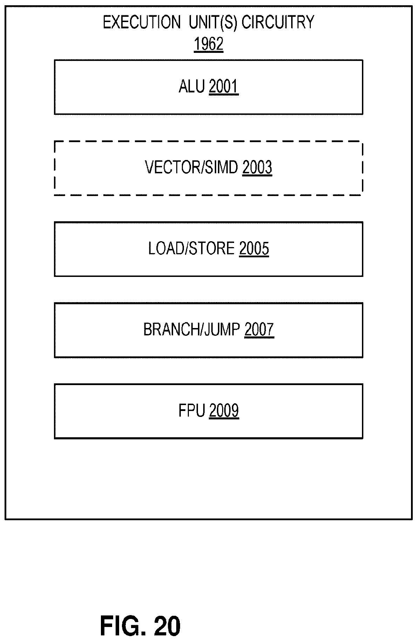

FIG. 20 illustrates examples of execution unit(s) circuitry, such as execution unit(s) circuitry 1962 of FIG. 19(B). As illustrated, execution unit(s) circuity 1962 may include one or more ALU circuits 2001, optional vector/single instruction multiple data (SIMD) circuits 2003, load/store circuits 2005, branch/jump circuits 2007, and/or Floating-point unit (FPU) circuits 2009. ALU circuits 2001 perform integer arithmetic and/or Boolean operations. Vector/SIMD circuits 2003 perform vector/SnVID operations on packed data (such as SIMD/vector registers). Load/store circuits 2005 execute load and store instructions to load data from memory into registers or store from registers to memory. Load/store circuits 2005 may also generate addresses. Branch/jump circuits 2007 cause a branch or jump to a memory address depending on the instruction. FPU circuits 2009 perform floating-point arithmetic. The width of the execution unit(s) circuitry 1962 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

Example Register Architecture.

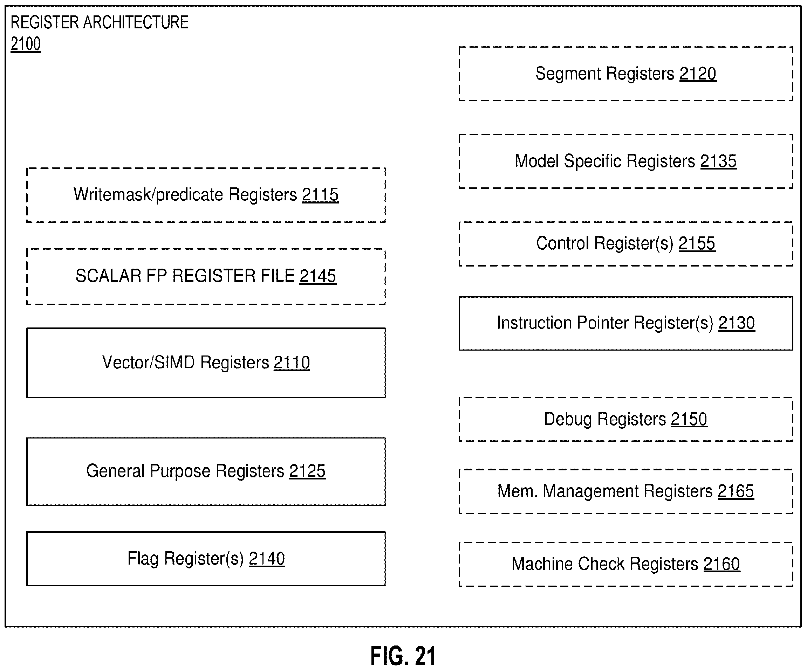

FIG. 21 is a block diagram of a register architecture 2100 according to some examples. As illustrated, the register architecture 2100 includes vector/SIMD registers 2110 that vary from 128-bit to 1,024 bits width. In some examples, the vector/SIMD registers 2110 are physically 512-bits and, depending upon the mapping, only some of the lower bits are used. For example, in some examples, the vector/SIMD registers 2110 are ZMM registers which are 512 bits: the lower 256 bits are used for YMM registers and the lower 128 bits are used for XMM registers. As such, there is an overlay of registers. In some examples, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the example.

In some examples, the register architecture 2100 includes writemask/predicate registers 2115. For example, in some examples, there are 8 writemask/predicate registers (sometimes called k0 through k7) that are each 16-bit, 32-bit, 64-bit, or 128-bit in size. Writemask/predicate registers 2115 may allow for merging (e.g., allowing any set of elements in the destination to be protected from updates during the execution of any operation) and/or zeroing (e.g., zeroing vector masks allow any set of elements in the destination to be zeroed during the execution of any operation). In some examples, each data element position in a given writemask/predicate register 2115 corresponds to a data element position of the destination. In other examples, the writemask/predicate registers 2115 are scalable and consists of a set number of enable bits for a given vector element (e.g., 8 enable bits per 64-bit vector element).

The register architecture 2100 includes a plurality of general-purpose registers 2125. These registers may be 16-bit, 32-bit, 64-bit, etc. and can be used for scalar operations. In some examples, these registers are referenced by the names RAX, RBX, RCX, RDX, RBP, RSI, RDI, RSP, and R8 through R15.

In some examples, the register architecture 2100 includes scalar floating-point (FP) register file 2145 which is used for scalar floating-point operations on 32/64/80-bit floating-point data using the x87 instruction set architecture extension or as MMX registers to perform operations on 64-bit packed integer data, as well as to hold operands for some operations performed between the MMX and XMM registers.

One or more flag registers 2140 (e.g., EFLAGS, RFLAGS, etc.) store status and control information for arithmetic, compare, and system operations. For example, the one or more flag registers 2140 may store condition code information such as carry, parity, auxiliary carry, zero, sign, and overflow. In some examples, the one or more flag registers 2140 are called program status and control registers.

Segment registers 2120 contain segment points for use in accessing memory. In some examples, these registers are referenced by the names CS, DS, SS, ES, FS, and GS.

Model specific registers or machine specific registers (MSRs) 2135 control and report on processor performance. Most MSRs 2135 handle system-related functions and are not accessible to an application program. For example, MSRs may provide control for one or more of: performance-monitoring counters, debug extensions, memory type range registers, thermal and power management, instruction-specific support, and/or processor feature/mode support. Machine check registers 2160 consist of control, status, and error reporting MSRs that are used to detect and report on hardware errors. Control register(s) 2155 (e.g., CR0-CR4) determine the operating mode of a processor (e.g., processor 1270, 1280, 1238, 1215, and/or 1300) and the characteristics of a currently executing task. In some examples, MSRs 2135 are a subset of control registers 2155.

One or more instruction pointer register(s) 2130 store an instruction pointer value. Debug registers 2150 control and allow for the monitoring of a processor or core's debugging operations.

Memory (mem) management registers 2165 specify the locations of data structures used in protected mode memory management. These registers may include a global descriptor table register (GDTR), interrupt descriptor table register (IDTR), task register, and a local descriptor table register (LDTR) register.

Alternative examples may use wider or narrower registers. Additionally, alternative examples may use more, less, or different register files and registers. The register architecture 2100 may, for example, be used in register file / memory 708, or physical register file(s) circuitry 1958.

Instruction set architectures.

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down through the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an example ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. In addition, though the description below is made in the context of x86 ISA, it is within the knowledge of one skilled in the art to apply the teachings of the present disclosure in another ISA.

Example Instruction Formats.

Examples of the instruction(s) described herein may be embodied in different formats. Additionally, example systems, architectures, and pipelines are detailed below. Examples of the instruction(s) may be executed on such systems, architectures, and pipelines, but are not limited to those detailed.

FIG. 22 illustrates examples of an instruction format. As illustrated, an instruction may include multiple components including, but not limited to, one or more fields for: one or more prefixes 2201, an opcode 2203, addressing information 2205 (e.g., register identifiers, memory addressing information, etc.), a displacement value 2207, and/or an immediate value 2209. Note that some instructions utilize some or all the fields of the format whereas others may only use the field for the opcode 2203. In some examples, the order illustrated is the order in which these fields are to be encoded, however, it should be appreciated that in other examples these fields may be encoded in a different order, combined, etc.

The prefix(es) field(s) 2201, when used, modifies an instruction. In some examples, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 2203 is used to at least partially define the operation to be performed upon a decoding of the instruction. In some examples, a primary opcode encoded in the opcode field 2203 is one, two, or three bytes in length. In other examples, a primary opcode can be a different length. An additional 3-bit opcode field is sometimes encoded in another field.

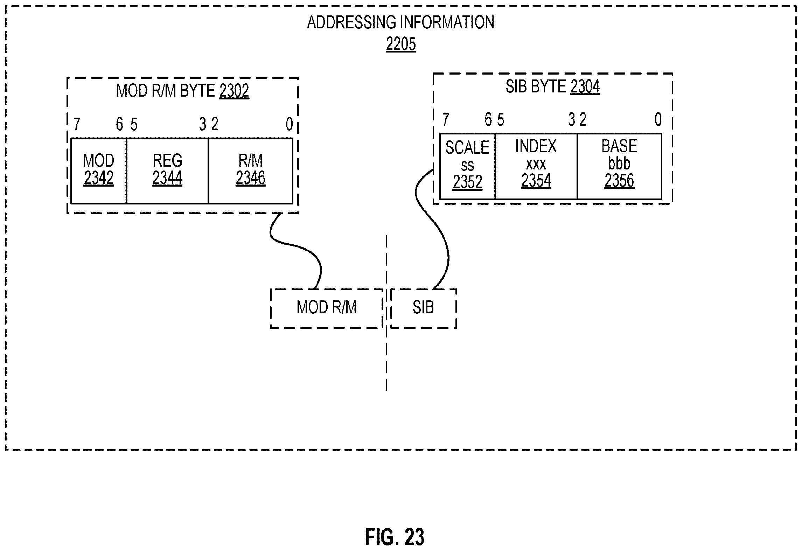

The addressing information field 2205 is used to address one or more operands of the instruction, such as a location in memory or one or more registers. FIG. 23 illustrates examples of the addressing information field 2205. In this illustration, an optional MOD R/M byte 2302 and an optional Scale, Index, Base (SIB) byte 2304 are shown. The MOD R/M byte 2302 and the SIB byte 2304 are used to encode up to two operands of an instruction, each of which is a direct register or effective memory address. Note that both of these fields are optional in that not all instructions include one or more of these fields. The MOD R/M byte 2302 includes a MOD field 2342, a register (reg) field 2344, and R/M field 2346.

The content of the MOD field 2342 distinguishes between memory access and non-memory access modes. In some examples, when the MOD field 2342 has a binary value of 11 (11b), a register-direct addressing mode is utilized, and otherwise a register-indirect addressing mode is used.

The register field 2344 may encode either the destination register operand or a source register operand or may encode an opcode extension and not be used to encode any instruction operand. The content of register field 2344, directly or through address generation, specifies the locations of a source or destination operand (either in a register or in memory). In some examples, the register field 2344 is supplemented with an additional bit from a prefix (e.g., prefix 2201) to allow for greater addressing.

The R/M field 2346 may be used to encode an instruction operand that references a memory address or may be used to encode either the destination register operand or a source register operand. Note the R/M field 2346 may be combined with the MOD field 2342 to dictate an addressing mode in some examples.

The SIB byte 2304 includes a scale field 2352, an index field 2354, and a base field 2356 to be used in the generation of an address. The scale field 2352 indicates a scaling factor. The index field 2354 specifies an index register to use. In some examples, the index field 2354 is supplemented with an additional bit from a prefix (e.g., prefix 2201) to allow for greater addressing. The base field 2356 specifies a base register to use. In some examples, the base field 2356 is supplemented with an additional bit from a prefix (e.g., prefix 2201) to allow for greater addressing. In practice, the content of the scale field 2352 allows for the scaling of the content of the index field 2354 for memory address generation (e.g., for address generation that uses $2^{scale}$ * index + base).

Some addressing forms utilize a displacement value to generate a memory address. For example, a memory address may be generated according to $2^{scale}$ * index + base + displacement, index*scale + displacement, r/m + displacement, instruction pointer (RIP/EIP) + displacement, register + displacement, etc. The displacement may be a 1-byte, 2-byte, 4-byte, etc. value. In some examples, the displacement field 2207 provides this value. Additionally, in some examples, a displacement factor usage is encoded in the MOD field of the addressing information field 2205 that indicates a compressed displacement scheme for which a displacement value is calculated and stored in the displacement field 2207.

In some examples, the immediate value field 2209 specifies an immediate value for the instruction. An immediate value may be encoded as a 1-byte value, a 2-byte value, a 4-byte value, etc.

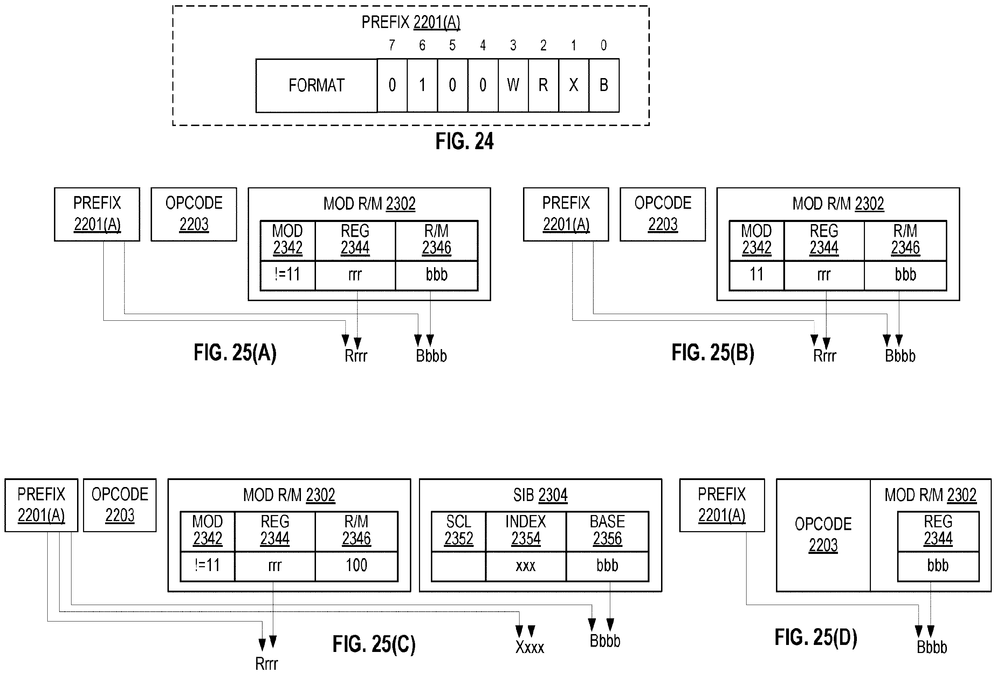

FIG. 24 illustrates examples of a first prefix 2201(A). In some examples, the first prefix 2201(A) is an example of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 2201(A) may specify up to three registers using 3-bit fields depending on the format: 1) using the reg field 2344 and the R/M field 2346 of the MOD R/M byte 2302; 2) using the MOD R/M byte 2302 with the SIB byte 2304 including using the reg field 2344 and the base field 2356 and index field 2354; or 3) using the register field of an opcode.

In the first prefix 2201(A), bit positions of the payload byte 7:4 are set as 0100. Bit position 3 (W) can be used to determine the operand size but may not solely determine operand width. As such, when W = 0, the operand size is determined by a code segment descriptor (CS.D) and when W = 1, the operand size is 64-bit.

Note that the addition of another bit allows for 16 ($2^4$) registers to be addressed, whereas the MOD R/M reg field 2344 and MOD R/M R/M field 2346 alone can each only address 8 registers.

In the first prefix 2201(A), bit position 2 (R) may be an extension of the MOD R/M reg field 2344 and may be used to modify the MOD R/M reg field 2344 when that field encodes a general-purpose register, a 64-bit packed data register (e.g., a SSE register), or a control or debug register. R is ignored when MOD R/M byte 2302 specifies other registers or defines an extended opcode.

Bit position 1 (X) may modify the SIB byte index field 2354.

Bit position 0 (B) may modify the base in the MOD R/M R/M field 2346 or the SIB byte base field 2356; or it may modify the opcode register field used for accessing general purpose registers (e.g., general purpose registers 2125).

FIGS. 25(A)-(D) illustrate examples of how the R, X, and B fields of the first prefix 2201(A) are used. FIG. 25(A) illustrates R and B from the first prefix 2201(A) being used to extend the reg field 2344 and R/M field 2346 of the MOD R/M byte 2302 when the SIB byte 23 04 is not used for memory addressing. FIG. 25(B) illustrates R and B from the first prefix 2201(A) being used to extend the reg field 2344 and R/M field 2346 of the MOD R/M byte 2302 when the SIB byte 23 04 is not used (register-register addressing). FIG. 25(C) illustrates R, X, and B from the first prefix 2201(A) being used to extend the reg field 2344 of the MOD R/M byte 2302 and the index field 2354 and base field 2356 when the SIB byte 23 04 being used for memory addressing. FIG. 25(D) illustrates B from the first prefix 2201(A) being used to extend the reg field 2344 of the MOD R/M byte 2302 when a register is encoded in the opcode 2203.

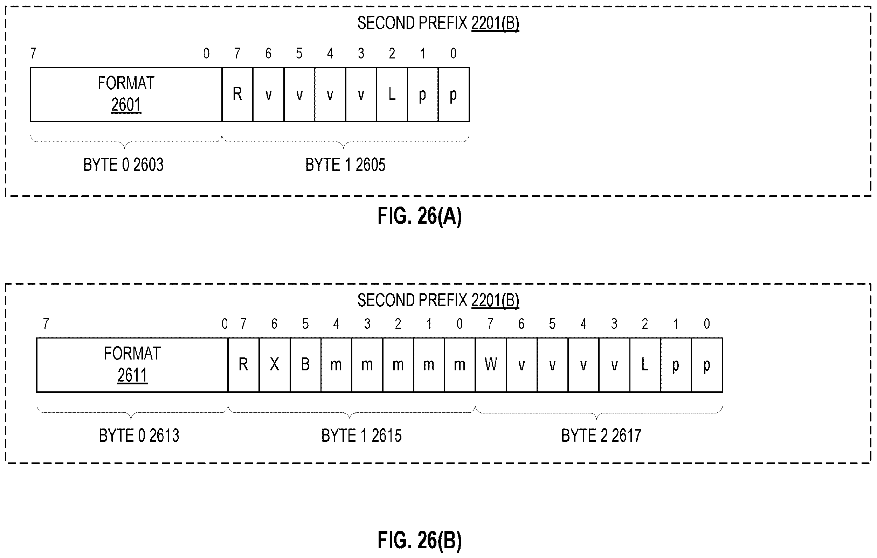

FIGS. 26(A)-(B) illustrate examples of a second prefix 2201(B). In some examples, the second prefix 2201(B) is an example of a VEX prefix. The second prefix 2201(B) encoding allows instructions to have more than two operands, and allows SIMD vector registers (e.g., vector/SIMD registers 2110) to be longer than 64-bits (e.g., 128-bit and 256-bit). The use of the second prefix 2201(B) provides for three-operand (or more) syntax. For example, previous two-operand instructions performed operations such as A = A + B, which overwrites a source operand. The use of the second prefix 2201(B) enables operands to perform nondestructive operations such as A = B + C.

In some examples, the second prefix 2201(B) comes in two forms - a two-byte form and a three-byte form. The two-byte second prefix 2201(B) is used mainly for 128-bit, scalar, and some 256-bit instructions; while the three-byte second prefix 2201(B) provides a compact replacement of the first prefix 2201(A) and 3-byte opcode instructions.

FIG. 26(A) illustrates examples of a two-byte form of the second prefix 2201(B). In some examples, a format field 2601 (byte 0 2603) contains the value C5H. In some examples, byte 1 2605 includes an "R" value in bit[7]. This value is the complement of the "R" value of the first prefix 2201(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 2346 to encode the instruction operand that references a memory address or encode either the destination register operand or a source register operand.

Instructions that use this prefix may use the MOD R/M reg field 2344 to encode either the destination register operand or a source register operand, or to be treated as an opcode extension and not used to encode any instruction operand.

For instruction syntax that support four operands, vvvv, the MOD R/M R/M field 2346 and the MOD R/M reg field 2344 encode three of the four operands. Bits[7:4] of the immediate value field 2209 are then used to encode the third source register operand.

FIG. 26(B) illustrates examples of a three-byte form of the second prefix 2201(B). In some examples, a format field 2611 (byte 0 2613) contains the value C4H. Byte 1 2615 includes in bits[7:5] "R," "X," and "B" which are the complements of the same values of the first prefix 2201(A). Bits[4:0] of byte 1 2615 (shown as mmmmm) include content to encode, as need, one or more implied leading opcode bytes. For example, 00001 implies a 0FH leading opcode, 00010 implies a 0F38H leading opcode, 00011 implies a 0F3AH leading opcode, etc.

Bit[7] of byte 2 2617 is used similar to W of the first prefix 2201(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 2346 to encode the instruction operand that references a memory address or encode either the destination register operand or a source register operand.

Instructions that use this prefix may use the MOD R/M reg field 2344 to encode either the destination register operand or a source register operand, or to be treated as an opcode extension and not used to encode any instruction operand.

For instruction syntax that support four operands, vvvv, the MOD R/M R/M field 2346, and the MOD R/M reg field 2344 encode three of the four operands. Bits[7:4] of the immediate value field 2209 are then used to encode the third source register operand.

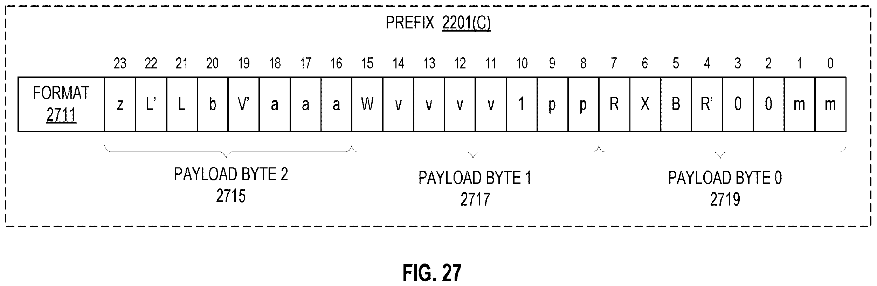

FIG. 27 illustrates examples of a third prefix 2201(C). In some examples, the third prefix 2201(C) is an example of an EVEX prefix. The third prefix 2201(C) is a four-byte prefix.

The third prefix 2201(C) can encode 32 vector registers (e.g., 128-bit, 256-bit, and 512-bit registers) in 64-bit mode. In some examples, instructions that utilize a writemask/opmask (see discussion of registers in a previous figure, such as FIG. 21) or predication utilize this prefix. Opmask register allow for conditional processing or selection control. Opmask instructions, whose source/destination operands are opmask registers and treat the content of an opmask register as a single value, are encoded using the second prefix 2201(B).

The third prefix 2201(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 2201(C) is a format field 2711 that has a value, in some examples, of 62H. Subsequent bytes are referred to as payload bytes 2715-2719 and collectively form a 24-bit value of P[23:0] providing specific capability in the form of one or more fields (detailed herein).

In some examples, P[1:0] of payload byte 2719 are identical to the low two mm bits. P[3:2] are reserved in some examples. Bit P[4] (R') allows access to the high 16 vector register set when combined with P[7] and the MOD R/M reg field 2344. P[6] can also provide access to a high 16 vector register when SIB-type addressing is not needed. P[7:5] consist of R, X, and B which are operand specifier modifier bits for vector register, general purpose register, memory addressing and allow access to the next set of 8 registers beyond the low 8 registers when combined with the MOD R/M register field 2344 and MOD R/M R/M field 2346. P[9:8] provide opcode extensionality equivalent to some legacy prefixes (e.g., 00 = no prefix, 01 = 66H, 10 = F3H, and 11 = F2H). P[10] in some examples is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 2201(A) and second prefix 2211(B) and may serve as an opcode extension bit or operand size promotion.

P[18:16] specify the index of a register in the opmask (writemask) registers (e.g., writemask/predicate registers 2115). In some examples, the specific value aaa = 000 has a special behavior implying no opmask is used for the particular instruction (this may be implemented in a variety of ways including the use of a opmask hardwired to all ones or hardware that bypasses the masking hardware). When merging, vector masks allow any set of elements in the destination to be protected from updates during the execution of any operation (specified by the base operation and the augmentation operation); in other some examples, preserving the old value of each element of the destination where the corresponding mask bit has a 0. In contrast, when zeroing vector masks allow any set of elements in the destination to be zeroed during the execution of any operation (specified by the base operation and the augmentation operation); in some examples, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While examples are described in which the opmask field's content selects one of a number of opmask registers that contains the opmask to be used (and thus the opmask field's content indirectly identifies that masking to be performed), alternative examples instead or additional allow the mask write field's content to directly specify the masking to be performed.

P[19] can be combined with P[14:11] to encode a second source vector register in a non-destructive source syntax which can access an upper 16 vector registers using P[19]. P[20] encodes multiple functionalities, which differs across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Example examples of encoding of registers in instructions using the third prefix 2201(C) are detailed in the following tables.

| | 4 | 3 | [2:0] | REG. TYPE | COMMON USAGES |
|---|---|---|---|---|---|
| REG | R' | R | MOD R/M reg | GPR, Vector | Destination or Source |
| VVVV | V' | | vvvv | GPR, Vector | 2nd Source or Destination |
| RM | X | B | MOD R/M R/M | GPR, Vector | 1st Source or Destination |
| BASE | 0 | B | MOD R/M R/M | GPR | Memory addressing |
| INDEX | 0 | X | SIB.index | GPR | Memory addressing |
| VIDX | V' | X | SIB.index | Vector | VSIB memory addressing |

Table 1: 32-Register Support in 64-bit Mode

| | [2:0] | REG. TYPE | COMMON USAGES |
|---|---|---|---|
| REG | MOD R/M reg | GPR, Vector | Destination or Source |
| VVVV | vvvv | GPR, Vector | 2nd Source or Destination |
| RM | MOD R/M R/M | GPR, Vector | 1st Source or Destination |

Table 2: Encoding Register Specifiers in 32-bit Mode

| | | | |
|---|---|---|---|
| BASE | MOD R/M R/M | GPR | Memory addressing |
| INDEX | SIB.index | GPR | Memory addressing |
| VIDX | SIB.index | Vector | VSIB memory addressing |

Table 3: Opmask Register Specifier Encoding

| | [2:0] | REG. TYPE | COMMON USAGES |
|---|---|---|---|
| REG | MOD R/M Reg | k0-k7 | Source |
| VVVV | vvvv | k0-k7 | 2nd Source |
| RM | MOD R/M R/M | k0-k7 | 1st Source |
| {k1} | aaa | k0-k7 | Opmask |

Graphics Execution Units

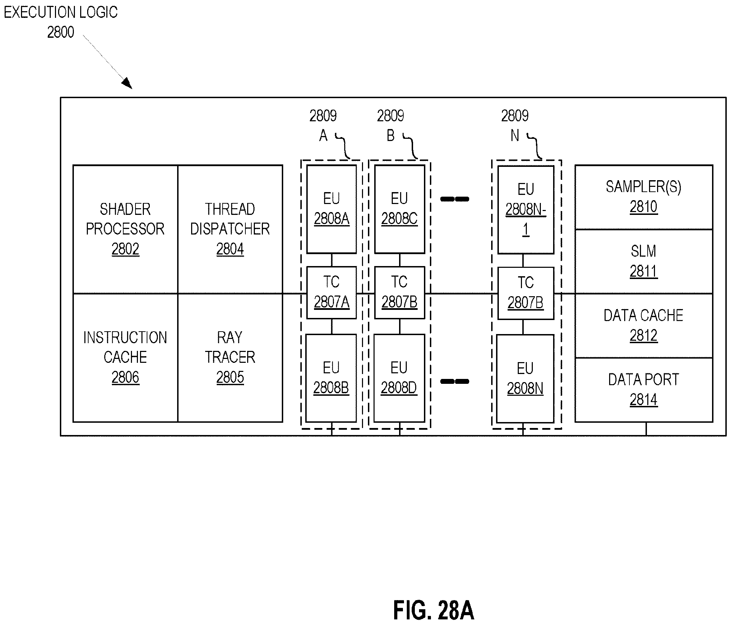

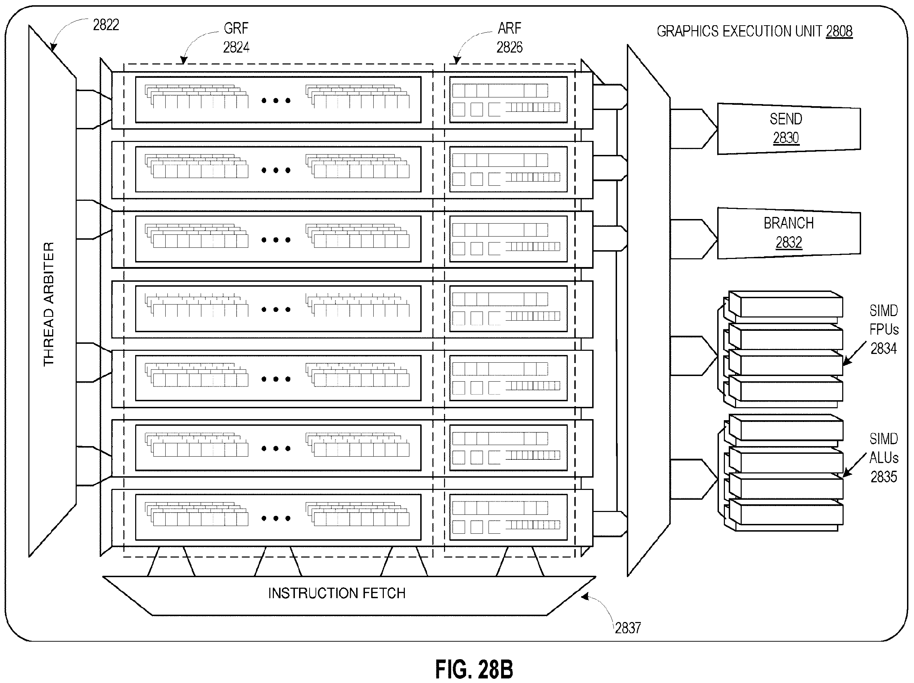

FIGS. 28A-28B illustrate thread execution logic 2800 including an array of processing elements employed in a graphics processor core according to examples described herein. Elements of Figures 28A-28B having the same reference numbers (or names) as the elements of any other figure herein can operate or function in any manner similar to that described elsewhere herein, but are not limited to such. Figure 28A is representative of an execution unit within a general-purpose graphics processor, while Figure 28B is representative of an execution unit that may be used within a compute accelerator.

As illustrated in Figure 28A, in some examples thread execution logic 2800 includes a shader processor 2802, a thread dispatcher 2804, instruction cache 2806, a scalable execution unit array including a plurality of execution units 2808A-2808N, a sampler 2810, shared local memory 2811, a data cache 2812, and a data port 2814. In some examples the scalable execution unit array can dynamically scale by enabling or disabling one or more execution units (e.g., any of execution units 2808A, 2808B, 2808C, 2808D, through 2808N-1 and 2808N) based on the computational requirements of a workload. In some examples the included components are interconnected via an interconnect fabric that links to each of the components. In some examples, thread execution logic 2800 includes one or more connections to memory, such as system memory or cache memory, through one or more of instruction cache 2806, data port 2814, sampler 2810, and execution units 2808A-2808N. In some examples, each execution unit (e.g. 2808A) is a stand-alone programmable general-purpose computational unit that is capable of executing multiple simultaneous hardware threads while processing multiple data elements in parallel for each thread. In various examples, the array of execution units 2808A-2808N is scalable to include any number individual execution units.

In some examples, the execution units 2808A-2808N are primarily used to execute shader programs. A shader processor 2802 can process the various shader programs and dispatch execution threads associated with the shader programs via a thread dispatcher 2804. In some examples the thread dispatcher includes logic to arbitrate thread initiation requests from the graphics and media pipelines and instantiate the requested threads on one or more execution unit in the execution units 2808A-2808N. For example, a geometry pipeline can dispatch vertex, tessellation, or geometry shaders to the thread execution logic for processing. In some examples, thread dispatcher 2804 can also process runtime thread spawning requests from the executing shader programs.

In some examples, the execution units 2808A-2808N support an instruction set that includes native support for many standard 3D graphics shader instructions, such that shader programs from graphics libraries (e.g., Direct 3D and OpenGL) are executed with a minimal translation. The execution units support vertex and geometry processing (e.g., vertex programs, geometry programs, vertex shaders), pixel processing (e.g., pixel shaders, fragment shaders) and general-purpose processing (e.g., compute and media shaders). Each of the execution units 2808A-2808N is capable of multi-issue single instruction multiple data (SIMD) execution and multi-threaded operation enables an efficient execution environment in the face of higher latency memory accesses. Each hardware thread within each execution unit has a dedicated high-bandwidth register file and associated independent thread-state. Execution is multi-issue per clock to pipelines capable of integer, single and double precision floating point operations, SIMD branch capability, logical operations, transcendental operations, and other miscellaneous operations. While waiting for data from memory or one of the shared functions, dependency logic within the execution units 2808A-2808N causes a waiting thread to sleep until the requested data has been returned. While the waiting thread is sleeping, hardware resources may be devoted to processing other threads. For example, during a delay associated with a vertex shader operation, an execution unit can perform operations for a pixel shader, fragment shader, or another type of shader program, including a different vertex shader. Various examples can apply to use execution by use of Single Instruction Multiple Thread (SIMT) as an alternate to use of SIMD or in addition to use of SIMD. Reference to a SIMD core or operation can apply also to SIMT or apply to SIMD in combination with SIMT.

Each execution unit in execution units 2808A-2808N operates on arrays of data elements. The number of data elements is the "execution size," or the number of channels for the instruction. An execution channel is a logical unit of execution for data element access, masking, and flow control within instructions. The number of channels may be independent of the number of physical Arithmetic Logic Units (ALUs) or Floating Point Units (FPUs) for a particular graphics processor. In some examples, execution units 2808A-2808N support integer and floating-point data types.

The execution unit instruction set includes SIMD instructions. The various data elements can be stored as a packed data type in a register and the execution unit will process the various elements based on the data size of the elements. For example, when operating on a 256-bit wide vector, the 256 bits of the vector are stored in a register and the execution unit operates on the vector as four separate 64-bit packed data elements (Quad-Word (QW) size data elements), eight separate 32-bit packed data elements (Double Word (DW) size data elements), sixteen separate 16-bit packed data elements (Word (W) size data elements), or thirty-two separate 8-bit data elements (byte (B) size data elements). However, different vector widths and register sizes are possible.

In some examples one or more execution units can be combined into a fused execution unit 2809A-2809N having thread control logic (2807A-2807N) that is common to the fused EUs. Multiple EUs can be fused into an EU group. Each EU in the fused EU group can be configured to execute a separate SIMD hardware thread. The number of EUs in a fused EU group can vary according to examples. Additionally, various SIMD widths can be performed per-EU, including but not limited to SIMD8, SIMD16, and SIMD32. Each fused graphics execution unit 2809A-2809N includes at least two execution units. For example, fused execution unit 2809A includes a first EU 2808A, second EU 2808B, and thread control logic 2807A that is common to the first EU 2808A and the second EU 2808B. The thread control logic 2807A controls threads executed on the fused graphics execution unit 2809A, allowing each EU within the fused execution units 2809A-2809N to execute using a common instruction pointer register.

One or more internal instruction caches (e.g., 2806) are included in the thread execution logic 2800 to cache thread instructions for the execution units. In some examples, one or more data caches (e.g., 2812) are included to cache thread data during thread execution. Threads executing on the execution logic 2800 can also store explicitly managed data in the shared local memory 2811. In some examples, a sampler 2810 is included to provide texture sampling for 3D operations and media sampling for media operations. In some examples, sampler 2810 includes specialized texture or media sampling functionality to process texture or media data during the sampling process before providing the sampled data to an execution unit.

During execution, the graphics and media pipelines send thread initiation requests to thread execution logic 2800 via thread spawning and dispatch logic. Once a group of geometric objects has been processed and rasterized into pixel data, pixel processor logic (e.g., pixel shader logic, fragment shader logic, etc.) within the shader processor 2802 is invoked to further compute output information and cause results to be written to output surfaces (e.g., color buffers, depth buffers, stencil buffers, etc.). In some examples, a pixel shader or fragment shader calculates the values of the various vertex attributes that are to be interpolated across the rasterized object. In some examples, pixel processor logic within the shader processor 2802 then executes an application programming interface (API)-supplied pixel or fragment shader program. To execute the shader program, the shader processor 2802 dispatches threads to an execution unit (e.g., 2808A) via thread dispatcher 2804. In some examples, shader processor 2802 uses texture sampling logic in the sampler 2810 to access texture data in texture maps stored in memory. Arithmetic operations on the texture data and the input geometry data compute pixel color data for each geometric fragment, or discards one or more pixels from further processing.

In some examples, the data port 2814 provides a memory access mechanism for the thread execution logic 2800 to output processed data to memory for further processing on a graphics processor output pipeline. In some examples, the data port 2814 includes or couples to one or more cache memories (e.g., data cache 2812) to cache data for memory access via the data port.

In some examples, the execution logic 2800 can also include a ray tracer 2805 that can provide ray tracing acceleration functionality. The ray tracer 2805 can support a ray tracing instruction set that includes instructions/functions for ray generation.

Figure 28B illustrates exemplary internal details of an execution unit 2808, according to examples. A graphics execution unit 2808 can include an instruction fetch unit 2837, a general register file array (GRF) 2824, an architectural register file array (ARF) 2826, a thread arbiter 2822, a send unit 2830, a branch unit 2832, a set of SIMD floating point units (FPUs) 2834, and in some examples a set of dedicated integer SIMD ALUs 2835. The GRF 2824 and ARF 2826 includes the set of general register files and architecture register files associated with each simultaneous hardware thread that may be active in the graphics execution unit 2808. In some examples, per thread architectural state is maintained in the ARF 2826, while data used during thread execution is stored in the GRF 2824. The execution state of each thread, including the instruction pointers for each thread, can be held in thread-specific registers in the ARF 2826.

In some examples the graphics execution unit 2808 has an architecture that is a combination of Simultaneous Multi-Threading (SMT) and fine-grained Interleaved Multi-Threading (IMT). The architecture has a modular configuration that can be fine-tuned at design time based on a target number of simultaneous threads and number of registers per execution unit, where execution unit resources are divided across logic used to execute multiple simultaneous threads. The number of logical threads that may be executed by the graphics execution unit 2808 is not limited to the number of hardware threads, and multiple logical threads can be assigned to each hardware thread.

In some examples, the graphics execution unit 2808 can co-issue multiple instructions, which may each be different instructions. The thread arbiter 2822 of the graphics execution unit thread 2808 can dispatch the instructions to one of the send unit 2830, branch unit 2832, or SIMD FPU(s) 2834 for execution. Each execution thread can access 128 general-purpose registers within the GRF 2824, where each register can store 32 bytes, accessible as a SIMD 8-element vector of 32-bit data elements. In some examples, each execution unit thread has access to 4 Kbytes within the GRF 2824, although examples are not so limited, and greater or fewer register resources may be provided in other examples. In some examples the graphics execution unit 2808 is partitioned into seven hardware threads that can independently perform computational operations, although the number of threads per execution unit can also vary according to examples. For example, in some examples up to 16 hardware threads are supported. In an example in which seven threads may access 4 Kbytes, the GRF 2824 can store a total of 28 Kbytes. Where 16 threads may access 4Kbytes, the GRF 2824 can store a total of 64Kbytes. Flexible addressing modes can permit registers to be addressed together to build effectively wider registers or to represent strided rectangular block data structures.

In some examples, memory operations, sampler operations, and other longer-latency system communications are dispatched via "send" instructions that are executed by the message passing send unit 2830. In some examples, branch instructions are dispatched to a dedicated branch unit 2832 to facilitate SIMD divergence and eventual convergence.

In some examples the graphics execution unit 2808 includes one or more SIMD floating point units (FPU(s)) 2834 to perform floating-point operations. In some examples, the FPU(s) 2834 also support integer computation. In some examples the FPU(s) 2834 can SIMD execute up to $M$ number of 32-bit floating-point (or integer) operations, or SIMD execute up to $2M$ 16-bit integer or 16-bit floating-point operations. In some examples, at least one of the FPU(s) provides extended math capability to support high-throughput transcendental math functions and double precision 64-bit floating-point. In some examples, a set of 8-bit integer SIMD ALUs 2835 are also present, and may be specifically optimized to perform operations associated with machine learning computations.

In some examples, arrays of multiple instances of the graphics execution unit 2808 can be instantiated in a graphics sub-core grouping (e.g., a sub-slice). For scalability, product architects can choose the exact number of execution units per sub-core grouping. In some examples the execution unit 2808 can execute instructions across a plurality of execution channels. In a further example, each thread executed on the graphics execution unit 2808 is executed on a different channel.

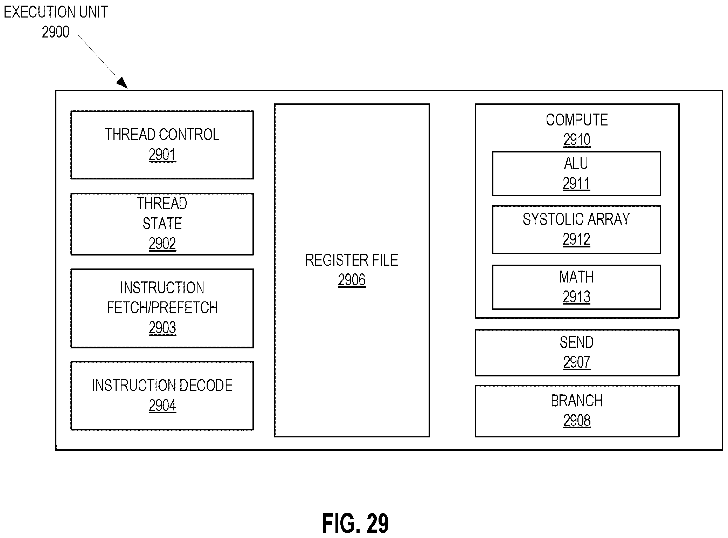

Figure 29 illustrates an additional execution unit 2900, according to an example. In some examples, the execution unit 2900 includes a thread control unit 2901, a thread state unit 2902, an instruction fetch/prefetch unit 2903, and an instruction decode unit 2904. The execution unit 2900 additionally includes a register file 2906 that stores registers that can be assigned to hardware threads within the execution unit. The execution unit 2900 additionally includes a send unit 2907 and a branch unit 2908. In some examples, the send unit 2907 and branch unit 2908 can operate similarly as the send unit 2830 and a branch unit 2832 of the graphics execution unit 2808 of Figure 28B.

The execution unit 2900 also includes a compute unit 2910 that includes multiple different types of functional units. In some examples the compute unit 2910 includes an ALU unit 2911 that includes an array of arithmetic logic units. The ALU unit 2911 can be configured to perform 64-bit, 32-bit, and 16-bit integer and floating point operations. Integer and floating point operations may be performed simultaneously. The compute unit 2910 can also include a systolic array 2912, and a math unit 2913. The systolic array 2912 includes a $W$ wide and D deep network of data processing units that can be used to perform vector or other data-parallel operations in a systolic manner. In some examples the systolic array 2912 can be configured to perform matrix operations, such as matrix dot product operations. In some examples the systolic array 2912 support 16-bit floating point operations, as well as 8-bit and 4-bit integer operations. In some examples the systolic array 2912 can be configured to accelerate machine learning operations. In such examples, the systolic array 2912 can be configured with support for the bfloat 16-bit floating point format. In some examples, a math unit 2913 can be included to perform a specific subset of mathematical operations in an efficient and lower-power manner than then ALU unit 2911. The math unit 2913 can include a variant of math logic that may be found in shared function logic of a graphics processing engine provided by other examples. In some examples the math unit 2913 can be configured to perform 32-bit and 64-bit floating point operations.

The thread control unit 2901 includes logic to control the execution of threads within the execution unit. The thread control unit 2901 can include thread arbitration logic to start, stop, and preempt execution of threads within the execution unit 2900. The thread state unit 2902 can be used to store thread state for threads assigned to execute on the execution unit 2900. Storing the thread state within the execution unit 2900 enables the rapid pre-emption of threads when those threads become blocked or idle. The instruction fetch/prefetch unit 2903 can fetch instructions from an instruction cache of higher level execution logic (e.g., instruction cache 2806 as in Figure 28A). The instruction fetch/prefetch unit 2903 can also issue prefetch requests for instructions to be loaded into the instruction cache based on an analysis of currently executing threads. The instruction decode unit 2904 can be used to decode instructions to be executed by the compute units. In some examples, the instruction decode unit 2904 can be used as a secondary decoder to decode complex instructions into constituent micro-operations.

The execution unit 2900 additionally includes a register file 2906 that can be used by hardware threads executing on the execution unit 2900. Registers in the register file 2906 can be divided across the logic used to execute multiple simultaneous threads within the compute unit 2910 of the execution unit 2900. The number of logical threads that may be executed by the graphics execution unit 2900 is not limited to the number of hardware threads, and multiple logical threads can be assigned to each hardware thread. The size of the register file 2906 can vary across examples based on the number of supported hardware threads. In some examples, register renaming may be used to dynamically allocate registers to hardware threads.

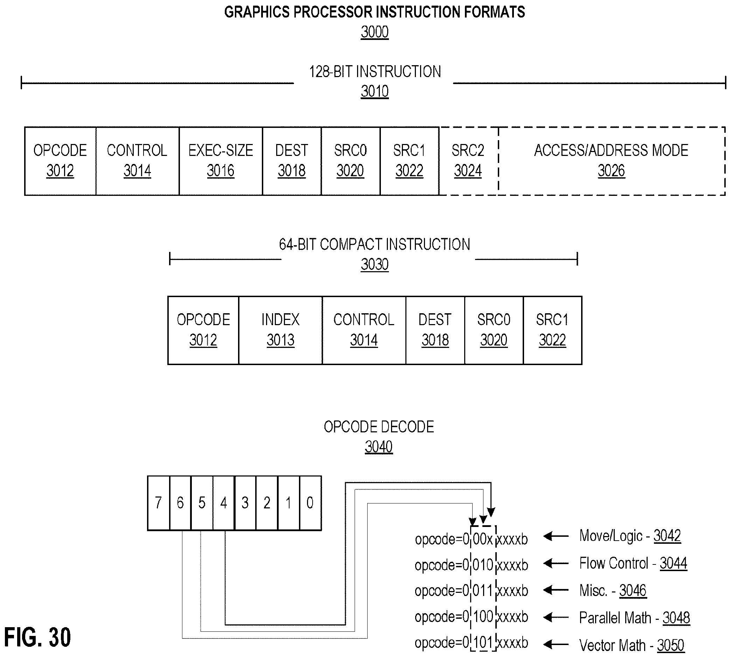

Figure 30 is a block diagram illustrating a graphics processor instruction formats 3000 according to some examples. In one or more example, the graphics processor execution units support an instruction set having instructions in multiple formats. The solid lined boxes illustrate the components that are generally included in an execution unit instruction, while the dashed lines include components that are optional or that are only included in a sub-set of the instructions. In some examples, instruction format 3000 described and illustrated are macro-instructions, in that they are instructions supplied to the execution unit, as opposed to micro-operations resulting from instruction decode once the instruction is processed.

In some examples, the graphics processor execution units natively support instructions in a 128-bit instruction format 3010. A 64-bit compacted instruction format 3030 is available for some instructions based on the selected instruction, instruction options, and number of operands. The native 128-bit instruction format 3010 provides access to all instruction options, while some options and operations are restricted in the 64-bit format 3030. The native instructions available in the 64-bit format 3030 vary by example. In some examples, the instruction is compacted in part using a set of index values in an index field 3013. The execution unit hardware references a set of compaction tables based on the index values and uses the compaction table outputs to reconstruct a native instruction in the 128-bit instruction format 3010. Other sizes and formats of instruction can be used.

For each format, instruction opcode 3012 defines the operation that the execution unit is to perform. The execution units execute each instruction in parallel across the multiple data elements of each operand. For example, in response to an add instruction the execution unit performs a simultaneous add operation across each color channel representing a texture element or picture element. By default, the execution unit performs each instruction across all data channels of the operands. In some examples, instruction control field 3014 enables control over certain execution options, such as channels selection (e.g., predication) and data channel order (e.g., swizzle). For instructions in the 128-bit instruction format 3010 an exec-size field 3016 limits the number of data channels that will be executed in parallel. In some examples, exec-size field 3016 is not available for use in the 64-bit compact instruction format 3030.

Some execution unit instructions have up to three operands including two source operands, src0 3020, src1 3022, and one destination 3018. In some examples, the execution units support dual destination instructions, where one of the destinations is implied. Data manipulation instructions can have a third source operand (e.g., SRC2 3024), where the instruction opcode 3012 determines the number of source operands. An instruction's last source operand can be an immediate (e.g., hard-coded) value passed with the instruction.

In some examples, the 128-bit instruction format 3010 includes an access/address mode field 3026 specifying, for example, whether direct register addressing mode or indirect register addressing mode is used. When direct register addressing mode is used, the register address of one or more operands is directly provided by bits in the instruction.

In some examples, the 128-bit instruction format 3010 includes an access/address mode field 3026, which specifies an address mode and/or an access mode for the instruction. In some examples the access mode is used to define a data access alignment for the instruction. Some examples support access modes including a 16-byte aligned access mode and a 1-byte aligned access mode, where the byte alignment of the access mode determines the access alignment of the instruction operands. For example, when in a first mode, the instruction may use byte-aligned addressing for source and destination operands and when in a second mode, the instruction may use 16-byte-aligned addressing for all source and destination operands.

In some examples, the address mode portion of the access/address mode field 3026 determines whether the instruction is to use direct or indirect addressing. When direct register addressing mode is used bits in the instruction directly provide the register address of one or more operands. When indirect register addressing mode is used, the register address of one or more operands may be computed based on an address register value and an address immediate field in the instruction.

In some examples instructions are grouped based on opcode 3012 bit-fields to simplify Opcode decode 3040. For an 8-bit opcode, bits 4, 5, and 6 allow the execution unit to determine the type of opcode. The precise opcode grouping shown is merely an example. In some examples, a move and logic opcode group 3042 includes data movement and logic instructions (e.g., move (mov), compare (cmp)). In some examples, move and logic group 3042 shares the five most significant bits (MSB), where move (mov) instructions are in the form of 0000xxxxb and logic instructions are in the form of 0001xxxxb. A flow control instruction group 3044 (e.g., call, jump (jmp)) includes instructions in the form of 0010xxxxb (e.g., 0x20). A miscellaneous instruction group 3046 includes a mix of instructions, including synchronization instructions (e.g., wait, send) in the form of 0011xxxxb (e.g., 0x30). A parallel math instruction group 3048 includes component-wise arithmetic instructions (e.g., add, multiply (mul)) in the form of 0100xxxxb (e.g., 0x40). The parallel math group 3048 performs the arithmetic operations in parallel across data channels. The vector math group 3050 includes arithmetic instructions (e.g., dp4) in the form of 0101xxxxb (e.g., 0x50). The vector math group performs arithmetic such as dot product calculations on vector operands. The illustrated opcode decode 3040, in some examples, can be used to determine which portion of an execution unit will be used to execute a decoded instruction. For example, some instructions may be designated as systolic instructions that will be performed by a systolic array. Other instructions, such as ray-tracing instructions (not shown) can be routed to a ray-tracing core or ray-tracing logic within a slice or partition of execution logic.

Graphics Pipeline

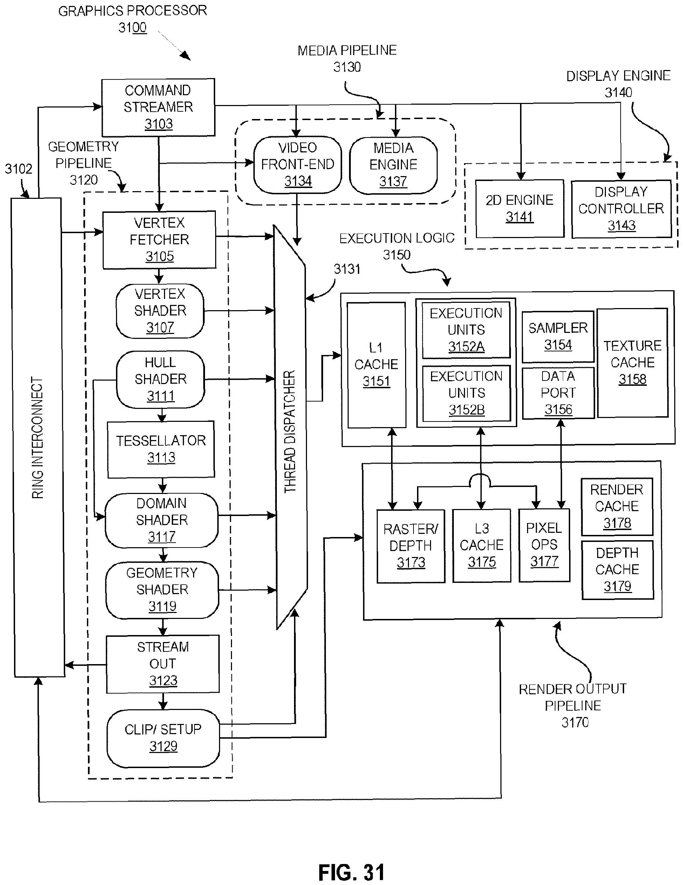

Figure 31 is a block diagram of another example of a graphics processor 3100. Elements of Figure 31 having the same reference numbers (or names) as the elements of any other figure herein can operate or function in any manner similar to that described elsewhere herein, but are not limited to such.

In some examples, graphics processor 3100 includes a geometry pipeline 3120, a media pipeline 3130, a display engine 3140, thread execution logic 3150, and a render output pipeline 3170. In some examples, graphics processor 3100 is a graphics processor within a multi-core processing system that includes one or more general-purpose processing cores. The graphics processor is controlled by register writes to one or more control registers (not shown) or via commands issued to graphics processor 3100 via a ring interconnect 3102. In some examples, ring interconnect 3102 couples graphics processor 3100 to other processing components, such as other graphics processors or general-purpose processors. Commands from ring interconnect 3102 are interpreted by a command streamer 3103, which supplies instructions to individual components of the geometry pipeline 3120 or the media pipeline 3130.

In some examples, command streamer 3103 directs the operation of a vertex fetcher 3105 that reads vertex data from memory and executes vertex-processing commands provided by command streamer 3103. In some examples, vertex fetcher 3105 provides vertex data to a vertex shader 3107, which performs coordinate space transformation and lighting operations to each vertex. In some examples, vertex fetcher 3105 and vertex shader 3107 execute vertex-processing instructions by dispatching execution threads to execution units 3152A-3152B via a thread dispatcher 3131.

In some examples, execution units 3152A-3152B are an array of vector processors having an instruction set for performing graphics and media operations. In some examples, execution units 3152A-3152B have an attached L1 cache 3151 that is specific for each array or shared between the arrays. The cache can be configured as a data cache, an instruction cache, or a single cache that is partitioned to contain data and instructions in different partitions.

In some examples, geometry pipeline 3120 includes tessellation components to perform hardware-accelerated tessellation of 3D objects. In some examples, a programmable hull shader 3111 configures the tessellation operations. A programmable domain shader 3117 provides back-end evaluation of tessellation output. A tessellator 3113 operates at the direction of hull shader 3111 and contains special purpose logic to generate a set of detailed geometric objects based on a coarse geometric model that is provided as input to geometry pipeline 3120. In some examples, if tessellation is not used, tessellation components (e.g., hull shader 3111, tessellator 3113, and domain shader 3117) can be bypassed.

In some examples, complete geometric objects can be processed by a geometry shader 3119 via one or more threads dispatched to execution units 3152A-3152B, or can proceed directly to the clipper 3129. In some examples, the geometry shader operates on entire geometric objects, rather than vertices or patches of vertices as in previous stages of the graphics pipeline. If the tessellation is disabled the geometry shader 3119 receives input from the vertex shader 3107. In some examples, geometry shader 3119 is programmable by a geometry shader program to perform geometry tessellation if the tessellation units are disabled.

Before rasterization, a clipper 3129 processes vertex data. The clipper 3129 may be a fixed function clipper or a programmable clipper having clipping and geometry shader functions. In some examples, a rasterizer and depth test component 3173 in the render output pipeline 3170 dispatches pixel shaders to convert the geometric objects into per pixel representations. In some examples, pixel shader logic is included in thread execution logic 3150. In some examples, an application can bypass the rasterizer and depth test component 3173 and access un-rasterized vertex data via a stream out unit 3123.

The graphics processor 3100 has an interconnect bus, interconnect fabric, or some other interconnect mechanism that allows data and message passing amongst the major components of the processor. In some examples, execution units 3152A-3152B and associated logic units (e.g., L1 cache 3151, sampler 3154, texture cache 3158, etc.) interconnect via a data port 3156 to perform memory access and communicate with render output pipeline components of the processor. In some examples, sampler 3154, caches 3151, 3158 and execution units 3152A-3152B each have separate memory access paths. In some examples the texture cache 3158 can also be configured as a sampler cache.

In some examples, render output pipeline 3170 contains a rasterizer and depth test component 3173 that converts vertex-based objects into an associated pixel-based representation. In some examples, the rasterizer logic includes a windower/masker unit to perform fixed function triangle and line rasterization. An associated render cache 3178 and depth cache 3179 are also available in some examples. A pixel operations component 3177 performs pixel-based operations on the data, though in some instances, pixel operations associated with 2D operations (e.g. bit block image transfers with blending) are performed by the 2D engine 3141, or substituted at display time by the display controller 3143 using overlay display planes. In some examples, a shared L3 cache 3175 is available to all graphics components, allowing the sharing of data without the use of main system memory.

In some examples, graphics processor media pipeline 3130 includes a media engine 3137 and a video front-end 3134. In some examples, video front-end 3134 receives pipeline commands from the command streamer 3103. In some examples, media pipeline 3130 includes a separate command streamer. In some examples, video front-end 3134 processes media commands before sending the command to the media engine 3137. In some examples, media engine 3137 includes thread spawning functionality to spawn threads for dispatch to thread execution logic 3150 via thread dispatcher 3131.

In some examples, graphics processor 3100 includes a display engine 3140. In some examples, display engine 3140 is external to processor 3100 and couples with the graphics processor via the ring interconnect 3102, or some other interconnect bus or fabric. In some examples, display engine 3140 includes a 2D engine 3141 and a display controller 3143. In some examples, display engine 3140 contains special purpose logic capable of operating independently of the 3D pipeline. In some examples, display controller 3143 couples with a display device (not shown), which may be a system integrated display device, as in a laptop computer, or an external display device attached via a display device connector.

In some examples, the geometry pipeline 3120 and media pipeline 3130 are configurable to perform operations based on multiple graphics and media programming interfaces and are not specific to any one application programming interface (API). In some examples, driver software for the graphics processor translates API calls that are specific to a particular graphics or media library into commands that can be processed by the graphics processor. In some examples, support is provided for the Open Graphics Library (OpenGL), Open Computing Language (OpenCL), and/or Vulkan graphics and compute API, all from the Khronos Group. In some examples, support may also be provided for the Direct3D library from the Microsoft Corporation. In some examples, a combination of these libraries may be supported. Support may also be provided for the Open Source Computer Vision Library (OpenCV). A future API with a compatible 3D pipeline would also be supported if a mapping can be made from the pipeline of the future API to the pipeline of the graphics processor.

Graphics Pipeline Programming

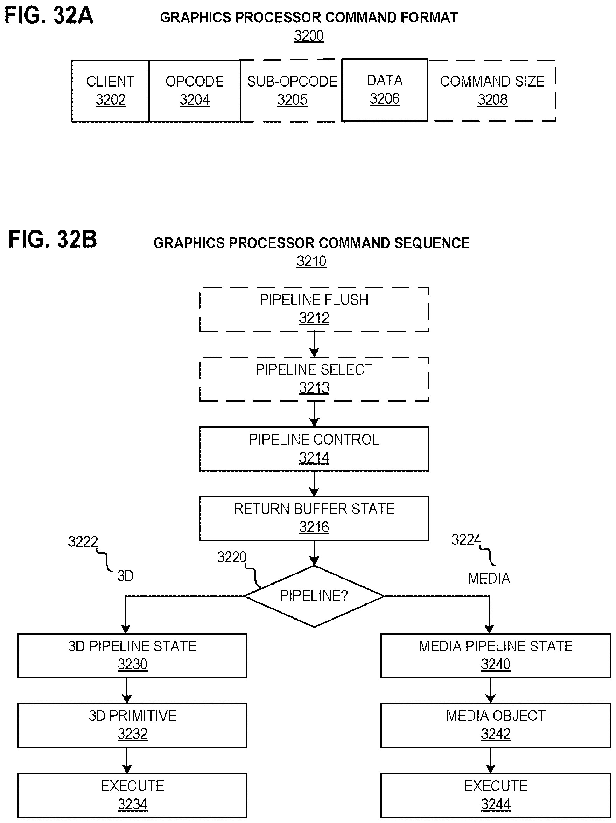

Figure 32A is a block diagram illustrating a graphics processor command format 3200 according to some examples. Figure 32B is a block diagram illustrating a graphics processor command sequence 3210 according to an example. The solid lined boxes in Figure 32A illustrate the components that are generally included in a graphics command while the dashed lines include components that are optional or that are only included in a sub-set of the graphics commands. The exemplary graphics processor command format 3200 of Figure 32A includes data fields to identify a client 3202, a command operation code (opcode) 3204, and data 3206 for the command. A sub-opcode 3205 and a command size 3208 are also included in some commands.

In some examples, client 3202 specifies the client unit of the graphics device that processes the command data. In some examples, a graphics processor command parser examines the client field of each command to condition the further processing of the command and route the command data to the appropriate client unit. In some examples, the graphics processor client units include a memory interface unit, a render unit, a 2D unit, a 3D unit, and a media unit. Each client unit has a corresponding processing pipeline that processes the commands. Once the command is received by the client unit, the client unit reads the opcode 3204 and, if present, sub-opcode 3205 to determine the operation to perform. The client unit performs the command using information in data field 3206. For some commands an explicit command size 3208 is expected to specify the size of the command. In some examples, the command parser automatically determines the size of at least some of the commands based on the command opcode. In some examples commands are aligned via multiples of a double word. Other command formats can be used.

The flow diagram in Figure 32B illustrates an exemplary graphics processor command sequence 3210. In some examples, software or firmware of a data processing system that features an example of a graphics processor uses a version of the command sequence shown to set up, execute, and terminate a set of graphics operations. A sample command sequence is shown and described for purposes of example only as examples are not limited to these specific commands or to this command sequence. Moreover, the commands may be issued as batch of commands in a command sequence, such that the graphics processor will process the sequence of commands in at least partially concurrence.

In some examples, the graphics processor command sequence 3210 may begin with a pipeline flush command 3212 to cause any active graphics pipeline to complete the currently pending commands for the pipeline. In some examples, the 3D pipeline 3222 and the media pipeline 3224 do not operate concurrently. The pipeline flush is performed to cause the active graphics pipeline to complete any pending commands. In response to a pipeline flush, the command parser for the graphics processor will pause command processing until the active drawing engines complete pending operations and the relevant read caches are invalidated. Optionally, any data in the render cache that is marked 'dirty' can be flushed to memory. In some examples, pipeline flush command 3212 can be used for pipeline synchronization or before placing the graphics processor into a low power state.

In some examples, a pipeline select command 3213 is used when a command sequence requires the graphics processor to explicitly switch between pipelines. In some examples, a pipeline select command 3213 is required only once within an execution context before issuing pipeline commands unless the context is to issue commands for both pipelines. In some examples, a pipeline flush command 3212 is required immediately before a pipeline switch via the pipeline select command 3213.

In some examples, a pipeline control command 3214 configures a graphics pipeline for operation and is used to program the 3D pipeline 3222 and the media pipeline 3224. In some examples, pipeline control command 3214 configures the pipeline state for the active pipeline. In some examples, the pipeline control command 3214 is used for pipeline synchronization and to clear data from one or more cache memories within the active pipeline before processing a batch of commands.

In some examples, return buffer state commands 3216 are used to configure a set of return buffers for the respective pipelines to write data. Some pipeline operations require the allocation, selection, or configuration of one or more return buffers into which the operations write intermediate data during processing. In some examples, the graphics processor also uses one or more return buffers to store output data and to perform cross thread communication. In some examples, the return buffer state 3216 includes selecting the size and number of return buffers to use for a set of pipeline operations.

The remaining commands in the command sequence differ based on the active pipeline for operations. Based on a pipeline determination 3220, the command sequence is tailored to the 3D pipeline 3222 beginning with the 3D pipeline state 3230 or the media pipeline 3224 beginning at the media pipeline state 3240.

The commands to configure the 3D pipeline state 3230 include 3D state setting commands for vertex buffer state, vertex element state, constant color state, depth buffer state, and other state variables that are to be configured before 3D primitive commands are processed. The values of these commands are determined at least in part based on the particular 3D API in use. In some examples, 3D pipeline state 3230 commands are also able to selectively disable or bypass certain pipeline elements if those elements will not be used.

In some examples, 3D primitive 3232 command is used to submit 3D primitives to be processed by the 3D pipeline. Commands and associated parameters that are passed to the graphics processor via the 3D primitive 3232 command are forwarded to the vertex fetch function in the graphics pipeline. The vertex fetch function uses the 3D primitive 3232 command data to generate vertex data structures. The vertex data structures are stored in one or more return buffers. In some examples, 3D primitive 3232 command is used to perform vertex operations on 3D primitives via vertex shaders.

To process vertex shaders, 3D pipeline 3222 dispatches shader execution threads to graphics processor execution units.

In some examples, 3D pipeline 3222 is triggered via an execute 3234 command or event. In some examples, a register write triggers command execution. In some examples execution is triggered via a 'go' or 'kick' command in the command sequence. In some examples, command execution is triggered using a pipeline synchronization command to flush the command sequence through the graphics pipeline. The 3D pipeline will perform geometry processing for the 3D primitives. Once operations are complete, the resulting geometric objects are rasterized and the pixel engine colors the resulting pixels. Additional commands to control pixel shading and pixel back end operations may also be included for those operations.

In some examples, the graphics processor command sequence 3210 follows the media pipeline 3224 path when performing media operations. In general, the specific use and manner of programming for the media pipeline 3224 depends on the media or compute operations to be performed. Specific media decode operations may be offloaded to the media pipeline during media decode. In some examples, the media pipeline can also be bypassed and media decode can be performed in whole or in part using resources provided by one or more general-purpose processing cores. In some examples, the media pipeline also includes elements for general-purpose graphics processor unit (GPGPU) operations, where the graphics processor is used to perform SIMD vector operations using computational shader programs that are not explicitly related to the rendering of graphics primitives.

In some examples, media pipeline 3224 is configured in a similar manner as the 3D pipeline 3222. A set of commands to configure the media pipeline state 3240 are dispatched or placed into a command queue before the media object commands 3242. In some examples, commands for the media pipeline state 3240 include data to configure the media pipeline elements that will be used to process the media objects. This includes data to configure the video decode and video encode logic within the media pipeline, such as encode or decode format. In some examples, commands for the media pipeline state 3240 also support the use of one or more pointers to "indirect" state elements that contain a batch of state settings.

In some examples, media object commands 3242 supply pointers to media objects for processing by the media pipeline. The media objects include memory buffers containing video data to be processed. In some examples, all media pipeline states must be valid before issuing a media object command 3242. Once the pipeline state is configured and media object commands 3242 are queued, the media pipeline 3224 is triggered via an execute command 3244 or an equivalent execute event (e.g., register write). Output from media pipeline 3224 may then be post processed by operations provided by the 3D pipeline 3222 or the media pipeline 3224. In some examples, GPGPU operations are configured and executed in a similar manner as media operations.

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors and/or system features described herein. Such examples may also be referred to as program products.

Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

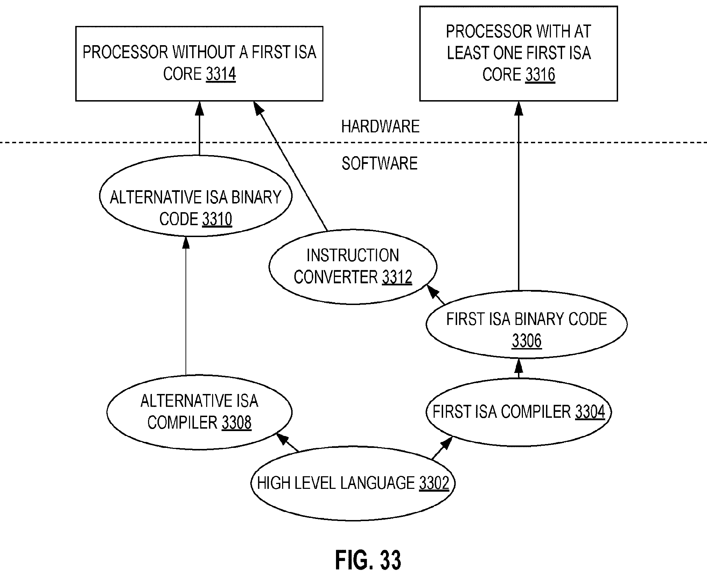

FIG. 33 is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. FIG. 33 shows a program in a high-level language 3302 may be compiled using a first ISA compiler 3304 to generate first ISA binary code 3306 that may be natively executed by a processor with at least one first ISA core 3316. The processor with at least one first ISA core 3316 represents any processor that can perform substantially the same functions as an Intel® processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 3304 represents a compiler that is operable to generate first ISA binary code 3306 (e.g., object code) that can, with or without additional linkage processing, be executed on the processor with at least one first ISA core 3316. Similarly, FIG. 33 shows the program in the high-level language 3302 may be compiled using an alternative ISA compiler 3308 to generate alternative ISA binary code 3310 that may be natively executed by a processor without a first ISA core 3314. The instruction converter 3312 is used to convert the first ISA binary code 3306 into code that may be natively executed by the processor without a first ISA core 3314. This converted code is not necessarily to be the same as the alternative ISA binary code 3310; however, the converted code will accomplish the general operation and be made up of instructions from the alternative ISA. Thus, the instruction converter 3312 represents software, firmware, hardware, or a combination thereof that, through emulation, simulation or any other process, allows a processor or other electronic device that does not have a first ISA processor or core to execute the first ISA binary code 3306.

IP Core Implementations

One or more aspects of at least some examples may be implemented by representative code stored on a machine-readable medium which represents and/or defines logic within an integrated circuit such as a processor. For example, the machine-readable medium may include instructions which represent various logic within the processor. When read by a machine, the instructions may cause the machine to fabricate the logic to perform the techniques described herein. Such representations, known as "IP cores," are reusable units of logic for an integrated circuit that may be stored on a tangible, machine-readable medium as a hardware model that describes the structure of the integrated circuit. The hardware model may be supplied to various customers or manufacturing facilities, which load the hardware model on fabrication machines that manufacture the integrated circuit. The integrated circuit may be fabricated such that the circuit performs operations described in association with any of the examples described herein.

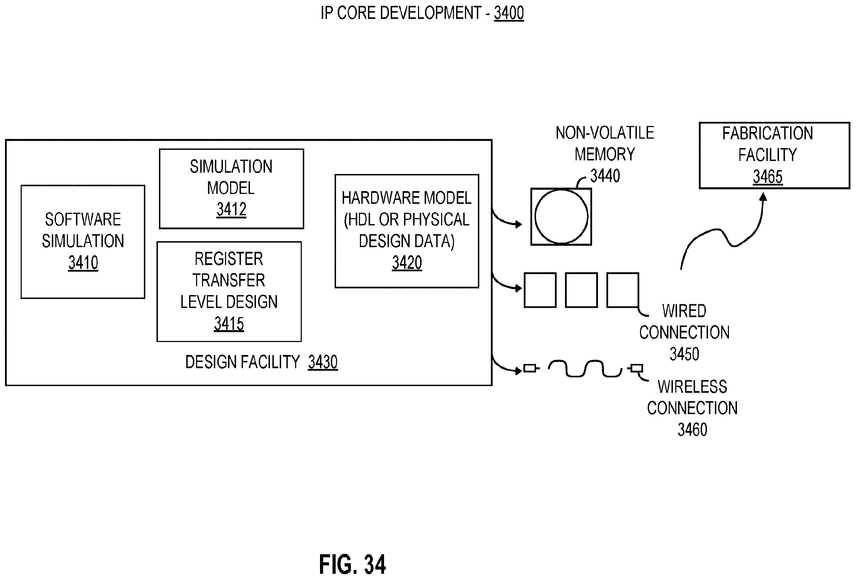

FIG. 34 is a block diagram illustrating an IP core development system 3400 that may be used to manufacture an integrated circuit to perform operations according to some examples. The IP core development system 3400 may be used to generate modular, re-usable designs that can be incorporated into a larger design or used to construct an entire integrated circuit (e.g., an SOC integrated circuit). A design facility 3430 can generate a software simulation 3410 of an IP core design in a high-level programming language (e.g., C/C++). The software simulation 3410 can be used to design, test, and verify the behavior of the IP core using a simulation model 3412. The simulation model 3412 may include functional, behavioral, and/or timing simulations. A register transfer level (RTL) design 3415 can then be created or synthesized from the simulation model 3412. The RTL design 3415 is an abstraction of the behavior of the integrated circuit that models the flow of digital signals between hardware registers, including the associated logic performed using the modeled digital signals. In addition to an RTL design 3415, lower-level designs at the logic level or transistor level may also be created, designed, or synthesized. Thus, the particular details of the initial design and simulation may vary.

The RTL design 3415 or equivalent may be further synthesized by the design facility into a hardware model 3420, which may be in a hardware description language (HDL), or some other representation of physical design data. The HDL may be further simulated or tested to verify the IP core design. The IP core design can be stored for delivery to a 3rd party fabrication facility 3465 using non-volatile memory 3440 (e.g., hard disk, flash memory, or any non-volatile storage medium). Alternatively, the IP core design may be transmitted (e.g., via the Internet) over a wired connection 3450 or wireless connection 3460. The fabrication facility 3465 may then fabricate an integrated circuit that is based at least in part on the IP core design. The fabricated integrated circuit can be configured to perform operations in accordance with at least some examples described herein.

Examples include, but are not limited to:

1. An apparatus comprising:

decoder circuitry to decode an instance of a single instruction, the instance of the single instruction to include one or more fields for source addressing information wherein the addressed source is to store an input 1600-bit state, one or more fields for destination addressing information that is to store an output 1600-bit state, a field for an identifier of a destination operand, and a field for an opcode, the opcode to indicate execution circuitry is to do perform an atomic Keccak permutation; and execution circuitry at least comprising a Keccak round datapath to execute the decoded instance of the single instruction according to the opcode to perform the atomic Keccak permutation on the input 1600-bit state to generate an output 1600-bit state, wherein the input 1600-bit state is to be stored in a plurality of registers prior to execution of the decoded instance of the single instruction.

2. The apparatus of claim 1, wherein the plurality of registers are general purpose registers.

3. The apparatus of claim 1, wherein the plurality of registers are vector registers.

4. The apparatus of any of claims 1-3, wherein the source addressing information is to identify the plurality of registers.

5. The apparatus of claim 1, wherein the source addressing information is to identify a memory location and the plurality of registers are to be loaded with the input 1600-bit state stored at the memory location.

6. The apparatus of any of claims 1-5, wherein the plurality of registers are to be provided in parallel to the Keccak round datapath.

7. The apparatus of any of claims 1-5, wherein the plurality of registers are to be provided serially to the Keccak round datapath.

8. The apparatus of any of claims 1-7, wherein the Keccak round datapath comprises $\theta$-step circuitry, p-step circuitry, $\pi$-step circuitry, $\chi$-step circuitry, and $\iota$ -step circuitry.

9. The apparatus of any of claims 1-8, further comprising local round counter and control circuitry to at least provide round constants for the Keccak round datapath.

10. The apparatus of any of claims 1-9, further comprising other execution datapaths that share the plurality of registers.

11. The apparatus of any of claims 1-10, wherein the Keccak permutation is to perform sequential rounds without storage to registers.

12. A system comprising:

memory to store at least an instance of a single instruction;
decoder circuitry to decode the instance of the single instruction, the instance of the single instruction to include one or more fields for source addressing information wherein the addressed source is to store an input 1600-bit state, one or more fields for destination addressing information that is to store an output 1600-bit state, a field for an identifier of a destination operand, and a field for an opcode, the opcode to indicate execution circuitry is to do perform an atomic Keccak permutation; and execution circuitry to execute the decoded instance of the single instruction according to the opcode using circuitry that at least comprises a Keccak round datapath to perform the atomic Keccak permutation on the input 1600-bit state to generate an output 1600-bit state, wherein the input 1600-bit state is to be stored in a plurality of registers prior to execution of the decoded instance of the single instruction.

13. The system of claim 12, wherein the plurality of registers are general purpose registers.

14. The system of claim 12, wherein the plurality of registers are vector registers.

15. The system of any of claims 12-14, wherein the source addressing information is to identify the plurality of registers.

16. The system of claim 12, wherein the source addressing information is to identify a memory location and the plurality of registers are to be loaded with the input 1600-bit state stored at the memory location.

17. The system of any of claims 12-16, wherein the plurality of registers are to be provided in parallel to the Keccak round datapath.

18. The system of any of claims 12-17, wherein the plurality of registers are to be provided serially to the Keccak round datapath.

19. The system of any of claims 12-18, wherein the Keccak round datapath comprises $\theta$-step circuitry, p-step circuitry, $\pi$-step circuitry, $\chi$-step circuitry, and $\iota$ -step circuitry.

20. A method comprising:

decoding an instance of a single instruction, the instance of the single instruction to include one or more fields for source addressing information wherein the addressed source is to store an input 1600-bit state, one or more fields for destination addressing information that is to store an output 1600-bit state, a field for an identifier of a destination operand, and a field for an opcode, the opcode to indicate execution circuitry is to do perform an atomic Keccak permutation; and

executing the decoded instance of the single instruction using a Keccak round datapath to execute the decoded instance of the single instruction according to the opcode to perform the atomic Keccak permutation on the input 1600-bit state to generate an output 1600-bit state, wherein the input 1600-bit state is to be stored in a plurality of registers prior to execution of the decoded instance of the single instruction.

References to "some examples," "an example," etc., indicate that the example described may include a particular feature, structure, or characteristic, but every example may not necessarily include the particular feature, structure, or characteristic. Moreover, such phrases are not necessarily referring to the same example. Further, when a particular feature, structure, or characteristic is described in connection with an example, it is submitted that it is within the knowledge of one skilled in the art to affect such feature, structure, or characteristic in connection with other examples whether or not explicitly described.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e. A and B, A and C, B and C, and A, B and C).

The specification and drawings are, accordingly, to be regarded in an illustrative rather than a restrictive sense. It will, however, be evident that various modifications and changes may be made thereunto without departing from the broader spirit and scope of the disclosure as set forth in the claims.

**Claims**

1. An apparatus comprising:

decoder means to decode an instance of a single instruction, the instance of the single instruction to include one or more fields for source addressing information wherein the addressed source is to store an input 1600-bit state, one or more fields for destination addressing information that is to store an output 1600-bit state, a field for an identifier of a destination operand, and a field for an opcode, the opcode to indicate execution circuitry is to do perform an atomic Keccak permutation; and execution means at least comprising a Keccak round datapath to execute the decoded instance of the single instruction according to the opcode to perform the atomic Keccak permutation on the input 1600-bit state to generate an output 1600-bit state, wherein the input 1600-bit state is to be stored in a plurality of registers prior to execution of the decoded instance of the single instruction.

2. The apparatus of claim 1, wherein the plurality of registers are general purpose registers.

3. The apparatus of claim 1, wherein the plurality of registers are vector registers.

4. The apparatus of any of claims 1-3, wherein the source addressing information is to identify the plurality of registers.

5. The apparatus of claim 1, wherein the source addressing information is to identify a memory location and the plurality of registers are to be loaded with the input 1600-bit state stored at the memory location.

6. The apparatus of any of claims 1-5, wherein the plurality of registers are to be provided in parallel to the Keccak round datapath.

7. The apparatus of any of claims 1-5, wherein the plurality of registers are to be provided serially to the Keccak round datapath.

8. The apparatus of any of claims 1-7, wherein the Keccak round datapath comprises $\theta$-step circuitry, p-step circuitry, $\pi$-step circuitry, $\chi$-step circuitry, and $\iota$ -step circuitry.

9. The apparatus of any of claims 1-8, further comprising local round counter and control circuitry to at least provide round constants for the Keccak round datapath.

10. The apparatus of any of claims 1-9, further comprising other execution datapaths that share the plurality of registers.

11. The apparatus of any of claims 1-10, wherein the Keccak permutation is to perform sequential rounds without storage to registers.

12. A method comprising:

decoding an instance of a single instruction, the instance of the single instruction to include one or more fields for source addressing information wherein the addressed source is to store an input 1600-bit state, one or more fields for destination addressing information that is to store an output 1600-bit state, a field for an identifier of a destination operand, and a field for an opcode, the opcode to indicate execution circuitry is to do perform an atomic Keccak permutation; and
executing the decoded instance of the single instruction using a Keccak round datapath to execute the decoded instance of the single instruction according to the opcode to perform the atomic Keccak permutation on the input 1600-bit state to generate an output 1600-bit state, wherein the input 1600-bit state is to be stored in a plurality of registers prior to execution of the decoded instance of the single instruction.

13. The method of claim 12, wherein the plurality of registers are general purpose registers.

14. The method of any of claims 12-13, wherein the source addressing information is to identify the plurality of registers.

15. The method of any of claims 12-13, wherein the source addressing information is to identify a memory location and the plurality of registers are to be loaded with the input 1600-bit state stored at the memory location.

ROUND = 0  101

Θ (THETA) STEP  103

ρ (RHO) STEP  105

π (PI) STEP  107

χ (CHI) STEP  109

ι (IOTA) STEP  111

ROUND == 12 + 2L  113 → ROUND = ROUND + 1

OUTPUT AN OUTPUT STATE  115

# FIG. 1

| 0 | 1 | 2 | 3 | 3 |
|---|---|---|---|---|
| 5 | 6 | 7 | 8 | 9 |
| 10 | 11 | 12 | 13 | 14 |
| 15 | 16 | 17 | 18 | 19 |
| 20 | 21 | 22 | 23 | 24 |

FIG. 2

**FIG. 3**

FIG. 4

FIG. 5

FIG. 6

STORAGE 703

KECCAK INSTRUCTION(S) 701

OTHER INSTRUCTION(S) 702

DECODER CIRCUITRY 705

DECODED INST.

REG. RENAME/ REG. ALLOC./ SCHED CIRCUITRY 707

EXECUTION CIRCUITRY 709

WRITE BACK CIRCUITRY 711

REGISTER FILE/ MEMORY 708

FIG. 7

MEMORY 811

REGISTERS 807

CONTROL LOGIC 813

SHA3 801

KECCAK1600 ROUND DATAPATH 803

ROUND CONSTANTS

LOCAL ROUND COUNTER AND CONTROL 805

OTHER SHA3 CIRCUITRY 815

OTHER EXECUTION DATAPATHS 809

1600

START

DONE

FIG. 8

1600-BIT STATE FROM REGISTERS

1600-BIT STATE TO REGISTERS

KECCAK1600 ROUND DATAPATH
803

. . .

KECCAK1600 ROUND DATAPATH
803

FIG. 9

**KECCAK1600 ROUND DATAPATH 803**

INPUT STATE → θ 1005 → ρ 1007 → π 1009 → χ 1011 → ι 1013 → OUTPUT STATE

**FIG. 10**

FETCH AN INSTANCE OF A SINGLE INSTRUCTION HAVING FIELDS FOR AN OPCODE, FIELDS FOR AT LEAST ONE LOCATION FOR A SOURCE FOR AN INPUT 1600-BIT STATE, AND FIELDS FOR AT LEAST ONE LOCATION FOR A DESTINATION FOR AN OUTPUT1600-BIT STATE, WHEREIN THE OPCODE IS TO INDICATE A KECCAK PERMUTATION IS TO BE PERFORMED 1101

DECODE THE INSTRUCTION 1103

RETRIEVE DATA ASSOCIATED WITH THE SOURCE OPERAND(S) AND SCHEDULE 1105

EXECUTE THE DECODED INSTRUCTION TO PERFORM THE KECCAK PERMUTATION ON THE INPUT 1600-BIT STATE TO GENERATE AN OUTPUT 1600-BIT STATE, WHEREIN THE INPUT 1600-BIT STATE IS STORED IN A PLURALITY OF REGISTERS AND THE PLURALITY OF REGISTERS ARE TO BE PROVIDED IN PARALLEL TO A KECCAK ROUND DATAPATH AND THE KECCAK PERMUTATION IS COMPUTED ATOMICALLY 1107

COMMIT A RESULT OF THE EXECUTED INSTRUCTION 1109

FIG. 11

FIG. 12

PROCESSOR OR
SOC 1300

SPECIAL PURPOSE LOGIC 1308

CORE 1302(A)

CACHE UNIT(S) 1304(A)

- - -

CORE 1302(N)

CACHE UNIT(S) 1304(N)

SHARED CACHE UNIT(S) 1306

INTERFACE NETWORK 1312

SYSTEM AGENT UNIT 1310

INTEGRATED MEMORY CONTROLLER UNIT(S) 1314

INTERFACE CONTROLLER UNIT(S) 1316

OTHER DEVICE(S) 1318

FIG. 13

EP 4 488 828 A1

**FIG. 14**

**FIG. 15A**

To/From
Memory Unit
1524

Frame buffer
Interface
1525

ROP
1526

CODEC
1527

L2 Cache
1521

Partition Unit
1520

To/From
Memory Crossbar
1516

## FIG. 15B

To
Memory Crossbar
1516 and/or
other Processing
Clusters

Processing Cluster 1514

MMU
1545

PreROP
1542

Data Crossbar
1540

To/From
Memory
Crossbar
1516

Graphics
Multiprocessor
1534

Texture
Unit
1536

L1 Cache
1548

Pipeline Manager
1532

To/From
Scheduler
1510

FIG. 15C

To
Data Crossbar
1540

To
Data Crossbar
1540

| Shared Memory 1570 | Cache Memory 1572 |

Memory and Cache Interconnect                    1568

| Load/Store Unit 1566 | GPGPU Cores 1562 | Tensor/RT Cores 1563 |

Register File                                    1558

| Address Mapping Unit 1556 | Instruction Unit 1554 |

Graphics
Multiprocessor
1534

Instruction Cache        1552

From
Pipeline Manager
1532

**FIG. 15D**

**Graphics Multiprocessor** 1625

**Interconnect Fabric** 1627

**Shared Memory** 1646

| Texture Unit(s) 1644A | Texture Unit(s) 1644B |
|---|---|

**Cache Memory** 1642

| Load/Store Unit 1640A | RT Core 1638A | Tensor Core 1637A | GPGPU Core 1636A | Load/Store Unit 1640B | RT Core 1638B | Tensor Core 1637B | GPGPU Core 1636B |
|---|---|---|---|---|---|---|---|

| Register File 1634A | Register File 1634B |
|---|---|

| Instruction Unit 1632A | Instruction Unit 1632B |
|---|---|

**Instruction Cache** 1630

**FIG. 16A**

Graphics Multiprocessor 1650

Interconnect Fabric 1652

Shared Memory 1653

| Texture Unit(s) 1660A | Texture Unit(s) 1660B |
|---|---|

Cache Memory 1658A

| Execution Resources 1656A | Execution Resources 1656B |
|---|---|

| Texture Unit(s) 1660C | Texture Unit(s) 1660D |
|---|---|

Cache Memory 1658B

| Execution Resources 1656C | Execution Resources 1656D |
|---|---|

Instruction Cache 1654

FIG. 16B

**FIG. 16C**

EP 4 488 828 A1

**FIG. 17**

EP 4 488 828 A1

FIG. 18A

EP 4 488 828 A1

FIG. 18B

PIPELINE 1900

| FETCH 1902 | LENGTH DECODING 1904 | DECODE 1906 | ALLOC. 1908 | RENAMING 1910 | SCHEDULE 1912 | REGISTER READ/ MEMORY READ 1914 | EXECUTE STEP 1916 | WRITE BACK/ MEMORY WRITE 1918 | EXCEPTION HANDLING 1922 | COMMIT 1924 |

**FIG. 19(A)**

FIG. 19(B)

EXECUTION  UNIT(S) CIRCUITRY
1962

ALU 2001

VECTOR/SIMD 2003

LOAD/STORE 2005

BRANCH/JUMP 2007

FPU 2009

FIG. 20

EP 4 488 828 A1

REGISTER ARCHITECTURE
2100

Segment Registers 2120

Model Specific Registers 2135

Writemask/predicate Registers 2115

Control Register(s) 2155

SCALAR FP REGISTER FILE 2145

Instruction Pointer Register(s) 2130

Vector/SIMD Registers 2110

Debug Registers 2150

General Purpose Registers 2125

Mem. Management Registers 2165

Flag Register(s) 2140

Machine Check Registers 2160

**FIG. 21**

| PREFIX(ES)<br>2201 | OPCODE<br>2203 | ADDRESSING<br>INFORMATION<br>2205 | DISPLACEMENT<br>VALUE<br>2207 | IMMEDIATE<br>VALUE<br>2209 |
|---|---|---|---|---|

**FIG. 22**

EP 4 488 828 A1

ADDRESSING INFORMATION
2205

MOD R/M BYTE 2302

| 7 | 6 5 | 3 2 | 0 |
|---|---|---|---|

| MOD 2342 | REG 2344 | R/M 2346 |
|---|---|---|

SIB BYTE 2304

| 7 | 6 5 | 3 2 | 0 |
|---|---|---|---|

| SCALE SS 2352 | INDEX xxx 2354 | BASE bbb 2356 |
|---|---|---|

MOD R/M

SIB

FIG. 23

EP 4 488 828 A1

## PREFIX 2201(A)

| FORMAT | 7 | 6 | 5 | 4 | 3 | 2 | 1 | 0 |
|--------|---|---|---|---|---|---|---|---|
|        | 0 | 1 | 0 | 0 | W | R | X | B |

**FIG. 24**

---

| PREFIX 2201(A) | OPCODE 2203 | MOD R/M 2302 | | |
|---|---|---|---|---|
| | | MOD 2342 | REG 2344 | R/M 2346 |
| | | !=11 | rrr | bbb |

**FIG. 25(A)**  Rrrr  Bbbb

| PREFIX 2201(A) | OPCODE 2203 | MOD R/M 2302 | | |
|---|---|---|---|---|
| | | MOD 2342 | REG 2344 | R/M 2346 |
| | | 11 | rrr | bbb |

**FIG. 25(B)**  Rrrr  Bbbb

---

| PREFIX 2201(A) | OPCODE 2203 | MOD R/M 2302 | | | SIB 2304 | | |
|---|---|---|---|---|---|---|---|
| | | MOD 2342 | REG 2344 | R/M 2346 | SCL 2352 | INDEX 2354 | BASE 2356 |
| | | !=11 | rrr | 100 | | xxx | bbb |

**FIG. 25(C)**  Rrrr  Xxxx  Bbbb

| PREFIX 2201(A) | OPCODE 2203 | MOD R/M 2302 | |
|---|---|---|---|
| | | REG 2344 | |
| | | bbb | |

**FIG. 25(D)**  Bbbb

EP 4 488 828 A1

SECOND PREFIX 2201(B)

| FORMAT 2601 | R | v | v | v | v | L | p | p |

BYTE 0 2603 — BYTE 1 2605

**FIG. 26(A)**

SECOND PREFIX 2201(B)

| FORMAT 2611 | R | X | B | m | m | m | m | m | W | v | v | v | v | L | p | p |

BYTE 0 2613 — BYTE 1 2615 — BYTE 2 2617

**FIG. 26(B)**

PREFIX 2201(C)

| | | 23 | 22 | 21 | 20 | 19 | 18 | 17 | 16 | 15 | 14 | 13 | 12 | 11 | 10 | 9 | 8 | 7 | 6 | 5 | 4 | 3 | 2 | 1 | 0 |
|---|---|---|---|---|---|---|---|---|---|---|---|---|---|---|---|---|---|---|---|---|---|---|---|---|---|
| FORMAT 2711 | | z | L' | L | b | V' | a | a | a | W | v | v | v | v | 1 | p | p | R | X | B | R' | 0 | 0 | m | m |

PAYLOAD BYTE 2
2715

PAYLOAD BYTE 1
2717

PAYLOAD BYTE 0
2719

FIG. 27

EP 4 488 828 A1

EXECUTION LOGIC
2800

**FIG. 28A**

GRAPHICS EXECUTION UNIT 2808

SEND 2830

BRANCH 2832

SIMD FPUs 2834

SIMD ALUs 2835

2837

ARF 2826

GRF 2824

2822

INSTRUCTION FETCH

THREAD ARBITER

FIG. 28B

EXECUTION UNIT 2900

THREAD CONTROL 2901

THREAD STATE 2902

INSTRUCTION FETCH/PREFETCH 2903

INSTRUCTION DECODE 2904

REGISTER FILE 2906

COMPUTE 2910

ALU 2911

SYSTOLIC ARRAY 2912

MATH 2913

SEND 2907

BRANCH 2908

FIG. 29

## GRAPHICS PROCESSOR INSTRUCTION FORMATS
### 3000

128-BIT INSTRUCTION
3010

| OPCODE 3012 | CONTROL 3014 | EXEC-SIZE 3016 | DEST 3018 | SRC0 3020 | SRC1 3022 | SRC2 3024 | ACCESS/ADDRESS MODE 3026 |
|---|---|---|---|---|---|---|---|

64-BIT COMPACT INSTRUCTION
3030

| OPCODE 3012 | INDEX 3013 | CONTROL 3014 | DEST 3018 | SRC0 3020 | SRC1 3022 |
|---|---|---|---|---|---|

OPCODE DECODE
3040

| 7 | 6 | 5 | 4 | 3 | 2 | 1 | 0 |
|---|---|---|---|---|---|---|---|

opcode=0,00x,xxxxb ← Move/Logic - 3042

opcode=0,010,xxxxb ← Flow Control - 3044

opcode=0,011,xxxxb ← Misc. - 3046

opcode=0,100,xxxxb ← Parallel Math - 3048

opcode=0,101,xxxxb ← Vector Math - 3050

**FIG. 30**

EP 4 488 828 A1

**FIG. 31**

## FIG. 32A

GRAPHICS PROCESSOR COMMAND FORMAT
3200

| CLIENT 3202 | OPCODE 3204 | SUB-OPCODE 3205 | DATA 3206 | COMMAND SIZE 3208 |
|---|---|---|---|---|

## FIG. 32B

GRAPHICS PROCESSOR COMMAND SEQUENCE
3210

PIPELINE FLUSH
3212

PIPELINE SELECT
3213

PIPELINE CONTROL
3214

RETURN BUFFER STATE
3216

3222
3D

3220
PIPELINE?

3224
MEDIA

3D PIPELINE STATE
3230

3D PRIMITIVE
3232

EXECUTE
3234

MEDIA PIPELINE STATE
3240

MEDIA OBJECT
3242

EXECUTE
3244

FIG. 33

IP CORE DEVELOPMENT - 3400

NON-VOLATILE MEMORY
3440

FABRICATION FACILITY
3465

SOFTWARE SIMULATION
3410

SIMULATION MODEL
3412

REGISTER TRANSFER LEVEL DESIGN
3415

HARDWARE MODEL (HDL OR PHYSICAL DESIGN DATA)
3420

DESIGN FACILITY 3430

WIRED CONNECTION
3450

WIRELESS CONNECTION
3460

FIG. 34

EP 4 488 828 A1

**Europäisches Patentamt**
**European Patent Office**
**Office européen des brevets**

# EUROPEAN SEARCH REPORT

**Application Number**

EP 24 17 1281

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/275722 A1 (YAP KIRK S [US] ET AL) 17 October 2013 (2013-10-17) * the whole document * | 1-15 | INV. G06F9/30 |
| X | FRITZMANN TIM ET AL: "Masked Accelerators and Instruction Set Extensions for Post-Quantum Cryptography", IACR TRANSACTIONS ON CRYPTOGRAPHIC HARDWARE AND EMBEDDED SYSTEMS, [Online] 19 November 2021 (2021-11-19), pages 414-460, XP093145935, ISSN: 2569-2925, DOI: 10.46586/tches.v2022.i1.414-460 Retrieved from the Internet: URL:https://tches.iacr.org/index.php/TCHES/article/download/9303/8869> [retrieved on 2021-11-19] * the whole document * | 1-15 | |

**TECHNICAL FIELDS SEARCHED (IPC)**

G06F

The present search report has been drawn up for all claims

| Place of search | Date of completion of the search | Examiner |
|---|---|---|
| The Hague | 10 October 2024 | Moraiti, Marina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 1281

This annex lists the patent family members relating to the patent documents cited in the above-mentioned European search report.
The members are as contained in the European Patent Office EDP file on
The European Patent Office is in no way liable for these particulars which are merely given for the purpose of information.

10-10-2024

| Patent document cited in search report | Publication date | Patent family member(s) | | Publication date |
|---|---|---|---|---|
| US 2013275722 A1 | 17-10-2013 | CN | 103946796 A | 23-07-2014 |
| | | TW | 201337745 A | 16-09-2013 |
| | | TW | 201528134 A | 16-07-2015 |
| | | US | 2013275722 A1 | 17-10-2013 |
| | | US | 2018157489 A1 | 07-06-2018 |
| | | WO | 2013089682 A1 | 20-06-2013 |

EPO FORM P0459

For more details about this annex : see Official Journal of the European Patent Office, No. 12/82